(19) Europäisches Patentamt / European Patent Office / Office européen des brevets

(11) **EP 4 742 727 A1**

(12) **EUROPEAN PATENT APPLICATION**
published in accordance with Art. 153(4) EPC

(43) Date of publication:
**13.05.2026 Bulletin 2026/20**

(21) Application number: **24835929.1**

(22) Date of filing: **21.06.2024**

(51) International Patent Classification (IPC):
**H04W 16/14** (2009.01)  **H04W 72/0453** (2023.01)
**H04W 84/06** (2009.01)  **H04W 88/02** (2009.01)

(52) Cooperative Patent Classification (CPC):
**H04W 16/14; H04W 72/0453; H04W 84/06;
H04W 88/02**

(86) International application number:
**PCT/JP2024/022506**

(87) International publication number:
**WO 2025/009416 (09.01.2025 Gazette 2025/02)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **05.07.2023 JP 2023110916**

(71) Applicant: **Sony Group Corporation
Tokyo 108-0075 (JP)**

(72) Inventors:
• **KATAGIRI, Keita
  Tokyo 108-0075 (JP)**
• **FURUICHI, Sho
  Tokyo 108-0075 (JP)**

(74) Representative: **2SPL Patentanwälte PartG mbB
Landaubogen 3
81373 München (DE)**

(54) **COMMUNICATION CONTROL DEVICE, INFORMATION PROCESSING DEVICE,
COMMUNICATION CONTROL METHOD, AND INFORMATION PROCESSING METHOD**

(57)     A communication control apparatus includes: an acquisition unit that acquires information related to movement of a movable communication apparatus; a calculation unit that performs calculation related to a Doppler shift of a radio wave of at least one of a plurality of communication apparatuses including the movable communication apparatus, based on the information related to movement; and a discerning unit that performs discerning related to use of radio waves of one or more communication apparatuses among the plurality of communication apparatuses, based on a result of the calculation.

FIG.22

**Description**

Field

The present disclosure relates to a communication control apparatus, an information processing apparatus, a communication control method, and an information processing method.

Background

There is an emerging problem of exhaustion of radio resources available for allocation to wireless systems (radio apparatuses). Therefore, in recent years, dynamic spectrum sharing referred to as "Dynamic Spectrum Access (DSA)" that utilizes a temporally or spatially unused space (White Space) among frequency bands allocated to a specific wireless system has rapidly attracted attention. In recent years, studies related to dynamic spectrum sharing for Unmanned Aircraft Systems (UASs) have been actively conducted.

Citation List

Non Patent Literature

Non Patent Literature 1: FCC, RM-11798, Wireless Telecommunications Bureau Seeks To Refresh The Record On Unmanned Aircraft Systems Use Of The 5GHz Band

Summary

Technical Problem

Generally, the dynamic spectrum sharing uses a communication control apparatus arranged for dynamically managing radio waves regarding dynamic spectrum sharing. The communication control apparatus gives permission to use the frequency band regarding dynamic spectrum sharing to the communication apparatus under management. The communication apparatus performs communication based on the permission from the communication control apparatus.
However, there is a possibility that effective use of radio resources cannot be achieved with the current method of dynamic spectrum sharing. For example, in a case where a high-speed mobile body such as an unmanned aircraft is a communication apparatus using radio waves, there is a possibility that a relative speed difference is increased between the high-speed mobile body and another communication apparatus. The increase in the relative speed difference leads to a possibility of an increase of interference with an adjacent channel due to the Doppler shift of the frequency. The increased interference disables communication of the communication apparatus using the adjacent channel. This leads to a possibility of a failure in achievement of effective use of radio resources.
In view of this, the present disclosure proposes a communication control apparatus, an information processing apparatus, a communication control method, and an information processing method capable of achieving an effective use of radio resources.
Note that the above problem or target is merely one of a plurality of problems or targets that can be solved or achieved by a plurality of embodiments disclosed in the present specification.

Solution to Problem

In order to solve the above problem, a communication control apparatus according to one embodiment of the present disclosure includes: an acquisition unit that acquires information related to movement of a movable communication apparatus; a calculation unit that performs calculation related to a Doppler shift of a radio wave of at least one of a plurality of communication apparatuses including the movable communication apparatus, based on the information related to movement; and a discerning unit that performs, based on a result of the calculation, discerning related to use of radio waves of one or more communication apparatuses among the plurality of communication apparatuses.

Brief Description of Drawings

FIG. 1 is a diagram illustrating an example of allocation of an interference margin to each of communication apparatuses constituting a secondary system.

FIG. 2 is a diagram illustrating outline of the present embodiment.

FIG. 3 is a diagram illustrating a hierarchical structure in CBRS.

FIG. 4 is a diagram illustrating CBRS bands.

FIG. 5 is a diagram illustrating a configuration example of a communication system.

FIG. 6 is a diagram illustrating a configuration example of a communication system (second wireless system).

FIG. 7 is a diagram illustrating a configuration example of a communication system according to the embodiment of the present disclosure.

FIG. 8 is a diagram illustrating a model in which communication control apparatuses are arranged in a distributed manner.

FIG. 9 is a diagram illustrating a model in which one communication control apparatus centrally controls a plurality of communication control apparatuses.

FIG. 10 is a diagram illustrating another example of an arrangement model of the communication control apparatus.

FIG. 11 is a diagram illustrating a configuration example of a communication apparatus according to the embodiment of the present disclosure.

FIG. 12 is a diagram illustrating a configuration example of a management apparatus according to the embodiment of the present disclosure.

FIG. 13 is a diagram illustrating a configuration of a communication apparatus according to the present embodiment.

FIG. 14 is a diagram illustrating a configuration of a base station according to the present embodiment.

FIG. 15 is a diagram illustrating a configuration of an information processing apparatus according to the present embodiment.

FIG. 16 is a diagram illustrating a configuration example of a communication control apparatus according to the embodiment of the present disclosure.

FIG. 17 is a diagram illustrating an example of an interference model assumed in the embodiment of the present disclosure.

FIG. 18 is a diagram illustrating another example of an interference model assumed in the embodiment of the present disclosure.

FIG. 19 is a diagram illustrating an interference margin simultaneous allocation type primary system protection method.

FIG. 20 is a diagram illustrating a state in which a residual interference margin occurs.

FIG. 21 is a diagram illustrating an interference margin sequential allocation type primary system protection method.

FIG. 22 is a sequence diagram for illustrating an operation of the communication system.

FIG. 23 is a diagram illustrating an example of a moving route of each communication apparatus.

FIG. 24 is a diagram illustrating a positional relationship between individual communication apparatuses in a case where the individual communication apparatuses are approaching each other.

FIG. 25 is a diagram illustrating a positional relationship of each communication apparatus in a three-dimensional space.

FIG. 26 is a diagram illustrating a Doppler shift in pattern 1.

FIG. 27 is a diagram illustrating a positional relationship between individual communication apparatuses in a case where the individual communication apparatuses are separating from each other.

FIG. 28 is a diagram illustrating a Doppler shift in pattern 2.

FIG. 29 is a diagram illustrating an example of a spectrum mask.

FIG. 30 is a diagram illustrating a relationship between a frequency after occurrence of a Doppler shift and EIRP.

FIG. 31 is a diagram illustrating an example of the spectrum mask.

FIG. 32 is a diagram illustrating a relationship between a frequency after occurrence of a Doppler shift and EIRP.

FIG. 33 is a diagram illustrating a state in which the center frequency is shifted downward.

Description of Embodiments

Embodiments of the present disclosure will be described below in detail with reference to the drawings. In each of the following embodiments, the same parts are denoted by the same reference signs, and a repetitive description thereof will be omitted.

Moreover, in the present specification and the drawings, a plurality of components having substantially the same functional configuration will be distinguished by attaching different numbers or alphabets after the same reference signs. For example, a plurality of configurations having substantially the same functional configuration is distinguished as necessary, such as communication control apparatuses $60_1$ and $60_2$. Moreover, a plurality of configurations having substantially the same functional configuration is distinguished as necessary, such as communication systems 2A and 2B. However, when it is not particularly necessary to distinguish between the plurality of components having substantially the same functional configuration, only the same reference sign is given. For example, when there is no need to distinguish between the communication control apparatuses $60_1$ and $60_2$ in particular, they are simply referred to as a communication control apparatus 60. In addition, when there is no need to distinguish between the communication systems 2A and 2B in particular, they are simply referred to as a communication system 2.

<<1. Introduction>>

With recent increase and diversification of radio environments having a mixture of various wireless systems and the volume of content transferred via wireless communications, there has been an emerging problem of exhaustion of radio resources (for example, frequency/spectrum) available for allocation to the wireless systems. However, all radio bands are already used by incumbent wireless systems, making it difficult to allocate new radio resources. In view of this, in recent years, more effective use of radio resources by utilization of technologies such as a cognitive radio technology has started to attract attention.

In the cognitive radio technology, radio resources are worked out, for example, by utilizing temporally and spatially unused radio spectrum (White Space) of the incumbent wireless system (for example, by using dynamic spectrum sharing (Dynamic Spectrum Access (DSA))). In the United States, for example, with the aim of opening a Federal use band (3.55-3.70 GHz), which overlaps with frequency bands being worldwide 3GPP bands 42 and 43, to the general public, legislation and standardization of a Citizens Broadband Radio Service (CBRS) utilizing a spectrum sharing technology are accelerating. Standards of the CBRS have been defined by the Wireless Innovation Forum (WINNF). In recent years, an Automated Frequency Coordination System (AFC System) whose standards have been formulated by the Wi-Fi Alliance has also attracted attention as an example of dynamic spectrum sharing.

Note that the cognitive radio technology contributes not merely to dynamic spectrum sharing but also to improvement of spectrum use efficiency by a wireless system. For example, ETSI EN 303 387 and IEEE 802.19.1-2014 define a technology of inter-wireless system coexistence technology using unused radio spectrum.

<1-1. Control of wireless system for achieving spectrum sharing>

Hereinafter, spectrum sharing will be briefly described using the CBRS as an example. In CBRS, it is required, by the National Regulatory Authority (NRA) of each country/region, for example, to protect the wireless system (primary system) of the primary user licensed or authorized for the use of a frequency band. For example, an acceptable interference reference value regarding the primary system is defined by the NRA, and the wireless system (secondary system) of the secondary user is required to suppress the interference occurring by sharing to a value below the acceptable interference reference value.

In the following description, a "system" represents a set of a plurality of components (apparatuses, modules (components), and the like). At this time, it would not matter whether all the components are in the same housing. For example, each of a plurality of apparatuses housed in separate housings and connected via a network or the like, and one apparatus in which a plurality of modules is housed in one housing, is a "system" in each case. That is, a wireless system such as a primary system and a secondary system may each be configured by a plurality of apparatuses or may be configured by one apparatus.

In order to achieve spectrum sharing, a communication control apparatus that manages communication and the like of the communication apparatus may be installed in a communication system. The communication control apparatus (for example, a spectrum management database) controls communication of the secondary system so as not to give fatal interference to the primary system, for example. Here, the communication control apparatus is a system for managing radio resources (for example, the spectrum) such as a Geo-location Database (GLDB), a Spectrum Access System (SAS), and an Automated Frequency Coordination (AFC) system. In the present embodiment, the communication control apparatus corresponds to the communication control apparatus 60 described below. The communication control apparatus 60 will be described in detail below.

Here, the primary system is, for example, a system (for example, an incumbent system) that preferentially uses a predetermined frequency band over other systems. In addition, the secondary system is, for example, a system that performs secondary use of a frequency band used by the primary system. Each of the primary system and the secondary system may include a plurality of communication apparatuses or may include one communication apparatus. The communication control apparatus allocates an interference tolerance to one or more communication apparatuses constituting the secondary system such that interference aggregation of the one or more communication apparatuses toward the primary system would not exceed an interference tolerance (also referred to as an interference margin) of the primary system. At this time, the interference tolerance may be an interference amount preliminarily determined by an operator of the primary system, a public organization that manages radio waves, or the like. In the following description, the interference margin refers to the interference tolerance. In addition, interference accumulation may be referred to as cumulative interfering power.

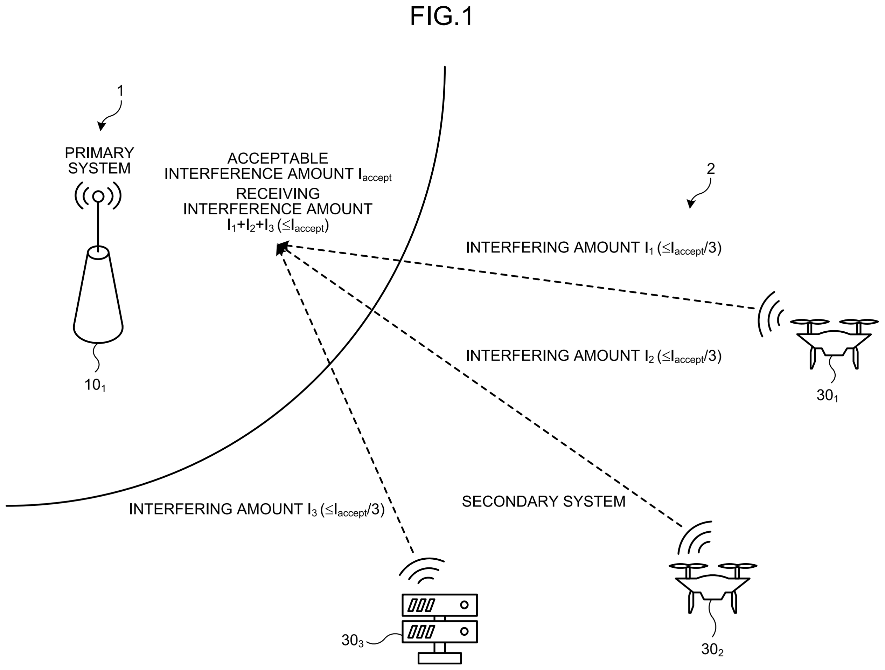

FIG. 1 is a diagram illustrating an example of allocation of an interference margin to each of communication apparatuses constituting a secondary system. In the example of FIG. 1, a communication system 1 is the primary system, while a communication system 2 is the secondary system. The communication system 1 includes a communication apparatus $10_1$ and the like. In addition, the communication system 2 includes communication apparatuses $30_1$, $30_2$, $30_3$, and the like. Although the example of FIG. 1 is a case where the communication system 1 includes only one communication apparatus 10, the communication system 1 may include a plurality of communication apparatuses 10. In addition, although the example of FIG. 1 is a case where the communication system 2 includes three communication apparatuses 30, the number of communication apparatuses 30 included in the communication system 2 may be less than three or more than three. In addition, the wireless communication apparatus included in the communication system 2 does not necessarily have to be the communication apparatus 30 alone. For example, the communication system 2 may include a base station as a wireless communication apparatus. Although the example of FIG. 1 illustrates only one primary system (the communication system 1 in the example of FIG. 1) and only one secondary system (the communication system 2 in the example of FIG. 1), the primary system and the secondary system may each be provided in plurality.

The communication apparatus $10_1$ and the communication apparatuses $30_1$, $30_2$, and $30_3$ can transmit and receive radio waves, individually. The interference amount acceptable by the communication apparatus $10_1$ is $I_{accept}$. In addition, interference amounts given to predetermined protection points of the communication system 1 (primary system) by the communication apparatuses $30_1$, $30_2$, and $30_3$ are interfering amounts $I_1$, $I_2$, and $I_3$, respectively. Here, the protection point is a reference-point regarding interference calculation for protection of the communication system 1.

The communication control apparatus allocates the interference margin $I_{accept}$ to the plurality of communication apparatuses 30 such that interference aggregation to a predetermined protection point of the communication system 1 (receiving interference amount $I_1+I_2+I_3$ illustrated in FIG. 1) would not exceed the interference margin $I_{accept}$. For example, the communication control apparatus allocates the interference margin $I_{accept}$ to each of the communication apparatuses 30 such that the interfering amounts $I_1$, $I_2$, and $I_3$ become $I_{accept}/3$, individually. Alternatively, the communication control apparatus allocates the interference margin $I_{accept}$ to each communication apparatus 30 such that the interfering amounts $I_1$, $I_2$, and $I_3$ become $I_{accept}/3$ or less, individually. Naturally, the method of allocating the interference margin is not limited to this example, and includes a method of sequentially allocating the interference margin as described below.

The communication control apparatus calculates the maximum transmission power acceptable for each of the communication apparatuses 30 (hereinafter, referred to as maximum allowable transmission power) based on the interference amount that is allocated (hereinafter, referred to as an allocated interference amount). For example, the communication control apparatus calculates the maximum allowable transmission power of each of the communication apparatuses 30 by calculating back from the allocated interference amount based on the propagation loss, the antenna gain, and the like. Subsequently, the communication control apparatus notifies each of the communication apparatuses 30 of information of the calculated maximum allowable transmission power.

<1-2. Outline of present embodiment>

In recent years, studies related to dynamic spectrum sharing for Unmanned Aircraft Systems (UASs) have been actively conducted. In the United States, the 5030-5091 MHz band has been allocated as primary allocation for the UAS Control and Non Payload Communications (CNPC) application. In recent years, the Federal Communications Commission (FCC) has issued a draft of regulations governing use of the band (for example, Non Patent Literature 1: FCC, RM-11798).

As described above, in the dynamic spectrum sharing, a communication control apparatus is arranged to dynamically manage the use of the frequency band. The communication control apparatus gives permission to use the frequency band regarding dynamic spectrum sharing to the communication apparatus under management, for example. The communication apparatus provides a wireless communication service to the user based on the permission from the communication control apparatus.

Here, in an example of the above-described WINNF, the communication control apparatus is, SAS, for example, and the communication apparatus constituting the secondary system is, for example, a Citizens Broadband Service Device (CBSD). In addition, in the example of the Wi-Fi Alliance described above, the communication control apparatus is, for example, the AFC system, and the communication apparatus constituting the secondary system is, for example, an Automated Frequency Coordination Device (AFC device).

However, there is a possibility that effective use of radio resources cannot be achieved with the current method of dynamic spectrum sharing.

For example, here is a case to consider, having a high-speed mobile communication system in which a high-speed mobile body such as an unmanned aircraft uses radio waves. In a high-speed mobile communication system, interference power from a communication apparatus (for example, a flight-type communication apparatus such as an unmanned aircraft) changes depending on four-dimensional parameters of latitude, longitude, altitude, and time. In such a communication system, in order to increase temporal and spatial frequency utilization efficiency, an interference amount in each communication apparatus needs to be calculated using the four-dimensional parameters of latitude, longitude, altitude, and time, and a frequency channel (hereinafter, also simply referred to as a channel) needs to be allocated to each communication apparatus based on a result of the calculation.

However, since the communication apparatus is movable at a high speed in the high-speed mobile communication system, there is a possibility of an increase in a relative speed difference between the communication apparatuses. The increase in the relative speed difference leads to a possibility of an increase of interference with an adjacent channel due to the Doppler shift of the frequency. The increased interference disables communication of the communication apparatus using the adjacent channel. This leads to a possibility of a failure in achievement of effective use of radio resources.

In view of these, the present embodiment proposes to solve the above problems using the measures as follows.

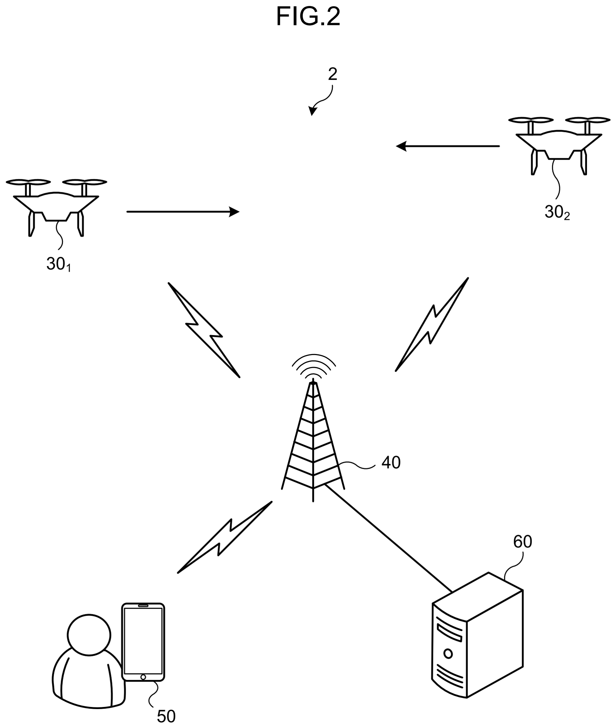

FIG. 2 is a diagram illustrating outline of the present embodiment. FIG. 2 illustrates a configuration of the communication system 2 of the present embodiment. The communication system 2 is a secondary system, for example. The communication system 2 includes a communication apparatus $30_1$, a communication apparatus $30_2$, a base station 40, an information processing apparatus 50, and a communication control apparatus 60.

The communication apparatus $30_1$ and the communication apparatus $30_2$ are flight-type communication apparatuses. The base station 40 is a base station that performs wireless communication with the communication apparatus $30_1$ and the communication apparatus $30_2$. The information processing apparatus 50 is an apparatus that manages or controls the communication apparatus $30_1$ and the communication apparatus $30_2$. The information processing apparatus 50 may be wirelessly communicable with the communication apparatus $30_1$ and the communication apparatus $30_2$ directly without passing through the base station 40. The communication control apparatus 60 is an apparatus for dynamically managing the use of radio waves.

The communication control apparatus 60 of the present embodiment acquires information related to movement of the communication apparatus 30. For example, as the information related to movement of the communication apparatus 30, the communication control apparatus 60 acquires information related to a vehicle operation plan of at least one of the communication apparatus $30_1$ and the communication apparatus $30_2$.

The communication control apparatus 60 performs calculation related to the Doppler shift of the radio wave used by (or scheduled to be used by) the communication apparatus 30 based on the information related to movement of the communication apparatus 30. For example, the communication control apparatus 60 performs calculation related to the Doppler shift of the radio wave of at least one of the communication apparatus $30_1$ and the communication apparatus $30_2$ based on the information related to the vehicle operation plan of at least one of the communication apparatus $30_1$ and the communication apparatus $30_2$. For example, the communication control apparatus 60 performs calculation (hereinafter, referred to as a first calculation) related to the Doppler shift in a case where the communication apparatus $30_1$ uses a first frequency band, and performs calculation (hereinafter, referred to as a second calculation) related to the Doppler shift in a case where the second communication apparatus uses a second frequency band adjacent to the first frequency band.

Based on the calculation result, the communication control apparatus 60 performs discerning related to the use of radio waves of the communication apparatus 30 (for example, discerning related to allocation of a predetermined frequency band to the communication apparatus 30). For example, the communication control apparatus 60 performs discerning regarding use of a frequency band regarding dynamic spectrum sharing of the communication apparatus $30_1$ or the communication apparatus $30_2$. For example, based on a result of the first calculation, the communication control apparatus 60 discerns whether interference leakage power given to the second frequency band by the communication apparatus $30_1$ is a predetermined limit value or less when the communication apparatus $30_1$ uses the first frequency band. In addition, based on a result of the second calculation, the communication control apparatus 60 discerns whether the interference leakage power given to the first frequency band by the communication apparatus $30_2$ is a predetermined limit value or less when the communication apparatus $30_2$ uses the second frequency band. Subsequently, based on a discerning result as to whether the interference leakage power given to the second frequency band by the communication apparatus $30_1$ is the predetermined limit value or less and a discerning result as to whether the interference leakage power given to the first frequency band by the communication apparatus $30_2$ is the predetermined limit value or less, the communication control apparatus 60 performs discerning related to use of the second frequency band by the communication apparatus $30_2$.

Subsequently, the communication control apparatus 60 transmits information based on the discerning result to the information processing apparatus 50. For example, the communication control apparatus 60 transmits, to the information processing apparatus 50, information based on a discerning result related to use of the second frequency band by the communication apparatus $30_2$. For example, the communication control apparatus 60 transmits information indicating whether the communication apparatus $30_2$ can use the second frequency band to the information processing apparatus 50.

Based on the received information, the information processing apparatus 50 performs processing related to communication settings of the communication apparatus 30. For example, in a case where the communication apparatus $30_2$ can use the second frequency band, the information processing apparatus 50 performs setting to allow the communication apparatus $30_2$ to use the second frequency band.

According to the present embodiment, the communication control apparatus 60 performs discerning related to use of the frequency in consideration of the Doppler shift (for example, discerning related to frequency channel allocation). This makes it possible to suppress the interference due to the Doppler shift even in an environment where the communication apparatus 30 moves at a high speed. As a result, more precise spectrum sharing can be achieved, leading to achievement of effective use of radio resources.

<1-3. Terms related to spectrum and sharing>

The outline of the present embodiment has been described as above. Before describing the present embodiment in detail, terms related to spectrum and sharing used in the present embodiment will be clearly defined.

The present embodiment assumes that the primary system (for example, the communication system 1) and the secondary system (for example, the communication system 2) are in an environment of dynamic spectrum sharing (Dynamic Spectrum Access (DSA)). Hereinafter, terms related to spectrum and sharing will be described by using a Citizens Broadband Radio Service (CBRS) established by the United States Federal Communications Commission (FCC), as an example. Note that a communication system 1000 of the present embodiment is not limited to the system regarding the CBRS. For example, the communication system 1 and the communication system 2 may be systems regarding the AFC system defined by the Wi-Fi Alliance. Naturally, the communication system 1000 may be a system other than the CBRS and the AFC system.

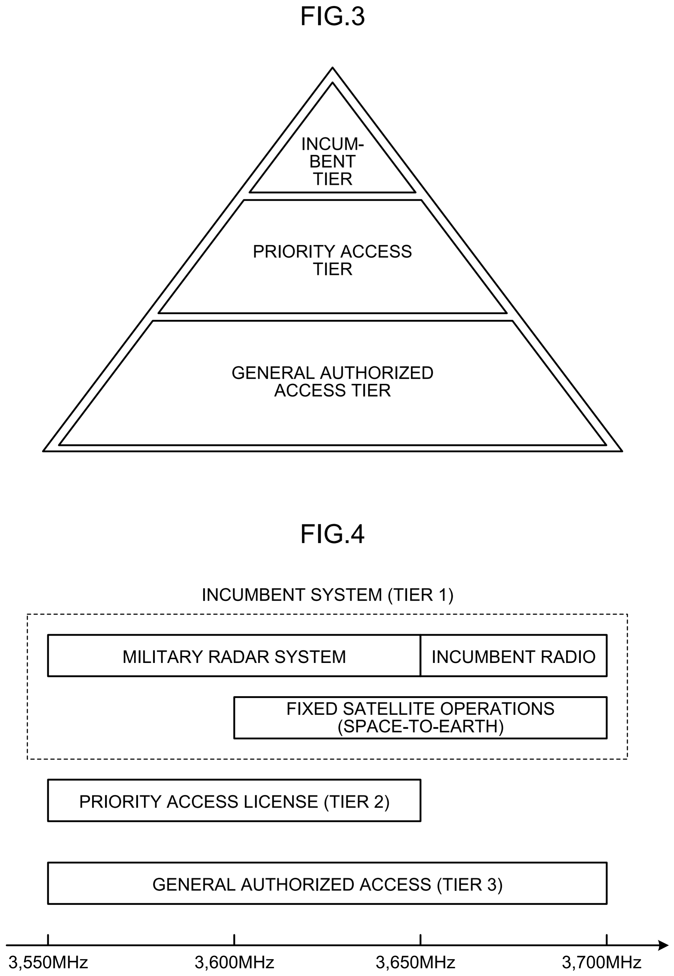

Hereinafter, dynamic spectrum sharing will be described using CBRS as an example. FIG. 3 is a diagram illustrating a hierarchical structure in the CBRS. As illustrated in FIG. 3, each of users in a shared frequency band is classified into one of three groups. This group is referred to as a "tier". The three groups are referred to as an Incumbent Tier, a Priority Access Tier, and a General Authorized Access Tier. In the example of FIG. 3, the Priority Access Tier is located above the General Authorized Access Tier, and the Incumbent Tier is located above the Priority Access Tier. Using the CBRS as an example, a system located in the Incumbent Tier (incumbent system) is a primary system, and systems located in the General Authorized Access Tier and the Priority Access Tier are secondary systems, for example.

The Incumbent Tier is a group including incumbent users who conventionally use a frequency band defined as a shared frequency band. The incumbent user may be referred to as a primary user. The incumbent users defined in the CBRS include: the Department of Defense (DOD), fixed satellite service operators, and Grandfathered Wireless Broadband Licensees (GWBL). The Incumbent Tier is not required to avoid or suppress interference to lower priority tiers, namely, the Priority Access Tier and the General Authorized Access Tier (GAA Tier). In addition, the Incumbent Tier is protected against the interference from the Priority Access Tier and the General Authorized Access Tier (GAA Tier). That is, the user of the "Incumbent Tier" can use the frequency band without considering the presence of other groups.

The Priority Access Tier is a group of users who utilize the above-described shared frequency band based on a license referred to as a Priority Access License (PAL). A user who uses the above-described shared frequency band may be referred to as a secondary user. In spectrum sharing in the Priority Access Tier, the Priority Access Tier is required to avoid or suppress interference to a higher priority tier, namely, the Incumbent Tier, but is not required to avoid or suppress interference to the lower priority tier, namely, the General Authorized Access Tier (GAA Tier). In addition, the Priority Access Tier is not protected against the interference from the higher priority tier, namely, the Incumbent Tier, but is protected against the interference from the lower priority tier, namely, the General Authorized Access Tier (GAA Tier).

The General Authorized Access Tier (GAA Tier) is a group of the other users, that is, users not belonging to any of the Incumbent Tier or the Priority Access Tier. Users at this tier may also be referred to as secondary users. However, this tier may be referred to as a low priority secondary user because its priority of shared use is lower than that of the Priority Access Tier. In the shared use of spectrum in the General Authorized Access Tier (GAA Tier), it is required to avoid or suppress interference to the Incumbent Tier and the Priority Access Tier, which have higher priority. In addition, the General Authorized Access Tier (GAA Tier) is not protected against the interference from the higher priority tiers, namely, the Incumbent Tier and the Priority Access Tier. That is, the General Authorized Access Tier (GAA Tier) corresponds to a "tier" that is legislatively required to allow opportunistic shared use of spectrum.

The hierarchical structure is not limited to these definitions. Typically, the CBRS is a three-tier structure, but may be a two-tier structure. Typical examples of this include two-tier structures such as Licensed Shared Access (LSA) and TV band White Space (TVWS). The LSA has employed a structure equivalent to a combination of the Incumbent Tier and the Priority Access Tier. In addition, the TVWS has employed a structure equivalent to a combination of the Incumbent Tier and the General Authorized Access Tier (GAA Tier). In addition, there may be four or more Tiers. Specifically, for example, an intermediate tier corresponding to the Priority Access Tier may be further prioritized. In addition, for example, the General Authorized Access Tier (GAA Tier) may be similarly prioritized.

FIG. 4 is a diagram illustrating CBRS bands. In the CBRS described above as an example, the primary system is a military radar system, an incumbent wireless system (referred to as a grandfathered wireless system), or a fixed satellite service (space-to-earth). Here, the military radar system is typically an in-ship radar. In addition, the secondary system is a radio network system including base stations and terminals referred to as a Citizens Broadband Radio Service Device (CBSD) and an End User Device (EUD), respectively. The secondary system is further prioritized into levels, namely, as a Priority Access License (PAL) for which a shared band can be licensed and a General Authorized Access (GAA) equivalent to unlicensed access. The Tier 1 illustrated in FIG. 4 corresponds to the Incumbent Tier illustrated in FIG. 3. The Tier 2 illustrated in FIG. 4 corresponds to the Priority Access Tier illustrated in FIG. 3. The Tier 3 illustrated in FIG. 4 corresponds to the General Authorized Access Tier illustrated in FIG. 3.

Note that the primary system and the secondary system are not limited to the above examples. For example, a wireless system included in the Priority Access Tier may be regarded as a primary system, and a system included in a General Authorized Access Tier (GAA Tier) may be regarded as a secondary system.

In addition, the primary system (communication system 1) of the present embodiment is not limited to the example illustrated in FIG. 4. Other types of wireless system may be used as the primary system (communication system 1). Examples of the primary system include wireless systems such as a TV broadcast, a fixed microwave line (Fixed System (FS)), a meteorological radar, a radio altimeter, a communications-based train control, and radio astronomy. In addition, the primary system may be a television broadcasting system such as a Digital Video Broadcasting-Terrestrial (DVB-T) system or a cellular communication system such as Long Term Evolution (LTE), New Radio (NR), 6G, etc. The primary system may also be an aeronautical wireless system such as an Aeronautical Radio Navigation Service (ARNS). Naturally, the primary system is not limited to the above wireless system, and may be other types of wireless system. Other wireless systems may be set as the primary system according to the country, region, and frequency band to be applied.

In addition, an unused radio spectrum (White Space) used by the communication system 2 is not limited to the radio wave of the Federal use band (3.55-3.70 GHz). The communication system 2 may use a radio wave in a frequency band different from the Federal use band (3.55-3.70 GHz) as an unused radio spectrum. For example, when the primary system (communication system 1) is a television broadcasting system, the communication system 2 may be a system that uses a TV white space as an unused radio spectrum. Here, the TV white space refers to a frequency band that is not currently used by the television broadcasting system among frequency channels allocated to the television broadcasting system (primary system). At this time, the TV white space may be a channel that is not currently used according to the area.

The relationship between the communication system 1 and the communication system 2 is not limited to the spectrum sharing relationship in which the communication system 1 is a primary system and the communication system 2 is a secondary system. The relationship between the communication system 1 and the communication system 2 may be a network coexistence relationship between the same or different wireless systems using the same spectrum.

In addition, application of the present embodiment is not limited to the spectrum sharing environment. As terms used in general regarding spectrum sharing or secondary use of the spectrum, an incumbent system using a target band is referred to as a primary system, and a system of a secondary user is referred to as a secondary system. However, in a case where the present embodiment is applied to an environment other than the spectrum sharing environment, these systems (primary system and secondary system) may be replaced with a system with different terms. For example, the primary system and the secondary system are not necessarily distinguished based on the priority. In addition, for example, a macro cell base station in a heterogeneous network (HetNet) may be defined as the primary system, and a small cell or a relay station may be defined as the secondary system. In addition, the base station may be defined as the primary system, and a Relay UE or a Vehicle UE that implements Device to Device (D2D) or Vehicle to everything (V2X) existing in its coverage may be defined as the secondary system. The base station is not limited to a stationary type, and may be a portable/mobile type. In such a case, for example, the communication control apparatus provided by the present invention may be included in a core network, a base station, a relay station, a Relay UE, etc.

In the present disclosure, the term "frequency" or "spectrum" may be replaced with other terms. For example, the term "frequency" or "spectrum" may be replaced with terms such as "resource", "resource block", "resource element", "resource pool", "channel", "component carrier", "Bandwidth Part (BWP)", "carrier", "subcarrier", and "beam", or terms having equivalent or similar meanings.

<<2. Configuration of communication system>>

The terms related to frequency and sharing have been described as above. Now, the communication system 1000 according to the embodiment of the present disclosure will be described in detail below.

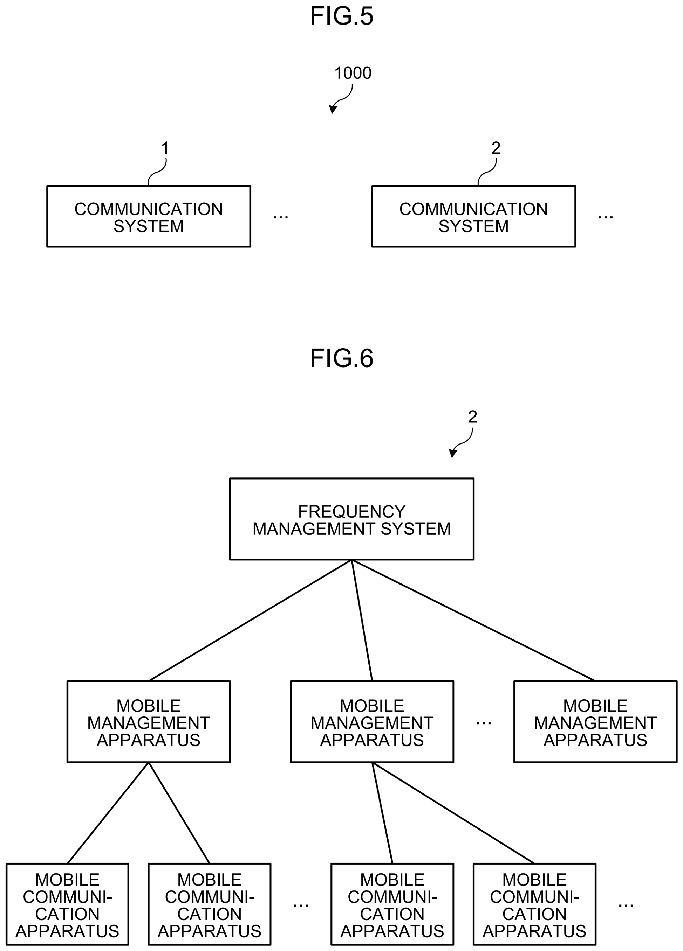

FIG. 5 is a diagram illustrating a configuration example of the communication system 1000. The communication system 1000 includes a communication system 1 and a communication system 2. The communication system 1 (first wireless system) is a wireless communication system that performs wireless communication using a predetermined frequency band (primary use), for example. The communication system 2 (second wireless system) is a wireless communication system that performs wireless communication by performing secondary use of a frequency band used by the communication system 1, for example. For example, the communication system 2 is a wireless communication system that shares radio waves used by the communication system 1. The communication system 2 provides a radio service to a user or an apparatus owned by the user by utilizing a predetermined radio access technology.

Note that a communication system 1000 of the present embodiment is not limited to the system regarding the CBRS. For example, the communication system 1000 may be a system regarding the AFC system defined by the Wi-Fi Alliance. Naturally, the communication system 1000 may be a system other than the CBRS and the AFC system. In addition, the communication system 1000 need not necessarily include the communication system 1 (primary system). In this case, the frequency band (frequency band regarding dynamic spectrum sharing) used by the communication system 2 need not be the frequency band allocated as primary allocation to the communication system 1 (primary system). For example, the frequency band (frequency band regarding dynamic spectrum sharing) used by the communication system 2 may be a frequency band allocated as primary allocation to the communication system 2. For example, it is assumed that the communication system 2 is a high-speed mobile system (for example, an unmanned aircraft system). At this time, the frequency band (frequency band regarding dynamic spectrum sharing) used by the communication system 2 may be a frequency band allocated as a primary allocation for the high-speed mobile system.

Here, the communication systems 1 and 2 may be wireless communication systems such as Wideband Code Division Multiple Access (W-CDMA), Code Division Multiple Access 2000 (cdma2000), LTE, NR, 6G, etc. LTE and NR are a type of cellular communication technology, and enable mobile communication of a terminal apparatus by arranging a plurality of areas covered by a base station (for example, an eNodeB (eNB), a gNodeB (gNB), or a RAN node (including EUTRAN and NGRAN)) in a cell shape. In recent years, studies on 6G have also been started. 6G, as also a type of cellular communication technology, has a possibility to be a technology that enables mobile communication of terminal apparatuses by using cellular arrangement of a plurality of areas covered by base stations. A single base station may manage a plurality of cells.

Note that the following assumes that "LTE" includes LTE-advanced (LTE-A), LTE-advanced pro (LTE-A Pro), and Evolved Universal Terrestrial Radio Access (EUTRA). In addition, it is assumed that NR includes New Radio Access Technology (NRAT) and further EUTRA (FEUTRA). A single base station may manage a plurality of cells. In the following, a cell corresponding to LTE may be referred to as an LTE cell, and a cell corresponding to NR may be referred to as an NR cell.

NR is a next-generation radio access method for LTE, and is a Radio Access Technology (RAT) different from LTE. The NR is a radio access technology that can support various use cases including enhanced mobile broadband (eMBB), massive machine type communications (mMTC), and Ultra-Reliable and Low Latency Communications (URLLC). NR makes it possible to implement a technical framework that supports usage scenarios, requirements, and arrangement scenarios for these use cases.

In addition, 6G is a cellular communication technology of a next generation of NR or 5G System (5GS) that is the fifth generation mobile communication. 6G includes a radio access technology and a network technology between a base station, a core network, and a data network. 6G has more sophisticated versions of eMBB, mMTC, and URLLC, which have been main use cases or required conditions in NR. The technology provided in 6G can include a technology related to AI (for example, Cognitive network and AI native Air Interface), a technology related to sensing (for example, Rader sensing and network as a sensor), and a technology related to terahertz communication.

Note that the communication systems 1 and 2 are not limited to the cellular communication systems. For example, the communication system 2 may be other wireless communication systems such as a wireless local area network (wireless LAN) system, a television broadcasting system, an aeronautical wireless system, or a space wireless communication system.

The present embodiment assumes that the communication system 1 is the primary system, and the communication system 2 is the secondary system. As described above, the communication system 1 and the communication system 2 may each be provided in plurality. In the example of FIG. 1, the communication system 1 includes one communication apparatus 10 (the communication apparatus 10 illustrated in FIG. 1), but may include a plurality of communication apparatuses 10. The configuration of the communication apparatus 10 may be the same as or different from the configuration of the communication apparatus 30 or the base station 40 described below.

FIG. 6 is a diagram illustrating a configuration example of the communication system 2 (second wireless system). The communication system 2 includes a mobile communication apparatus, a mobile management apparatus, and a frequency management system.

(Mobile communication apparatus)

A mobile communication apparatus is a mobile body capable of performing wireless communication while moving. For example, the mobile communication apparatus is a flight vehicle (flight-type communication apparatus) capable of performing wireless communication while flying. For example, a specific example of the flight-type communication apparatus is a flight vehicle included in the UAS. The flight-type communication apparatus performs a flight based on a vehicle operation plan approved by the flight management system and a radio parameter approved by the frequency management system, for example.

(Mobile management apparatus)

The mobile management apparatus is, for example, a management apparatus/control apparatus provided by a business operator (or user) who manipulates or operates a mobile communication apparatus that has obtained apparatus authentication. The mobile management apparatus performs the following processes (1) to (3), for example.

(1) The mobile management apparatus transmits the vehicle operation plan of the mobile communication apparatus managed by the mobile management apparatus to the frequency management system before the start of vehicle operation. Note that the mobile management apparatus may apply for a plurality of vehicle operation plans at a time.

(2) Based on the radio parameter approved by the frequency management system, the mobile management apparatus sets a radio parameter of the mobile communication apparatus managed by the mobile management apparatus, and operates the mobile communication apparatus.

(3) When a flight permission is not obtained for a vehicle operation plan that has been applied once, the mobile management apparatus may change vehicle operation plan information and may re-apply for vehicle operation.

(Frequency management system)

The frequency management system is an entity that performs frequency channel allocation to mobile communication apparatuses. The frequency management system according to the present embodiment includes, for example, a communication unit, a control unit, and a storage unit. The communication unit receives information from the mobile management apparatus and transmits information to the mobile management apparatus. The control unit performs calculation of a Doppler shift based on the information stored in the storage unit, and performs discerning related to a frequency channel to be allocated to the mobile communication apparatus. The storage unit records information acquired in advance for discerning to be performed by the control unit, information acquired from the mobile management apparatus, and information decided by the control unit.

<2-1. Specific configuration example of communication system>

Hereinafter, a specific configuration example of the communication system 1000 will be described.

The communication system 1000 typically includes the following entities.

Communication apparatus (for example, a mobile communication apparatus and a base station)
Information processing apparatus (for example, a mobile management apparatus)
Communication control apparatus (for example, a frequency management system)

In the following description, the entities serving as the communication apparatuses are assumed to be the communication apparatus 10, the communication apparatus 30, and the base station 40, but the entities to be the communication apparatuses are not limited to these apparatuses. For example, the entity serving as the communication apparatus may be the management apparatus 20, the information processing apparatus 50, or the communication control apparatus 60.

In the present embodiment, unless otherwise noted, the communication apparatus 30 and the base station 40 are entities constituting the secondary system that shares a part or all of a frequency band allocated to the primary system. The communication apparatus constituting the secondary system may be a communication apparatus (Type A) that can access the communication control apparatus 60 without using a wireless route involving permission of the communication control apparatus 60. In addition, the communication apparatus constituting the secondary system may be a communication apparatus (Type B) that cannot access the communication control apparatus 60 without a wireless route involving permission of the communication control apparatus 60.

The communication apparatus is not necessarily fixedly installed, and may be installed in a moving object such as an automobile. In addition, the communication apparatus does not necessarily need to exist on the ground. The communication apparatus function may be provided on an object existing in the air or space, such as an aircraft, a drone, a helicopter, or a satellite, or on an object existing on the sea or under the sea, such as a ship or a submarine. Typically, such a mobile communication apparatus corresponds to the communication apparatus (Type B), and performs wireless communication with another communication apparatus (Type A), thereby ensuring an access route to the communication control apparatus. As a matter of course, even a mobile communication apparatus can be handled as the communication apparatus (Type A) as long as the frequency/spectrum used in the wireless communication with the communication apparatus (Type A) is not managed by the communication control apparatus.

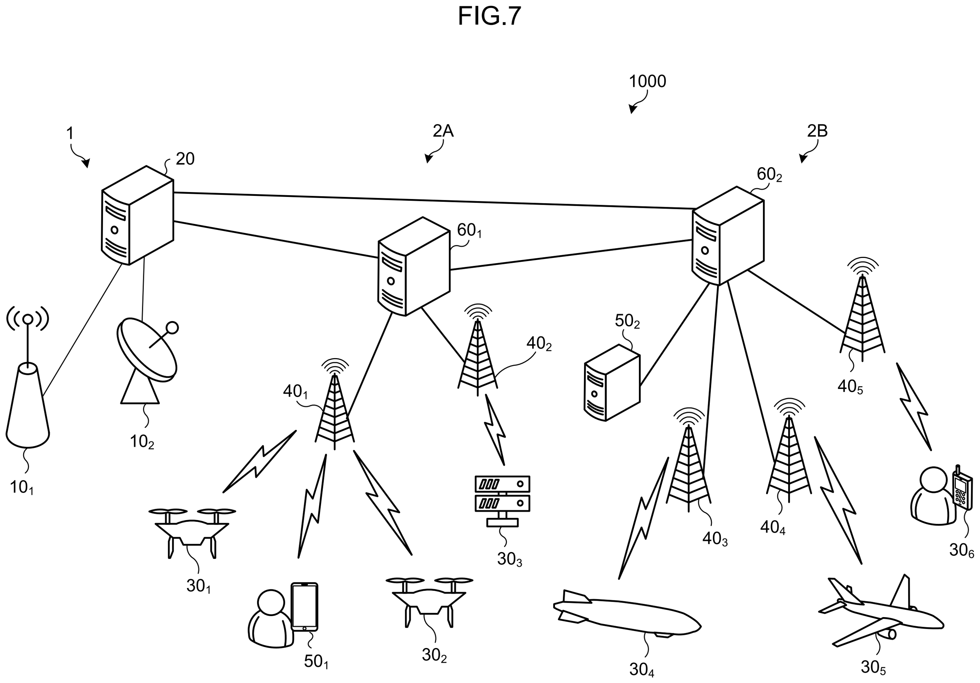

FIG. 7 is a diagram illustrating a configuration example of the communication system 1000 according to the embodiment of the present disclosure. As described above, the communication system 1000 includes the communication system 1 and the communication system 2. Note that the apparatus in the drawing can also be considered as an apparatus in a logical sense. That is, parts of the apparatus in the drawing may be partially implemented by a Virtual Machine (VM), a Container, a Docker, or the like, and they may be implemented on physically the same piece of hardware.

The communication system 1 includes a communication apparatus 10 and a management apparatus 20. In the example of FIG. 7, the communication system 1 includes the communication apparatuses $10_1$ and $10_2$ and the management apparatus 20 that manages the communication apparatuses $10_1$ and $10_2$. Note that the communication system 1 does not necessarily have to include the management apparatus 20. The communication system 1 may include a plurality of communication apparatuses 10 or may include only one communication apparatus 10. In the example of FIG. 7, each of the communication apparatuses $10_1$ and $10_2$ can be regarded as one communication system 1.

The communication system 2 includes a communication apparatus 30, a base station 40, an information processing apparatus 50, and a communication control apparatus 60. In the example of FIG. 7, the communication system 1000 includes a communication system 2A and a communication system 2B as the communication system 2.

The communication system 2A includes communication apparatuses $30_1$ to $30_3$, base stations $40_1$ to $40_2$, an information processing apparatus $50_1$, and a communication control apparatus $60_1$. The communication system 2B includes communication apparatuses $30_4$ to $30_6$, base stations $40_3$ to $40_5$, an information processing apparatus $50_2$, and a communication control apparatus $60_2$.

Note that the communication system 2 does not necessarily have to include the communication control apparatus 60. A communication system having the communication control apparatus 60 outside may be regarded as one communication system 2. In addition, the communication system 2 may include an intermediate apparatus.

Here, the intermediate apparatus is an apparatus that communicates with the communication control apparatus 60 substituting (representing) one or more communication apparatuses (for example, the communication apparatuses 30 and/or the base stations 40). For example, the intermediate apparatus is a proxy apparatus (proxy system). The intermediate apparatus is also a type of communication apparatus. The intermediate apparatus is a type of information processing apparatus. Here, the intermediate apparatus may be a Domain Proxy (DP). Here, the DP refers to an entity that communicates with a communication control apparatus such as SAS instead of each of a plurality of CBSDs, or an entity that communicates with a communication control apparatus such as SAS instead of a network including a plurality of CBSDs. The intermediate apparatus is not limited to the DP as long as it has a function of communicating with the communication control apparatus 60 substituting (representing) one or more communication apparatuses. For example, a network manager that integrally controls the base station 40 in the network may be regarded as the intermediate apparatus. The intermediate apparatus may be an apparatus referred to as an Automated Frequency Coordination (AFC) device.

With cooperative operations of the apparatuses (for example, communication apparatuses such as wireless communication apparatuses) constituting the communication systems 1 and 2, the communication systems 1 and 2 provide radio services to a user or an apparatus possessed by the user. The wireless communication apparatus is an apparatus having a function of wireless communication. In the example of FIG. 7, the communication apparatus 10, the communication apparatus 30, and the base station 40 correspond to wireless communication apparatuses.

The information processing apparatus 50 and the communication control apparatus 60 may have a wireless communication function. In this case, the information processing apparatus 50 and the communication control apparatus 60 can also be regarded as wireless communication apparatuses. In the following description, a wireless communication apparatus may be simply referred to as a communication apparatus. The communication apparatus is not limited to a wireless communication apparatus, and for example, an apparatus capable of wired communication alone and not equipped with a wireless communication function can also be regarded as a communication apparatus.

In the present embodiment, the concept of the "communication apparatus" includes not only a portable apparatus such as a mobile terminal but also an apparatus installed in a structure or a mobile body. A structure or a mobile body itself may be regarded as a communication apparatus. In addition, the concept of the communication apparatus includes not only a terminal apparatus but also a base station and a relay apparatus. The communication apparatus is a type of processing apparatus and information processing apparatus. The description of the "communication apparatus" in the following description can be appropriately rephrased as a "transmission apparatus" or a "reception apparatus". In the present embodiment, the concept of "communication" shall include "broadcasting". In this case, the description of the "communication apparatus" can be appropriately rephrased as a "broadcasting apparatus". Naturally, the description of the "communication apparatus" may be appropriately rephrased as a "transmission apparatus" or a "reception apparatus".

In the following description, a wireless communication apparatus may be referred to as a wireless system. For example, each of the communication apparatuses $30_1$ to $30_6$ is one wireless system. In addition, each of the communication apparatus 10 and the base station $40_1$ to $40_5$ is one wireless system. In the following description, the communication system 1 is defined as a first wireless system. However, each of one or more wireless systems (for example, the communication apparatuses 10) included in the communication system 1 may be regarded as the first wireless system. In the following description, each of one or more wireless systems (for example, the communication apparatuses 30 or the base stations 40) included in the communication system 2 is regarded as a second wireless system, but the communication system 2 itself may be regarded as the second wireless system. When the information processing apparatus 50 and the communication control apparatus 60 have a wireless communication function, each of the information processing apparatus 50 or each of the communication control apparatuses 60 may be regarded as the second wireless system.

The wireless system may be one system including a plurality of communication apparatuses including at least one wireless communication apparatus. For example, a system including one or more base stations 40 and one or more communication apparatuses 30 under the base stations 40 may be regarded as one wireless system. In addition, the communication system 1 and the communication system 2 can each be regarded as one wireless system. In the following description, a communication system including a plurality of communication apparatuses including at least one wireless communication apparatus may be referred to as a wireless communication system or simply as a communication system. Note that one system including a plurality of communication apparatuses including one wireless communication apparatus may be regarded as the first wireless system or the second wireless system.

In the present embodiment, a system represents a set of a plurality of components (apparatuses, modules (components), or the like). At this time, all the components constituting the system may be or need not be in the same housing. For example, a plurality of apparatuses housed in separate housings and connected by wired and/or wireless connection is defined as one system. In addition, one apparatus having a plurality of modules housed in one housing is also one system.

Note that, in the example of FIG. 7, there is only one communication control apparatus 60 in each of the two communication systems 2 (the communication systems 2A and 2B). However, the communication control apparatuses 60 may be present in plurality in one communication system 2. In a case where there is a plurality of communication control apparatuses, at least one of the following three types of decision-making topologies can be applied to the communication control apparatus 60.

· Autonomous Decision-Making
· Centralized Decision-Making
· Distributed Decision-Making

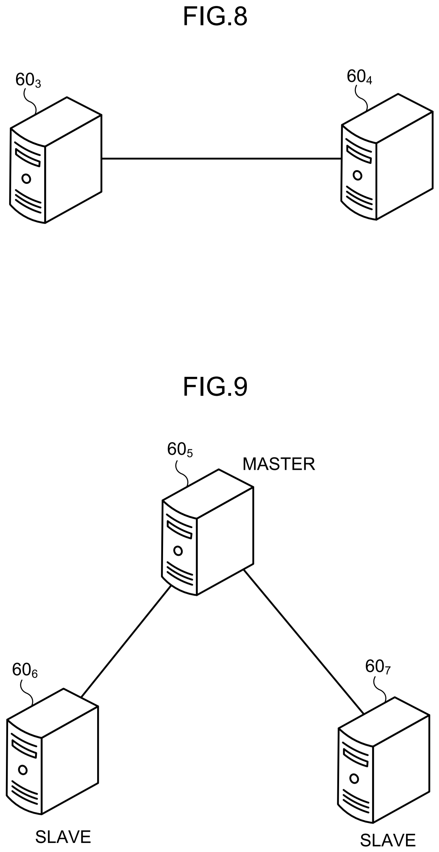

Autonomous Decision-Making is a decision-making topology in which an entity that makes a decision (decision-making entity; here, communication control apparatus) makes a decision independently from another decision-making entity. The communication control apparatus independently calculates necessary frequency allocation and interference control. FIG. 8 is a diagram illustrating a model in which the communication control apparatus 60 is arranged in a distributed manner. The autonomous decision-making can be applied to a case, for example, where a plurality of communication control apparatuses 60 is arranged in a distributed manner as illustrated in FIG. 8. In this case, the plurality of communication control apparatuses 60 (the communication control apparatus $60_3$ and the communication control apparatus $60_4$ in the case of the example of FIG. 8) exchange information regarding their managed base stations 40 with each other, and perform allocation of necessary spectrum and calculation of interference control.

Centralized decision-making is a Decision-Making topology in which a decision-making entity delegates decision-making to another decision-making entity. FIG. 9 is a diagram illustrating a model (referred to as a master-slave model) in which one communication control apparatus centrally controls a plurality of communication control apparatuses. In a case where middle-sized decision-making is performed, a model as illustrated in FIG. 9 is assumed, for example. In the example of FIG. 9, the communication control apparatus $60_5$ is a master communication control apparatus, while the communication control apparatuses $60_6$ and $60_7$ are slave communication control apparatuses. In such a system, the master communication control apparatus can integrally control the plurality of slave communication control apparatuses to collectively make a decision. In addition, the master communication control apparatus can also perform delegation, discarding, and the like of the decision-making authority to each of the slave communication control apparatuses for the purpose of load balancing and the like.

Distributed Decision-Making is a decision-making topology in which a decision-making entity makes a decision in cooperation with another decision-making entity. For example, in a case where a plurality of communication control apparatuses is arranged as illustrated in FIG. 8, performing mutual adjustment, negotiation, and the like of decision-making results after each communication control apparatus makes a decision can correspond to "distributed decision-making". In addition, for example, in the model as illustrated in FIG. 9, dynamically conducting, by the master communication control apparatus, delegation, discarding, and the like of the decision-making authority to each slave communication control apparatus for the purpose of load balancing, and the like, can also be considered as "distributed decision-making".

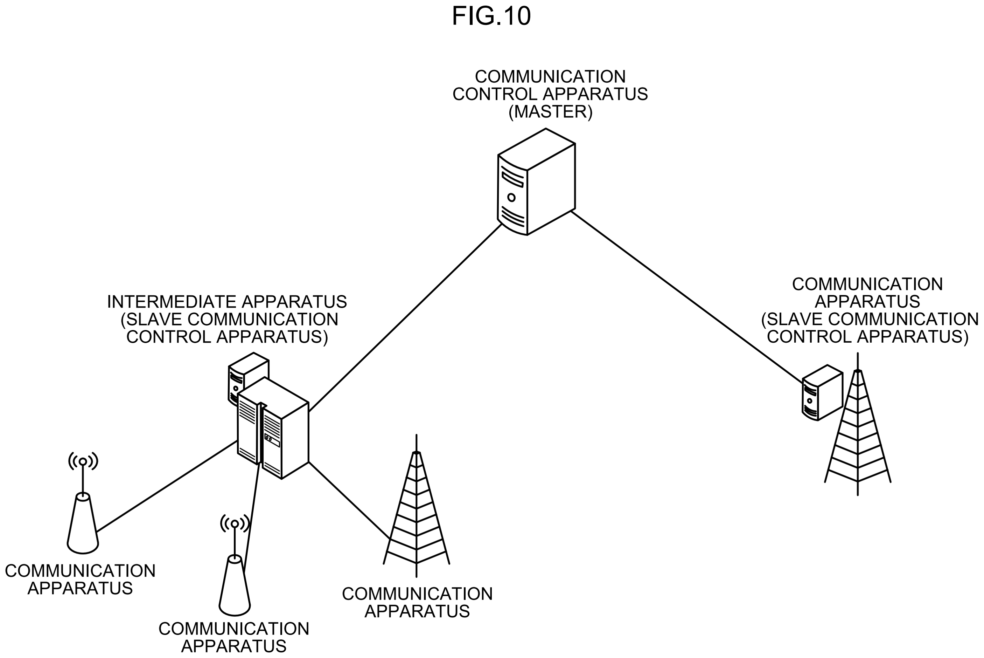

In a scenario that performs application of the Centralized Decision-Making and Distributed Decision-Making, implementation as illustrated in FIG. 10 is also possible as a modification. FIG. 10 is a diagram illustrating another example of an arrangement model of the communication control apparatus 60. In the example of FIG. 10, the master communication control apparatus exists outside, and a communication apparatus (for example, the base station 40) or an intermediate apparatus that bundles a plurality of communication apparatuses behaves as the slave communication control apparatus.

Hereinafter, configurations of individual apparatuses included in the communication system 1000 will be specifically described.

<2-2. Configuration of communication apparatus>

First, a configuration of the communication apparatus 10 included in the communication system 1 will be described.

The communication apparatus 10 is a communication apparatus (wireless system) that primarily uses a predetermined frequency band. The communication apparatus 10 is a wireless communication apparatus constituting the communication system 1 (primary system). The communication apparatus 10 is a type of information processing apparatus. The communication apparatus 10 may be a radio wave emission apparatus such as a radar or a reflected wave reception apparatus. As described above, the primary system is, for example, a military radar system, an incumbent system (for example, a television broadcasting system or an incumbent cellular communication system), or a fixed satellite service system. The communication apparatus 10 need not necessarily have a wireless communication function as long as radio waves are used. In this case, the communication apparatus 10 can be rephrased as, for example, the radio wave utilization apparatus 10.

When the communication system 1 is a military radar system, the communication apparatus 10 is an in-ship radar, for example. When the communication system 1 is a television broadcasting system, the communication apparatus 10 is a broadcasting station (broadcasting station as a facility) such as a broadcasting relay station, for example. When the communication system 1 is a fixed satellite service system, the communication apparatus 10 is a parabolic antenna that receives radio waves from an artificial satellite, for example. Naturally, the communication apparatus 10 is not limited to these apparatuses. For example, when the communication system 1 is an incumbent cellular communication system, the communication apparatus 10 may be a base station.

Similarly to the base station 40 to be described below, the communication apparatus 10 may be capable of communicating with other communication apparatuses using the radio access technology. Note that the radio access technology used by the communication apparatus 10 may be a cellular communication technology or a wireless LAN technology. Naturally, the radio access technology used by the base station 40 is not limited thereto, and may be other radio access technologies. For example, the radio access technology used by the communication apparatus 10 may be a Low Power Wide Area (LPWA) communication technology. Here, the LPWA communication is communication conforming to the LPWA standard. Examples of the LPWA standard include ELTRES, ZETA, SIGFOX, LoRaWAN, and NB-IoT. Naturally, the LPWA standard is not to be limited thereto, and may be other LPWA standards. In addition, the wireless communication used by the communication apparatus 10 may be wireless communication using millimeter waves. In addition, the wireless communication used by the communication apparatus 10 may be wireless communication using radio waves or wireless communication (optical wireless communication) using infrared rays or visible light.

The configuration of the communication apparatus 10 may be similar to that of the communication apparatus 30 or the base station 40 described below.

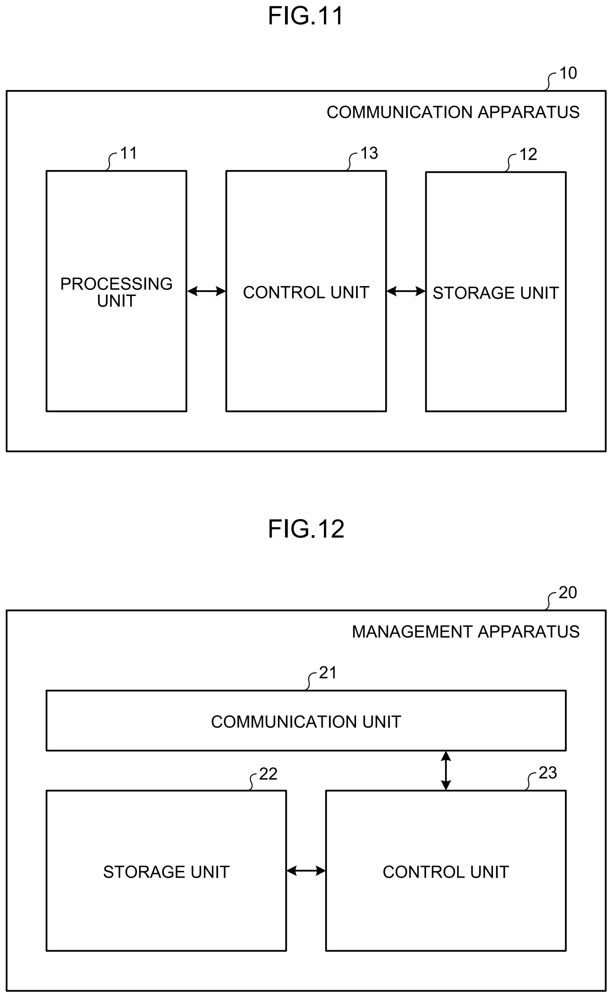

FIG. 11 is a diagram illustrating a configuration example of the communication apparatus 10 according to the embodiment of the present disclosure. The communication apparatus 10 includes a processing unit 11, a storage unit 12, and a control unit 13. Note that the configuration illustrated in FIG. 11 is a functional configuration, and the hardware configuration may be different from this. The functions of the communication apparatus 10 may be implemented in a distributed manner in a plurality of physically separated configurations.

The processing unit 11 is a processing unit for utilizing a radio wave in a predetermined frequency band. For example, the processing unit 11 is a signal processing unit that performs various processes for outputting and receiving a radio wave in a predetermined frequency band. When the communication apparatus 10 works as a wireless communication apparatus, the processing unit 11 may be a wireless communication interface that performs wireless communication with other communication apparatus(s). Here, the other communication apparatuses include not only communication apparatuses that perform cellular communication and the like but also transmission apparatuses that transmit broadcast waves, such as television broadcasting, and reception apparatuses that receive broadcast waves.

The storage unit 12 is a data readable/writable storage apparatus such as dynamic random access memory (DRAM), static random access memory (SRAM), flash memory, or a hard disk.

The control unit 13 is a controller that controls individual parts of the communication apparatus 10. The control unit 13 is implemented by a processor such as a central processing unit (CPU) or a micro processing unit (MPU), for example. For example, the control unit 13 is implemented by execution of various programs stored in the storage apparatus inside the communication apparatus 10 by the processor using random access memory (RAM) or the like as a work area. Note that the control unit 13 may be implemented by an integrated circuit such as an application specific integrated circuit (ASIC) or a field programmable gate array (FPGA). The CPU, MPU, ASIC, and FPGA can all be regarded as controllers.

The communication apparatus 10 may have a function as the management apparatus 20. In this case, the control unit 13 may have individual functional blocks included in the control unit of the management apparatus 20.

<2-3. Configuration of management apparatus>

Next, a configuration of the management apparatus 20 included in the communication system 1 will be described.

The management apparatus 20 is an apparatus that manages the communication apparatus 10. For example, the management apparatus 20 is a server or a database owned by an operator or an administrator of the communication system 1. The management apparatus 20 may be an apparatus that manages radio wave output of the communication apparatus 10, or may be an apparatus that manages information such as an installation mode and a management entity of the communication apparatus 10. The management apparatus 20 is a type of information processing apparatus.

The management apparatus 20 may be a server or a database owned by a public organization. For example, the management apparatus 20 may be a database (for example, a regulatory database) managed and operated by a national or regional radio administration agency. Examples of the regulatory database include Universal Licensing System (ULS) operated by Federal Communications Commissions (FCC).

In addition, when the communication system 1 is an incumbent cellular communication system, the management apparatus 20 may be an apparatus that manages a radio network. For example, the management apparatus 20 may be an apparatus that functions as a Mobility Management Entity (MME), an Access and Mobility Management Function (AMF), or a Session Management Function (SMF).

When the communication system 2 constitutes a network including the communication apparatus 10 as one of nodes, the management apparatus 20 may be a network manager that integrally controls the communication apparatus 10 in the network, for example.

Naturally, the management apparatus 20 is not limited to these examples. The function of the management apparatus 20 may be included in the communication apparatus 10. In this case, the communication apparatus 10 can be regarded as the management apparatus 20.

In addition, the management apparatus 20 may have a function of a communication control apparatus. In this case, the management apparatus 20 can be regarded as the communication control apparatus 60.

FIG. 12 is a diagram illustrating a configuration example of the management apparatus 20 according to an embodiment of the present disclosure. The management apparatus 20 includes a communication unit 21, a storage unit 22, and a control unit 23. Note that the configuration illustrated in FIG. 2 is a functional configuration, and the hardware configuration may be different from this. In addition, the functions of the management apparatus 20 may be implemented in a distributed manner in a plurality of physically separated configurations.

The communication unit 21 is a communication interface for communicating with other apparatuses. The communication unit 21 may be a network interface or a device connection interface. For example, the communication unit 21 may be a local area network (LAN) interface such as a network interface card (NIC), or may be a universal serial bus (USB) interface including a USB host controller, a USB port, and the like. In addition, the communication unit 21 may be a wired interface or a wireless interface. The communication unit 21 functions as a communication means of the management apparatus 20. The communication unit 21 communicates with the communication apparatus 10 under the control of the control unit 23.

The storage unit 22 is a data readable/writable storage apparatus such as DRAM, SRAM, flash memory, and a hard disk.

The control unit 23 is a controller that controls individual parts of the management apparatus 20. The control unit 23 is implemented by a processor such as a CPU or an MPU, for example. For example, the control unit 23 is implemented by the processor executing various programs stored in the storage apparatus inside the management apparatus 20 using RAM or the like as a work area. Note that the control unit 23 may be implemented by an integrated circuit such as an ASIC or an FPGA. The CPU, MPU, ASIC, and FPGA can all be regarded as controllers.

As described above, the communication apparatus 10 can be regarded as the management apparatus 20. In this case, the description of the "management apparatus 20" in the following description can be appropriately replaced with the "communication apparatus 10".

<2-4. Configuration of communication apparatus>

Next, a configuration of the communication apparatus 30 included in the communication system 2 will be described.

The communication apparatus 30 is a communication apparatus (wireless system) that performs wireless communication with the base station 40, the communication control apparatus 60, or another communication apparatus 30. The communication apparatus 30 is a type of information processing apparatus.

The communication apparatus 30 of the present embodiment is typically a mobile communication apparatus. The mobile communication apparatus is a movable wireless communication apparatus (that is, a portable/mobile wireless communication apparatus). For example, the mobile communication apparatus is a communication apparatus capable of flying (flight-type communication apparatus). Alternatively, the mobile communication apparatus is a communication apparatus capable of traveling on the ground (traveling communication apparatus). In the following description, not only a mobile wireless communication apparatus but also a portable wireless communication apparatus will be referred to as a mobile communication apparatus.

In a case where the communication apparatus 30 is a mobile communication apparatus, the communication apparatus 30 may be a wireless communication apparatus installed in a mobile body or may be a mobile body itself. The communication apparatus 30 may be a vehicle that moves on a road, such as an automobile, a bus, a truck, or a motorbike, or may be a wireless communication apparatus mounted on the vehicle. The mobile body may be a mobile terminal, or may be a mobile body that moves on land (on the ground in a narrow sense), in the ground, on water, or under water. The mobile body may be a mobile body that moves inside the atmosphere, such as an aircraft, airship, balloon, or a helicopter, or may be a mobile body that moves outside the atmosphere, such as an artificial satellite. The mobile body may be an unmanned aerial vehicle (UAV) such as a drone. The communication apparatus 30 may be a wireless communication apparatus mounted on a mobile body.

The communication apparatus 30 may be another non-terrestrial communication apparatus (non-terrestrial station). The non-terrestrial communication apparatus is a communication apparatus capable of floating in the air or space. At this time, the communication apparatus 30 may be an aircraft station or a satellite station.

The aircraft station is a wireless communication apparatus capable of floating in the atmosphere, such as an aircraft. The aircraft station may be an apparatus mounted on an aircraft or the like, or may be an aircraft itself. The aircraft conceptually includes not only heavy aircraft such as an airplane or a glider but also light aircraft such as a balloon or an airship. The aircraft conceptually includes not only a heavy aircraft or a light aircraft but also a rotorcraft such as a helicopter or an auto-gyro. The aircraft station or an aircraft equipped with an aircraft station may be an unmanned aircraft such as a drone.

The unmanned aircraft conceptually includes an Unmanned Aircraft System (UAS) and a tethered UAS. The unmanned aircraft conceptually includes also a Lighter-than-Air (LTA) unmanned aircraft system (UAS) and a Heavier-than-Air (HTA) unmanned aircraft system (UAS). The unmanned aircraft conceptually includes also High Altitude unmanned aircraft system (UAS) platforms (HAPs).

The satellite station is a satellite station capable of floating outside the atmosphere. The satellite station may be an apparatus mounted on a space mobile body such as an artificial satellite, or may be a space mobile body itself. A space mobile body is a mobile body that moves outside the atmosphere. Examples of the space mobile body include artificial bodies such as artificial satellites, spacecraft, space stations, or probes. The satellite serving as the satellite station may be any of a low earth orbiting (LEO) satellite, a medium earth orbiting (MEO) satellite, a geostationary earth orbiting (GEO) satellite, or a highly elliptical orbiting (HEO) satellite. The satellite station may be an apparatus mounted on a low earth orbiting satellite, a medium earth orbiting satellite, a geostationary earth orbiting satellite, or a highly elliptical orbiting satellite.

Additionally, the communication apparatus 30 can be implemented by employing any form of information processing apparatus (computer). For example, the communication apparatus 30 may be a mobile terminal such as a mobile phone, a smart device (smartphone or tablet), a personal digital assistant (PDA), or a laptop PC. The communication apparatus 30 may be an imaging apparatus (for example, a camcorder) having a communication function. The communication apparatus 30 may be a motorcycle, a moving relay vehicle, or the like, equipped with a communication apparatus such as the field pickup unit (FPU). The communication apparatus 30 may be a wearable device such as a smart watch.

The communication apparatus 30 may be an xR device such as an augmented reality (AR) device, a virtual reality (VR) device, or a mixed reality (MR) device. At this time, the xR device may be an eyeglass-type device such as AR glasses or MR glasses, or may be a head-mounted device such as a VR head-mounted display. In a case where the communication apparatus 30 is an xR device, the communication apparatus 30 may be a standalone device including only a portion worn on the user (for example, an eyeglass portion). In addition, the communication apparatus 30 may be a terminal-linked device including the portion worn on the user (for example, the eyeglass portion) and a terminal portion (for example, a smart device) linked with the portion worn on the user.

The communication apparatus 30 is not limited to a movable communication apparatus (portable/mobile communication apparatus). The communication apparatus 30 may be a stationary communication apparatus installed in a structure. The communication apparatus 30 may be a sensor installed in a machine or a building of a factory, such as a sensor used for communication referred to as Machine Type Communication (MTC). In the example of FIG. 7, the communication apparatus $30_3$ is a stationary communication apparatus.

For example, the communication apparatus 30 may be a Machine to Machine (M2M) device or an Internet of Things (IoT) device. The communication apparatus 30 may be an apparatus having a relay communication function as represented by Device to Device (D2D) and Vehicle to everything (V2X). In addition, the communication apparatus 30 may be an apparatus referred to as Customer Premises Equipment (CPE) used in a radio backhaul or the like. In addition, the base station 40 to be described below can also be regarded as a type of the communication apparatus 30. The information processing apparatus 50 to be described below, when provided with the communication function, can also be regarded as a type of the communication apparatus 30.

The communication apparatus 30 may be capable of Non-Orthogonal Multiple Access (NOMA) communication with the base station 40. When performing communication with other communication apparatuses (for example, the base station 40), the communication apparatus 30 may be able to use an automatic retransmission technology such as Hybrid Automatic Repeat reQuest (Hybrid ARQ (HARQ)). The communication apparatus 30 may be capable of sidelink communication with another communication apparatus 30. The communication apparatus 30 may be capable of using an automatic retransmission technology such as HARQ when performing sidelink communication. The communication apparatus 30 may be able to perform NOMA communication when performing sidelink communication with another communication apparatus 30. The communication apparatus 30 may be capable of Low Power Wide Area (LPWA) communication with other wireless communication apparatuses such as the base station 40. The wireless communication used by the communication apparatus 30 may be wireless communication using millimeter waves. The wireless communication (including sidelink communication) used by the communication apparatus 30 may be wireless communication using radio waves or wireless communication using infrared rays or visible light, namely, optical wireless communication.

The communication apparatus 30 may be capable of performing communication while being simultaneously connected to a plurality of base stations 40 or a plurality of cells. For example, when one base station 40 supports a communication area via a plurality of cells (for example, pCell and sCell), it is possible to combine the plurality of cells and communicate between the base station 40 and the communication apparatus 30 by using a carrier aggregation (CA) technology, a dual connectivity (DC) technology, or a multi-connectivity (MC) technology. Alternatively, the communication apparatus 30 and the plurality of base stations 40 can communicate with each other by a Coordinated Multi-Point Transmission and Reception (CoMP) technology via cells of different base stations 40.

The communication apparatus 30 may be a relay terminal that relays communication to a remote terminal. The communication apparatus 30 may be referred to as User Equipment, User Terminal, User Station, Mobile Terminal, Mobile Station, or the like. The communication apparatus 30 may also be referred to as MTC UE, NB-IoT UE, or Cat. M UE, for example. The communication apparatus 30 may be referred to as a Client Device.

In the present embodiment, unless otherwise noted, the communication apparatus 30 corresponds to an entity that terminates a radio link using the spectrum that requires permission of the communication control apparatus 60. However, the communication apparatus 30 can perform an operation equivalent to that of the communication apparatus depending on a function included in the communication apparatus 30 or a network topology to be applied. In other words, at implementation of the technology disclosed in the present embodiment, the communication apparatus may be referred to as a terminal apparatus or the terminal apparatus may be referred to as a communication apparatus, depending on the network topology.

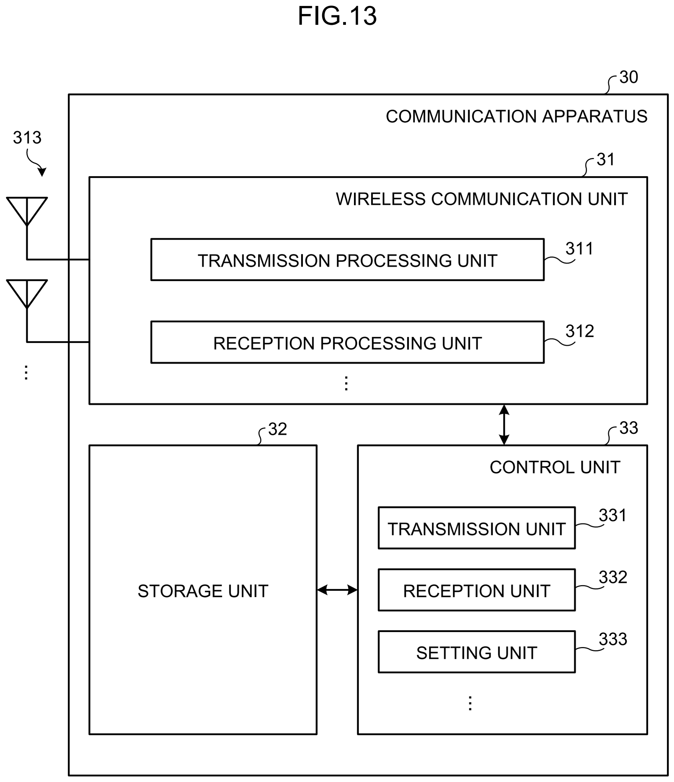

FIG. 13 is a diagram illustrating a configuration of the communication apparatus 30 according to the present embodiment. The communication apparatus 30 includes a wireless communication unit 31, a storage unit 32, and a control unit 33. The configuration illustrated in FIG. 13 is a functional configuration, and the hardware configuration may be different from this. The functions of the communication apparatus 30 may be implemented in a distributed manner in a plurality of physically separated configurations.

The wireless communication unit 31 is a signal processing unit for performing wireless communication with other wireless communication apparatuses (for example, the base station 40 and another communication apparatus 30). The wireless communication unit 31 is controlled by the control unit 33. The wireless communication unit 31 may support one or more radio access methods. The wireless communication unit 31 may support at least one of NR, LTE, and 6G. The wireless communication unit 31 may support W-CDMA, cdma2000, and the like in addition to NR, LTE, and 6G. The wireless communication unit 31 may support an automatic retransmission technology such as Hybrid Automatic Repeat reQuest (HARQ).

The wireless communication unit 31 may be configured to be communicable using a radio access technology (wireless communication method) other than LTE, NR, and 6G. For example, the wireless communication unit 31 may be configured to be compatible with Wi-Fi and Bluetooth. In addition, the communication apparatus 30 may be configured to be communicable using Low Power Wide Area (LPWA) communication. In addition, the communication apparatus 30 may be configured to be communicable using wireless communication of a proprietary standard.

Here, LPWA communication is wireless communication that enables low-power wide-range communication. For example, the LPWA wireless is Internet of Things (IoT) wireless communication using a specified low power wireless (for example, the 920 MHz band) or an Industry-Science-Medical (ISM) band. The LPWA communication used by the communication apparatus 30 may conform to the LPWA standard. Examples of the LPWA standard include ELTRES, ZETA, SIGFOX, LoRaWAN, and NB-Iot. Naturally, the LPWA standard is not to be limited thereto, and may be other LPWA standards.

The wireless communication unit 31 includes a transmission processing unit 311, a reception processing unit 312, and an antenna 313. The wireless communication unit 31 may include a plurality of the transmission processing units 311, a plurality of the reception processing units 312, and a plurality of the antennas 313. When the wireless communication unit 31 supports a plurality of radio access methods, individual portions of the wireless communication unit 31 may be configured separately for each of the radio access methods. The transmission processing unit 311 and the reception processing unit 312 may be configured separately for LTE, NR, and 6G. The antenna 313 may include a plurality of antenna elements, for example, a plurality of patch antennas. The wireless communication unit 31 may have a beamforming function. For example, the wireless communication unit 31 may have a polarization beamforming function using vertically polarized waves (V-polarized waves) and horizontally polarized waves (H-polarized waves) (or may have a polarization beamforming function using dual polarization in polarization directions of 45 degrees and - 45 degrees with the vertical direction).

The storage unit 32 is a readable/writable storage apparatus such as DRAM, SRAM, flash memory, or a hard disk. The storage unit 32 functions as a storage means for the communication apparatus 30.

The control unit 33 is a controller that controls individual parts of the communication apparatus 30. The control unit 33 controls the wireless communication unit to perform wireless communication with another wireless communication apparatus (for example, the base station 40 or another communication apparatus 30). The control unit 33 may be implemented by a processor such as a CPU or an MPU. Specifically, the control unit 33 is implemented by the processor executing various programs stored in the storage apparatus inside the communication apparatus 30 using RAM or the like as a work area. The control unit 33 may be implemented by an integrated circuit such as an ASIC or an FPGA. The CPU, MPU, ASIC, and FPGA can all be regarded as controllers. The control unit 33 may be implemented by a GPU. The CPU, MPU, ASIC, FPGA, and GPU can all be regarded as controllers. The control unit 33 may include a plurality of physically separated objects. For example, the control unit 33 may include a plurality of semiconductor chips.

The control unit 33 includes a transmission unit 331, a reception unit 332, and a setting unit 333. Each of blocks (transmission unit 331 to setting unit 333) constituting the control unit 33 is a functional block indicating a function of the control unit 33. These functional blocks may be software blocks or hardware blocks. For example, each of the functional blocks described above may be one software module implemented by software (including a microprogram) or one circuit block on a semiconductor chip (die). Naturally, each of the functional blocks may be formed as one processor or one integrated circuit. Note that the control unit 33 may be configured in a functional unit different from the above-described functional block. The functional block may be configured by using any method.

The operation of each block (the transmission unit 331, the reception unit 332, and the setting unit 333) of the control unit 33 may be similar to each block (a transmission unit 531, a reception unit 532, and a setting unit 533) of the control unit 53 included in the information processing apparatus 50 described below.

<2-5. Configuration of base station>

Next, a configuration of the base station 40 included in the communication system 2 will be described.

The base station 40 is a communication apparatus (wireless system) that performs wireless communication with other wireless communication apparatuses (for example, the communication apparatus 30 or another base station 40). The base station 40 may wirelessly communicate with the communication apparatus 30 via a relay station, or may directly perform wireless communication with the communication apparatus 30. The base station 40 is a type of information processing apparatus. The base station 40 is a type of communication apparatus. When the base station 40 is movable, the base station 40 is also a type of "movable communication apparatus" of the present embodiment.

The base station 40 is an apparatus corresponding to a radio base station (Base Station, Node B, eNB, gNB, or 6GNB, etc.) or a radio Access Point. The base station 40 may be a radio relay station. The base station 40 may be an optical link apparatus referred to as a Remote Radio Head (RRH). The base station 40 may be a receiving station such as a Field Pickup Unit (FPU). The base station 40 may be an Integrated Access and Backhaul (IAB) donor node or an IAB relay node that provides a radio access channel and a radio backhaul channel by using time division multiplexing, frequency division multiplexing, or space division multiplexing.

The radio access technology used by the base station 40 may be a cellular communication technology. The radio access technology used by the base station 40 may be a wireless LAN technology. For example, the radio access technology used by the base station 40 may be a low power wide area (LPWA) communication technology. Note that the radio access technology used by the base station 40 is not limited thereto, and may be other radio access technologies. The wireless communication used by the base station 40 may be wireless communication using a millimeter wave or wireless communication using a terahertz wave (THz wave). The wireless communication used by the base station 40 may be wireless communication using radio waves or wireless communication (optical wireless communication) using infrared rays or visible light. The base station 40 may be capable of Non-Orthogonal Multiple Access (NOMA) communication with the communication apparatus 30. Here, NOMA communication refers to communication (transmission, reception, or both) using non-orthogonal resources. Note that the base station 40 may be capable of performing NOMA communication with another base station 40.

The base station 40 may be capable of performing mutual communication with the core network via a base station-core network interface (for example, NG Interface, S1 Interface, or the like). This interface may be implemented as wired or wireless interface. In addition, the base stations may be capable of performing mutual communication with another base station by an inter-base station interface (for example, Xn Interface, X2 Interface, F1 Interface, or the like). This interface may be implemented as wired or wireless interface.

The base station (also referred to as a "base station apparatus") conceptually includes not only a donor base station but also a relay base station (also referred to as a "relay station"). The relay base station may be any one of RF Repeater, Smart Repeater, and Intelligent Surface. A base station conceptually includes not only a structure having a function of a base station but also an apparatus installed in the structure.

Examples of the structure include a building such as a high-rise building, a house, a steel tower, a station facility, an airport facility, a harbor facility, an office building, a school building, a hospital, a factory, a commercial facility, or a stadium. The structure conceptually includes not only buildings but also non-building structures such as tunnels, bridges, dams, fences, and steel columns, as well as facilities such as cranes, gates, and windmills. The structure conceptually includes not only land-based (ground-based, in a narrow sense) structures or underground structures but also structures on the water, such as a jetty or a mega-float, and underwater structures such as an ocean observation facility. The base station can also be rephrased as an information processing apparatus.

The base station 40 may be a donor station or a relay station. The base station 40 may be a stationary station or a mobile station. The mobile station is a wireless communication apparatus (for example, a base station) configured to be movable. At this time, the base station 40 may be an apparatus installed on a mobile body, or may be a mobile body itself. For example, a relay station having mobility can be regarded as the base station 40 as a mobile station. In addition, an apparatus designed to have mobility, such as an Unmanned Aerial Vehicle (UAV) represented by a drone, or a smartphone, and having a function of a base station (at least a part of the function of a base station) also corresponds to the base station 40 as a mobile station.

Here, the mobile body may be a mobile terminal such as a smartphone or a mobile phone. The mobile body may be a mobile body that moves on the land (ground in a narrow sense) (for example, a vehicle such as an automobile, a motorcycle, a bus, a truck, a motorbike, a train, or a linear motor car), or a mobile body (for example, subway) that moves under the ground (for example, through a tunnel). The mobile body may be a mobile body that moves on the water (for example, a ship such as a passenger ship, a cargo ship, or a hovercraft), or a mobile body that moves underwater (for example, a submersible ship such as a submersible boat, a submarine, or an unmanned submarine). The mobile body may be a mobile body that moves in the atmosphere (for example, an aircraft such as an airplane, an airship, or a drone).

The base station 40 may be a terrestrial base station (terrestrial station) installed on the ground. The base station 40 may be a base station disposed on a structure on the ground, or may be a base station installed in a mobile body moving on the ground. The base station 40 may be an antenna installed in a structure such as a building and a signal processing apparatus connected to the antenna. The base station 40 may be a structure or a mobile body itself. The "ground" represents not only a land (ground in a narrow sense) but also a terrestrial location in a broad sense including underground, above-water, and underwater. The base station 40 is not limited to a terrestrial base station. In a case where the communication system 1 is a satellite communication system, the base station 40 may be an aircraft station. From the perspective of a satellite station, an aircraft station located on the earth is a terrestrial station.

The base station 40 is not limited to a terrestrial station. The base station 40 may be a non-terrestrial base station apparatus (non-terrestrial station) capable of floating in the air or space. The base station 40 may be an aircraft station or a satellite station.

As described above, the base station 40 may be a relay station. The relay station is an aeronautical station or an earth station, for example. The relay station apparatus can be regarded as a type of the above-described relay apparatus. The aeronautical station is a radio station installed on the ground or a mobile body moving on the ground in order to communicate with an aircraft station apparatus. In addition, the earth station is a radio station located on the earth (including air) in order to communicate with the satellite station apparatus. The earth station may be a large earth station or a small earth station such as a Very Small Aperture Terminal (VSAT).

Note that the earth station may be a VSAT control earth station (also referred to as a master station or a HUB station) or may be a VSAT earth station (also referred to as a slave station). In addition, the earth station may be a radio station installed in a mobile body moving on the ground. Examples of an earth station mounted on a ship include Earth Stations on board Vessels (ESV). In addition, the earth station may include an aircraft earth station that is installed in an aircraft (including a helicopter) and that communicates with a satellite station. In addition, the earth station may include an aeronautical earth station that is installed on a mobile body moving on the ground and that communicates with the aircraft earth station via a satellite station. Note that the relay station apparatus may be a mobile radio station that communicates with a satellite station or an aircraft station.

The coverage of the base station 40 may be relatively large such as a macro cell or relatively small such as a pico cell. The coverage of the base station 40 may be extremely small such as a femto cell. The base station 40 may have a beamforming function. In this case, the base station 40 may form a cell or a service area for each beam. Furthermore or alternatively, the base station 40 may have a function of delivering a desired wave to a predetermined pinpoint target position by an additional consideration of distance information from an antenna of the base station 40 in addition to beamforming that provides directivity to a beam. This function may be referred to as beam focusing or point forming.

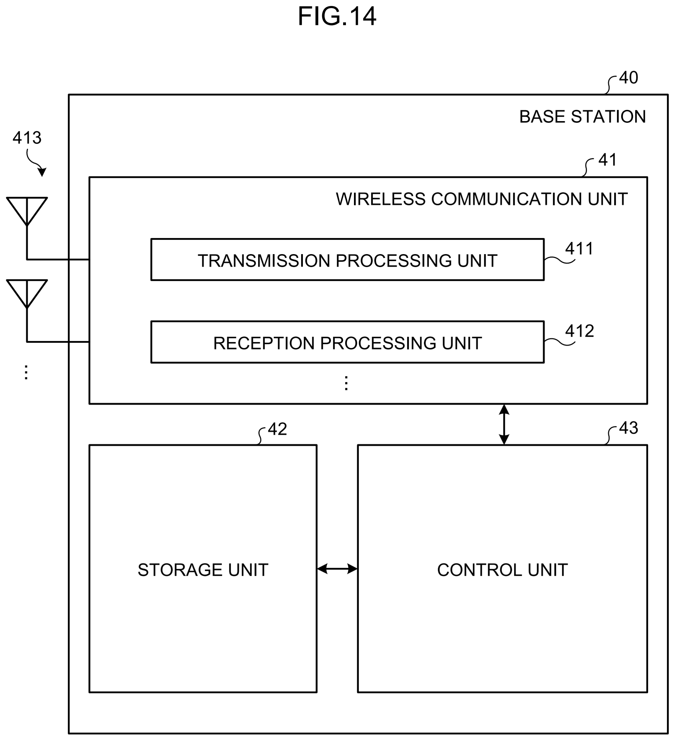

FIG. 14 is a diagram illustrating a configuration of the base station 40 according to the present embodiment. The base station 40 includes a wireless communication unit 41, a storage unit 42, and a control unit 43. The configuration illustrated in FIG. 14 is a functional configuration, and the hardware configuration may be different from this configuration. In addition, the functions of the base station 40 may be implemented in a distributed form in a plurality of physically separated configurations.

The wireless communication unit 41 is a signal processing unit for performing wireless communication with other wireless communication apparatuses (for example, the communication apparatus 30 or another base station 40). The wireless communication unit 41 is controlled by the control unit 43. The wireless communication unit 41 may support one or more radio access methods. The wireless communication unit 41 may support at least one of NR, LTE, and 6G. The wireless communication unit 41 may support W-CDMA, cdma2000, and the like in addition to NR, LTE, and 6G. The wireless communication unit 41 may support an automatic retransmission technology such as Hybrid Automatic Repeat reQuest (HARQ).

The wireless communication unit 41 includes a transmission processing unit 411, a reception processing unit 412, and an antenna 413. The wireless communication unit 41 may include a plurality of the transmission processing units 411, a plurality of the reception processing units 412, and a plurality of the antennas 413. In a case where the wireless communication unit 41 supports a plurality of radio access methods, individual portions of the wireless communication unit 41 may be configured separately for each of the radio access methods. The transmission processing unit 411 and the reception processing unit 412 may be configured separately for LTE, NR, and 6G. The antenna 413 may include a plurality of antenna elements, for example, a plurality of patch antennas. The wireless communication unit 41 may have a beamforming function. For example, the wireless communication unit 41 may have a polarization beamforming function using vertically polarized waves (V-polarized waves) and horizontally polarized waves (H-polarized waves) (or may have a polarization beamforming function using dual polarization in polarization directions of 45 degrees and - 45 degrees with the vertical direction).

The transmission processing unit 411 performs transmission processing of downlink control information and downlink data. The transmission processing unit 411 codes the downlink control information and the downlink data input from the control unit 43 by using a coding scheme such as block coding, convolutional coding, or turbo coding. The coder may perform coding using a polar code or a Low Density Parity Check (LDPC) code. The transmission processing unit 411 modulates the coded bits by a predetermined modulation scheme such as BPSK, QPSK, 16 QAM, 64 QAM, or 256 QAM. In this case, the signal points on the constellation do not necessarily have to be equidistant. The constellation may be a non uniform constellation (NUC). The transmission processing unit 411 multiplexes the modulation symbol of each of channels and the downlink reference signal and allocates the multiplexed signals on a predetermined resource element. Subsequently, the transmission processing unit 411 performs various types of signal processing on the multiplexed signal. For example, the transmission processing unit 411 performs processing such as conversion to the frequency domain using fast Fourier transform, addition of a guard interval (cyclic prefix), generation of a baseband digital signal, conversion to an analog signal, quadrature modulation, upconvert, removal of extra frequency components, and power amplification. The signal generated by the transmission processing unit 411 is transmitted from the antenna 413.

The reception processing unit 412 processes an uplink signal received via the antenna 413. For example, the reception processing unit 412 performs processing on the uplink signal, such as down-conversion, removal of unnecessary frequency components, amplification level control, quadrature demodulation, conversion to digital signal, removal of guard interval (cyclic prefix), and frequency domain signal extraction using fast Fourier transform. The reception processing unit 412 Subsequently demultiplexes an uplink channel such as a physical uplink shared channel (PUSCH) or a physical uplink control channel (PUCCH) and an uplink reference signal from the signal that has undergone these processing procedures. Subsequently, the reception processing unit 412 demodulates a received signal using a modulation scheme such as binary phase shift keying (BPSK) or quadrature phase shift keying (QPSK) for the modulation symbol of the uplink channel. The modulation scheme used in the demodulation may be 16 quadrature amplitude modulation (QAM), 64 QAM, or 256 QAM. In this case, the signal points on the constellation do not necessarily have to be equidistant. The constellation may be a non-uniform constellation (NUC). Subsequently, the reception processing unit 412 performs decoding processing on the coded bits of the demodulated uplink channel. The decoded uplink data and uplink control information are output to the control unit 43.

The antenna 413 is an antenna apparatus that performs mutual conversion of a current and a radio wave. The antenna 413 may include one antenna element, for example, one patch antenna. Furthermore, the antenna 413 may include a plurality of antenna elements (for example, a plurality of patch antennas). In a case where the antenna 413 includes a plurality of antenna elements, the wireless communication unit 41 may have a beamforming function. The wireless communication unit 41 may control the directivity of a radio signal using a plurality of antenna elements to generate a directional beam. The antenna 413 may be a dual polarization antenna. In a case where the antenna 413 is a dual polarization antenna, the wireless communication unit 41 may use, in radio signal transmission, vertically polarized waves (V-polarized waves) and horizontally polarized waves (H-polarized waves) (or dual polarization in polarization direction at 45 degrees and -45 degrees with the vertical direction). The wireless communication unit 41 may control directivity of a radio signal transmitted using vertically polarized waves and horizontally polarized waves (or dual polarization in polarization direction at 45 degrees and -45 degrees with vertical direction). In addition, the wireless communication unit 41 may transmit and receive spatially multiplexed signals via a plurality of layers including a plurality of antenna elements.

The storage unit 42 is a readable/writable storage apparatus such as DRAM, SRAM, flash memory, or a hard disk. The storage unit 42 stores desired transmission power information, operation parameters, resource holding information, and the like.

The desired transmission power information is information regarding transmission power requested by the base station 40 for information regarding transmission power necessary for transmission of radio waves, to the communication control apparatus 60.

The operation parameter is information (for example, the setting information) related to the radio transmission operation of the base station 40. For example, the operation parameter is information regarding the maximum value of the transmission power (maximum allowable transmission power) allowed for the base station 40. Naturally, the operation parameter is not limited to the information of the maximum allowable transmission power.

In addition, the resource holding information is information related to holding of radio resources of the base station 40. For example, the resource holding information is information of radio resources currently usable by the base station 40. For example, the resource holding information is information regarding a holding amount of the interference margin allocated from the communication control apparatus 60 to the base station 40. The information regarding the holding amount may be information in units of resource blocks described below. That is, the resource holding information may be information related to the resource block held by the base station 40 (for example, the resource block holding amount).

The control unit 43 is a controller that controls individual parts of the base station 40. The control unit 43 controls the wireless communication unit to perform wireless communication with another wireless communication apparatus (for example, the communication apparatus 30 or another base station 40). The control unit 43 may be implemented by a processor such as a CPU or an MPU. Specifically, the control unit 43 may be implemented by a processor executing various programs stored in a storage apparatus inside the base station 40 using the RAM or the like as a work area. The control unit 43 may be implemented by an integrated circuit such as an ASIC or an FPGA. The control unit 43 may be implemented by a GPU. The CPU, MPU, ASIC, FPGA, and GPU can all be regarded as controllers. The control unit 43 may include a plurality of physically separated objects. For example, the control unit 43 may include a plurality of semiconductor chips.

In some embodiments, the base station 40 may be configured by a set of a plurality of physical or logical apparatuses. As an example, the base station 40 in the present embodiment may be classified into a plurality of apparatuses such as a Baseband Unit (BBU) and a Radio Unit (RU). The base station 40 may be construed as a set of the plurality of apparatuses. In addition, the base station may be either one or both of the BBU and the RU. The BBU and the RU may be connected to each other via a predetermined interface (for example, an enhanced Common Public Radio Interface (eCPRI)).

The RU may be referred to as a Remote Radio Unit (RRU) or a Radio DoT (RD). The RU may support a gNB Distributed Unit (gNB-DU) described below. The BBU may support a gNB Central Unit (gNB-CU) described below. The RU may be an apparatus integrally formed with an antenna. An antenna of the base station 40, for example, an antenna integrally formed with an RU, may employ an Advanced Antenna System and support MIMO (for example, FD-MIMO) or beamforming. For example, the antenna of the base station 40 may include 64 transmitting antenna ports and 64 receiving antenna ports.

The antenna mounted on the RU may be an antenna panel including one or more antenna elements, and the RU may include one or more antenna panels. The RU may be equipped with two types of antenna panels: an antenna panel of a horizontally polarized wave and an antenna panel of a vertically polarized wave. The RU may be equipped with two types of antenna panels, that is, a right-handed circularly polarized antenna panel and a left-handed circularly polarized antenna panel, or an antenna panel with a polarization direction of 45 degrees with the vertical direction and an antenna panel with a polarization direction of -45 degrees with the vertical direction. A plurality of antennas having the plurality of polarization directions may be mounted on one antenna panel. The RU may form and control an independent beam for each antenna panel.

The plurality of base stations 40 may be connected to each other. One or more base stations 40 may be included in a Radio Access Network (RAN). That is, the base station 40 may be simply referred to as a RAN, a RAN node, an Access Network (AN), an AN node, or the like. RAN in LTE is sometimes referred to as Enhanced Universal Terrestrial RAN (EUTRAN). RAN in NR may be referred to as NGRAN. In addition, RAN in 6G may be referred to as 6GRAN. RAN in W-CDMA (UMTS) may be referred to as UTRAN.

The base station 40 in LTE may be referred to as Evolved Node B (eNodeB) or eNB. That is, EUTRAN includes one or more eNodeB (eNB). The base station 40 in NR may be referred to as gNodeB or gNB. At this time, NGRAN contains one or more gNBs. A 6G base station may be referred to as a 6GNodeB, a 6gNodeB, a 6GNB, or a 6gNB. At this time, 6GRAN contains one or more 6GNBs. EUTRAN may include gNB (en-gNB) connected to the core network (EPC) in LTE communication systems (EPS). NGRAN may include an ng-eNB connected to the core network 5GC in a 5G communication system (5GS).

When the base station 40 is eNB, gNB, 6GNB or the like, the base station 40 may be referred to as 3GPP Access. When the base station 40 is a radio Access Point, the base station 40 may be referred to as Non-3GPP Access. The base station 40 may be an optical link apparatus referred to as a Remote Radio Head (RRH). Furthermore, in a case where the base station 40 is a gNB, the base station 40 may be a combination of the gNB-CU and the gNB-DU described above, or may be any of the gNB-CU and the gNB-DU.

Here, in order to have a communication with the UE, the gNB-CU hosts a plurality of upper layers (for example, Radio Resource Control (RRC), Service Data Adaptation Protocol (SDAP), and Packet Data Convergence Protocol (PDCP)) in an access stratum. On the other hand, the gNB-DU hosts a plurality of lower layers (for example, Radio Link Control (RLC), Medium Access Control (MAC), and Physical Layer (PHY)) in an access stratum. That is, among messages/information to be described below, RRC signaling (semi-static notification) may be generated by the gNB-CU, while MAC CE and DCI (dynamic notification) may be generated by the gNB-DU. Alternatively, among the RRC configurations (semi-static notifications), part of configurations such as IE: cellGroupConfig may be generated by the gNB-DU, while the remaining configurations may be generated by the gNB-CU, for example. These configurations may be transmitted and received via an F1 interface described below.

The base station 40 may be configured to be communicable with another base station. When the base stations 40, provided in plurality, are eNBs or a combination of an eNB and an en-gNB, these base stations 40 may be connected by an X2 interface. When the base stations 40, provided in plurality, are gNBs or a combination of a gn-eNB and a gNB, these base stations 40 may be connected by an Xn interface. When the base stations 40, provided in plurality, are a combination of a gNB-CU and a gNB-DU, these base stations 40 may be interconnected by the F1 interface described above. A message/information (for example, RRC signaling, MAC Control Element (MAC CE), Downlink Control Information (DCI), or the like) to be described below may be transmitted among the plurality of base stations 40 via an interface such as an X2 interface, an Xn interface, an F1 interface, for example.

The cell provided by the base station 40 may be referred to as a serving cell. The serving cell conceptually includes a Primary Cell (PCell) and a Secondary Cell (SCell). When dual connectivity is provided to the communication apparatus 30, the PCell provided by a Master Node (MN) and zero or one or more SCells may be referred to as a Master Cell Group. Examples of dual connectivity include EUTRA-EUTRA Dual Connectivity, EUTRA-NR Dual Connectivity (ENDC), EUTRA-NR Dual Connectivity with 5GC, NR-EUTRA Dual Connectivity (NEDC), and NR-NR Dual Connectivity, etc. Examples of the dual connectivity further include NR-6G Dual Connectivity and 6G-NR Dual Connectivity.

The serving cell may include a Primary Secondary Cell or Primary SCG Cell (PSCell). In a case where dual connectivity is provided to the communication apparatus 30, the PSCell and the zero or one or more SCells provided by a Secondary Node (SN) may be referred to as Secondary Cell Group (SCG). Unless specially configured (for example, PUCCH on SCell), a physical uplink control channel (PUCCH) is transmitted by the PCell and the PSCell, but is not transmitted by the SCell. The Radio Link Failure is also detected by the PCell and the PSCell, but is not detected by the SCell (need not be detected). In this manner, since the PCell and the PSCell have a special role in the serving cell, these cells are also referred to as Special Cells (SpCells).

One cell may be associated with one downlink component carrier and one uplink component carrier. The system bandwidth corresponding to one cell may be divided into a plurality of Bandwidth Parts (BWPs). In this case, one or more BWPs may be configured for the communication apparatus 30, and one BWP may be used for the communication apparatus 30 as an active BWP. Radio resources (for example, a frequency band, a numerology (subcarrier spacing), and a slot format (slot configuration)) usable by the communication apparatus 30 may be different for each cell, each component carrier, or each BWP.

<2-6. Configuration of information processing apparatus>

Next, a configuration of the information processing apparatus 50 will be described.

The information processing apparatus 50 is an apparatus that manages or controls one or more communication apparatuses 30. The information processing apparatus 50 is, for example, a management apparatus/control apparatus provided by a business operator (or user) who manipulates or operates the communication apparatus 30. Note that the base station 40 described above can also be regarded as a type of the information processing apparatus 50 as long as the base station 40 has a function of manipulating or operating the communication apparatus 30. The communication apparatus 30 may be regarded as a type of the information processing apparatus 50. In addition, a communication control apparatus 60 to be described below may function as the information processing apparatus 50.

The information processing apparatus 50 is, for example, a server apparatus used by a business operator to manage the operation of the communication apparatus 30 (for example, a mobile communication apparatus). For example, the information processing apparatus 50 may be a computer that performs processing related to automatic traveling/automatic flight of the communication apparatus 30. The information processing apparatus 50 can be implemented by employing any form of computer. The information processing apparatus 50 may be a PC server, a midrange server, or a mainframe server. The information processing apparatus 50 may be computer that performs data processing (edge processing) near the user or the terminal. For example, the information processing apparatus 50 may be a computer provided close to or built in the base station 40. The information processing apparatus 50 may be a computer that performs cloud computing. The information processing apparatus 50 of the present embodiment can function as an application function.

In addition, the information processing apparatus 50 may be a proportional system used by the user to operate the communication apparatus 30 (for example, a mobile communication apparatus). At this time, the information processing apparatus 50 may be a dedicated manipulation apparatus, or may be a general-purpose manipulation apparatus such as a mobile phone, a smart device (smartphone or tablet), a Personal Digital Assistant (PDA), or a personal computer. The information processing apparatus 50 may be a controller with a display or a joystick with a display.

The information processing apparatus 50 may be an apparatus that manages communication of the base station 40. The information processing apparatus 50 may be an apparatus having a function as a Mobility Management Entity (MME), for example. The information processing apparatus 50 may be an apparatus having a function as an Access and Mobility Management Function (AMF) and/or a Session Management Function (SMF). The MME, the AMF, and the SMF are control plane network function nodes in the core network. The information processing apparatus 50 may be an apparatus having a function as a 6G control plane network function (6G CPNF). The 6G CPNF may include one or more logical nodes.

Naturally, the functions of the information processing apparatus 50 are not to be limited to MME, AMF, SMF, or 6G CPNF. The information processing apparatus 50 may be an apparatus having a function as a Network Slice Selection Function (NSSF), an Authentication Server Function (AUSF), a Policy Control Function (PCF), or Unified Data Management (UDM). In addition, the information processing apparatus 50 may be an apparatus having a function as a Home Subscriber Server (HSS).

The information processing apparatus 50 may have a function of a gateway. For example, the information processing apparatus 50 may have a function as a Serving Gateway (S-GW) or a Packet Data Network Gateway (P-GW). In addition, the information processing apparatus 50 may have a function as a User Plane Function (UPF). At this time, the information processing apparatus 50 may have a plurality of UPFs. The information processing apparatus 50 may be an apparatus having a function as a 6G user plane network function (6G UPNF).

The core network includes a plurality of network functions. Each network function may be integrated into one physical apparatus or distributed to a plurality of physical apparatuses. That is, the information processing apparatus 50 can be disposed in a plurality of apparatuses as distributed arrangement. Furthermore, this distributed arrangement may be controlled to be performed dynamically. The base station 40 and the information processing apparatus 50 constitute one network, and provide a wireless communication service to the communication apparatus 30. The information processing apparatus 50 is connected to the Internet, and the communication apparatus 30 can use various services provided over the Internet via the base station 40.

The information processing apparatus 50 does not necessarily have to be an apparatus constituting a core network. For example, it is assumed that the core network is a core network of Wideband Code Division Multiple Access (W-CDMA) or Code Division Multiple Access 2000 (cdma2000). At this time, the information processing apparatus 50 may be an apparatus that functions as a Radio Network Controller (RNC).

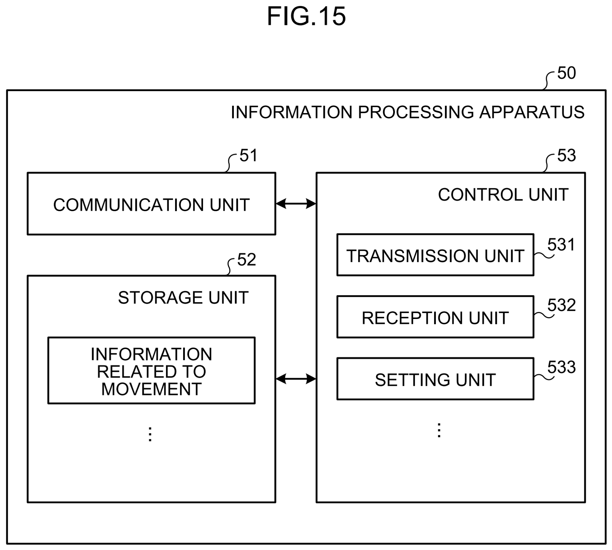

FIG. 15 is a diagram illustrating a configuration of the information processing apparatus 50 according to the present embodiment. The information processing apparatus 50 includes a communication unit 51, a storage unit 52, and a control unit 53. The configuration illustrated in FIG. 15 is a functional configuration, and the hardware configuration may be different from this. The functions of the information processing apparatus 50 may be implemented in a statically or dynamically distributed form in a plurality of physically separated configurations. The information processing apparatus 50 may be constituted with a plurality of server apparatuses.

The communication unit 51 is a communication interface for communicating with a wireless communication apparatus (for example, the communication apparatus 30 or the base station 40). The communication unit 51 may be a network interface or a device connection interface. The communication unit 51 may be a local area network (LAN) interface such as a network interface card (NIC), or may be a universal serial bus (USB) interface including a USB host controller, a USB port, and the like. The communication unit 51 may be a wired interface, or may be a wireless interface. The communication unit 51 functions as a communication means of the information processing apparatus 50. The communication unit 51 is controlled by the control unit 53.

The storage unit 52 is a readable/writable storage apparatus such as DRAM, SRAM, flash memory, or a hard disk. The storage unit 52 functions as a storage means in the information processing apparatus 50. The storage unit 52 stores, for example, a connection state of the communication apparatus 30. The storage unit 52 stores a Radio Resource Control (RRC) state and an EPS Connection Management (ECM), or a 5G system Connection Management (CM) state of the communication apparatus 30. The storage unit 52 may function as a unit referred to as "home memory" that stores position information of the communication apparatus 30. Similarly to the storage unit 42 of the base station 40, the storage unit 52 may store desired transmission power information, an operation parameter, resource holding information, etc. In addition, the storage unit 52 may store information related to movement of the communication apparatus 30. For example, the storage unit 52 may store information related to the vehicle operation plan of each of the plurality of communication apparatuses 30 as the information related to movement of the communication apparatus 30.

The control unit 53 is a controller that controls individual parts of the information processing apparatus 50. The control unit 53 may be implemented by, for example, a processor such as a CPU or an MPU. For example, the control unit 53 may be implemented by the processor executing various programs stored in the storage apparatus inside the information processing apparatus 50 using RAM or the like as a work area. The control unit 53 may be implemented by an integrated circuit such as an ASIC or an FPGA. The control unit 53 may be implemented by a GPU. The CPU, MPU, ASIC, FPGA, and GPU can all be regarded as controllers. The control unit 53 may include a plurality of physically separated objects. For example, the control unit 53 may include a plurality of semiconductor chips.

The control unit 53 includes a transmission unit 531, a reception unit 532, and a setting unit 533. Each of blocks (transmission unit 531 to setting unit 533) constituting the control unit 33 is a functional block indicating a function of the control unit 53. These functional blocks may be software blocks or hardware blocks. For example, each of the functional blocks described above may be one software module implemented by software (including a microprogram) or one circuit block on a semiconductor chip (die). Naturally, each of the functional blocks may be formed as one processor or one integrated circuit. The control unit 53 may be configured in a functional unit different from the above-described functional block. The functional block may be configured by using any method.

<2-7. Configuration of communication control apparatus>

Next, a configuration of the communication control apparatus 60 will be described.

The communication control apparatus 60 is an apparatus that manages communication of the communication apparatus (for example, the communication apparatus 30 or the base station 40). For example, the communication control apparatus 60 is an apparatus that controls wireless communication of the communication apparatus 30 or the base station 40. For example, the communication control apparatus 60 is an apparatus that determines communication parameters (also referred to as operation parameters) to be used by the base station 40 and gives permission or an instruction to the communication apparatus 30 or the base station 40. Note that the communication control apparatus 60 may control wireless communication of the communication apparatus 30 via the base station 40 or directly. The communication control apparatus 60 is a type of information processing apparatus.

The communication control apparatus 60 is, for example, a server/system referred to as a TV White Space Database (TVWSDB), Geolocation database (GLDB), Spectrum Access System (SAS), or Automated Frequency Coordination (AFC). The communication control apparatus 60 may be a network manager that integrally controls radio apparatuses within the network. In an example of definition of ETSI EN 303 387 or IEEE 802.19.1-2018, the communication control apparatus 60 may be a control apparatus such as a Spectrum Manager/Coexistence Manager that performs radio wave interference control between radio apparatuses. In addition, for example, a Registered Location Secure Server (RLSS) defined in IEEE 802.11-2016 can also work as the communication control apparatus 60. In addition, under the spectrum sharing environment, a database (database server, apparatus, and system) such as a geo-location database (GLDB) or a Spectrum Access System (SAS) can also work as the communication control apparatus 60. In addition, an Automated Frequency Coordination (AFC) system can also be the communication control apparatus 60.

Naturally, the communication control apparatus 60 is not limited to these examples. An entity that performs instruction and/or management regarding spectrum sharing may be referred to as a communication control apparatus. In addition, an entity that performs decision and/or permission of a communication parameter of the communication apparatus may be referred to as a communication control apparatus.

When the communication system 2 is a cellular communication system, the communication control apparatus 60 may be an apparatus constituting a core network. The core network CN is, for example, an Evolved Packet Core (EPC) or a 5G Core network (5GC). When the core network is the EPC, the communication control apparatus 60 may be an apparatus having a function as a Mobility Management Entity (MME), for example. When the core network is a 5GC, the communication control apparatus 60 may be an apparatus having a function as an Access and Mobility Management Function (AMF) or a Session Management Function (SMF), for example. Note that even when the communication system 2 is a cellular communication system, the communication control apparatus 60 does not necessarily have to be an apparatus constituting a core network. For example, the communication control apparatus 60 may be an apparatus having a function as a Radio Network Controller (RNC).

Note that the communication control apparatus 60 may have a function of a gateway. For example, when the core network is an EPC, the communication control apparatus 60 may be an apparatus having a function as a Serving Gateway (S-GW) or a Packet Data Network Gateway (P-GW). When the core network is a 5GC, the communication control apparatus 60 may be an apparatus having a function as a User Plane Function (UPF). In addition, the communication control apparatus 60 may be an SMF, a PCF, a UDM, or the like. The core network CN may include an SMF, a PCF, a UDM, and the like.

Note that the communication control apparatus 60 does not necessarily have to be an apparatus constituting the core network. For example, it is assumed that the core network is a core network of Wideband Code Division Multiple Access (W-CDMA) or Code Division Multiple Access 2000 (cdma2000). At this time, the communication control apparatus 60 may be an apparatus that functions as a Radio Network Controller (RNC).

The communication control apparatus 60 may be connected to each of the plurality of base stations 40. For example, in the case of 5GC, an N2 reference point exists between the AMF and the NG-RAN, and the AMF and the NG-RAN are logically connected to each other via an NG interface.

The communication control apparatus 60 manages communication of the communication apparatus 30 or the base station 40. For example, the communication control apparatus 60 may manage the location of the communication apparatus 30 for each communication apparatus 30 in units of areas (for example, tracking areas or RAN notification areas) including a plurality of cells. Note that the communication control apparatus 60 may grasp and manage, for each communication apparatus 30, which base station 40 (or which cell) the communication apparatus 30 is connected to, in which base station 40 (or which cell) the communication apparatus 30 exists in the communication area, etc.

Basically, the control target of the communication control apparatus 60 is the communication apparatus 30 or the base station 40, but the wireless communication apparatuses under the communication apparatus 30 or the base station 40 may be the control target. In addition, the communication control apparatus 60 may control a plurality of secondary systems. In this case, the communication system 2 can be regarded as a system including the plurality of secondary systems.

The communication control apparatus 60 can also acquire necessary information from entities other than the communication apparatus 30, the base station 40, and the information processing apparatus 50 for achieving its functions. Specifically, the communication control apparatus 60 can acquire information necessary for protection, such as position information of the primary system, from a database (regulatory database) managed and operated by a national or regional radio administration agency (National Regulatory Authority (NRA)), for example. An example of the regulatory database is a Universal Licensing System (ULS) operated by the United States Federal Communications Commissions (FCC). Examples of information necessary for protection can include information such as position information regarding the primary system, communication parameters of the primary system, out-of-band emission (OOBE) limit, Adjacent Channel Leakage Ratio (ACLR), Adjacent Channel Selectivity, fading margin, and/or protection ratio (PR). For these examples, in a case where a fixed numerical value or an acquisition/derivation method is defined by a law or the like, it is desirable to use the defined values and methods.

In addition, as another example, it is also conceivable that the communication control apparatus 60 acquires radio wave sensing information from a radio wave sensing system installed and operated for the purpose of radio wave detection in the primary system. As a specific example, the communication control apparatus 60 can acquire radio wave detection information regarding the in-ship radar as the primary system from a radio wave sensing system referred to as an Environmental Sensing Capability (ESC) in CBRS of the United States. In addition, in a case where the communication apparatus or the terminal has a sensing function, the communication control apparatus 60 may acquire the radio wave detection information of the primary system from the communication apparatus or the terminal.

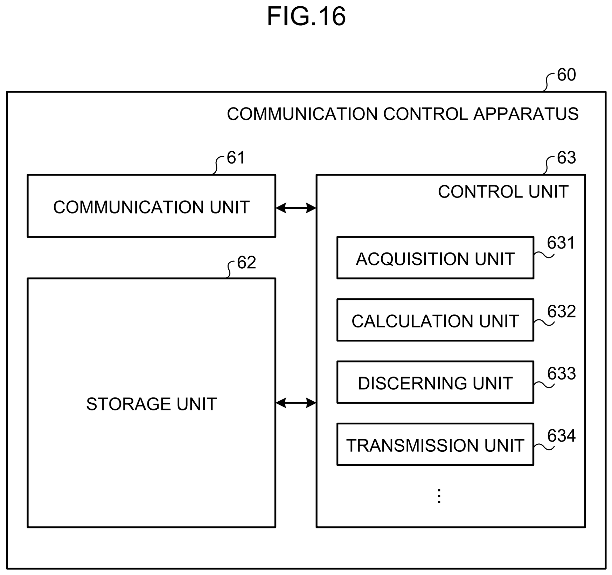

FIG. 16 is a diagram illustrating a configuration example of the communication control apparatus 60 according to the embodiment of the present disclosure. The communication control apparatus 60 includes a communication unit 61, a storage unit 62, and a control unit 63. Note that the composition illustrated in FIG. 16 is a functional composition, and the hardware composition may be different from this. In addition, the functions of the communication control apparatus 60 may be implemented in a distributed manner in a plurality of physically separated configurations. For example, the communication control apparatus 60 may be constituted with a plurality of server apparatuses.

The communication unit 61 is a communication interface that communicates with other communication apparatuses (for example, the base station 40, the communication apparatus 30, the information processing apparatus 50, and another communication control apparatus 60). The communication unit 61 may be a wired interface, or may be a wireless interface. For example, here is an assumable case where the communication unit 61 is a wireless communication interface. At this time, the communication unit 61 may support one or more radio access methods. For example, the communication unit 61 may support both NR and LTE. In addition, the communication unit 61 may support other radio access methods such as W-CDMA and cdma2000.

The communication unit 61 may be a communication interface other than the wireless communication interface. At this time, the communication unit 61 may be a network interface or a device connection interface. For example, the communication unit 61 may be a local area network (LAN) interface such as a network interface card (NIC), or may be a universal serial bus (USB) interface including a USB host controller, a USB port, and the like. In addition, the configuration of the communication unit 61 may be similar to that of the wireless communication unit 41 of the base station 40.

The storage unit 62 is a data readable/writable storage apparatus such as DRAM, SRAM, flash memory, and a hard disk. The storage unit 62 functions as a storage means of the communication control apparatus 60. The storage unit 62 stores operation parameters of each of the plurality of base stations 40 constituting the communication system 2. Note that the storage unit 62 may store the resource holding information of each of the plurality of base stations 40 constituting the communication system 2. As described above, the resource holding information is information related to holding of the radio resource of the base station 40.

The control unit 63 is a controller that controls individual parts of the communication control apparatus 60. The control unit 63 is implemented by a processor such as a CPU or an MPU, for example. For example, the control unit 63 is implemented by a processor executing various programs stored in a storage apparatus inside the communication control apparatus 60 using RAM or the like as a work area. The control unit 63 may be implemented by an integrated circuit such as an ASIC or an FPGA. The CPU, MPU, ASIC, and FPGA can all be regarded as controllers.

As illustrated in FIG. 16, the control unit 63 includes an acquisition unit 631, a calculation unit 632, a discerning unit 633, and a transmission unit 634. Individual blocks (acquisition unit 631 to transmission unit 634) constituting the control unit 63 are functional blocks individually indicating functions of the control unit 63. These functional blocks may be software blocks or hardware blocks. For example, each of the functional blocks described above may be one software module implemented by software (including a microprogram) or one circuit block on a semiconductor chip (die). Naturally, each of the functional blocks may be formed as one processor or one integrated circuit. The functional block may be configured by using any method. The control unit 63 may be configured in a functional unit different from the above-described functional block. The operation of individual blocks constituting the control unit 63 will be described below.

The control unit 33 of the communication apparatus 30, the control unit 43 of the base station 40, and the control unit 53 of the information processing apparatus 50 may include each functional block (the acquisition unit 631 to the transmission unit 634) included in the control unit 63 of the communication control apparatus 60. In this case, the description of the "communication control apparatus 60" in the following description can be appropriately replaced with the communication apparatus 30, the base station 40 or the information processing apparatus 50.

<<3. Interference model>>

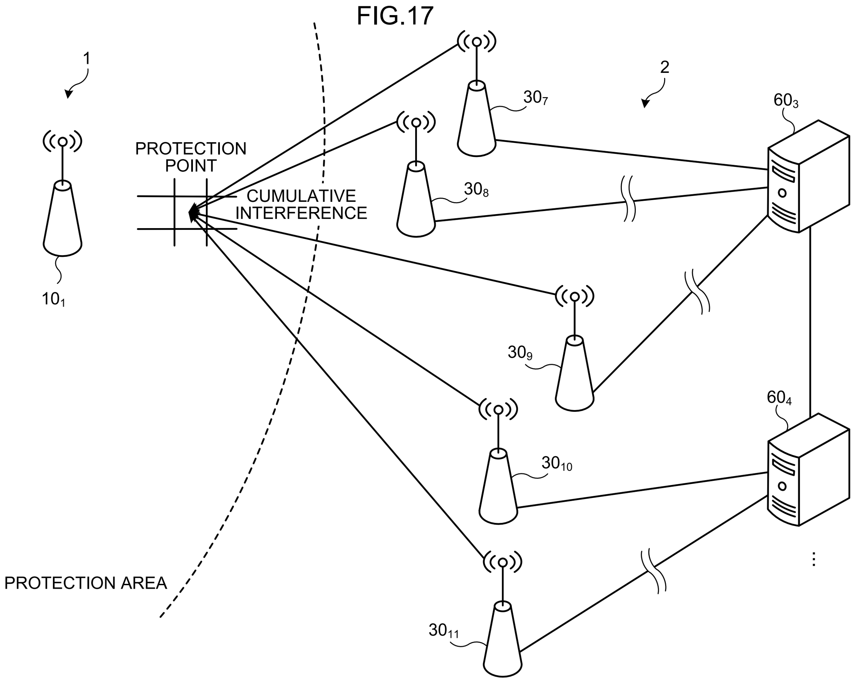

Next, an interference model assumed in the present embodiment will be described. FIG. 17 is a diagram illustrating an example of an interference model assumed in the embodiment of the present disclosure. The description of the communication apparatus 30 in the following description can be replaced with a word indicating another communication apparatus (for example, the base station 40) having a wireless communication function.

The interference model illustrated in FIG. 17 is applied in a case where the primary system has a service area, for example. In the example of FIG. 17, the communication system 1 (primary system) is a wireless communication system having a service area. This service area is to be a protection area of the communication system 1, for example. A plurality of interference calculation points of reference (hereinafter, referred to as an interference calculation point or a protection point) is set in the protection area. The protection point is set by an operator of the communication system 1, a public organization that manages radio waves, or the like (hereinafter, referred to as an administrator), for example. For example, the administrator may divide the protection area into a grid-like shape and set the center of a predetermined grid as the protection point. The protection point can be determined by any method.

The protection point may be set not only in the horizontal direction but also in the vertical direction. That is, the protection points may be arranged three-dimensionally. In the following description, a three-dimensionally arranged protection point (that is, a protection point under an assumption of a three-dimensional space, rather than in a protection point under an assumption of a horizontal plane) may be referred to as a spatial protection point.

The interference margin of each protection point is set by an administrator or the like. FIG. 17 illustrates interference given to a protection point by a plurality of communication apparatuses 30 constituting the communication system 2 (secondary system). The communication control apparatus 60 of the communication system 2 controls the transmission power of the plurality of communication apparatuses 30 such that the cumulative interference at each protection point does not exceed a set interference margin.

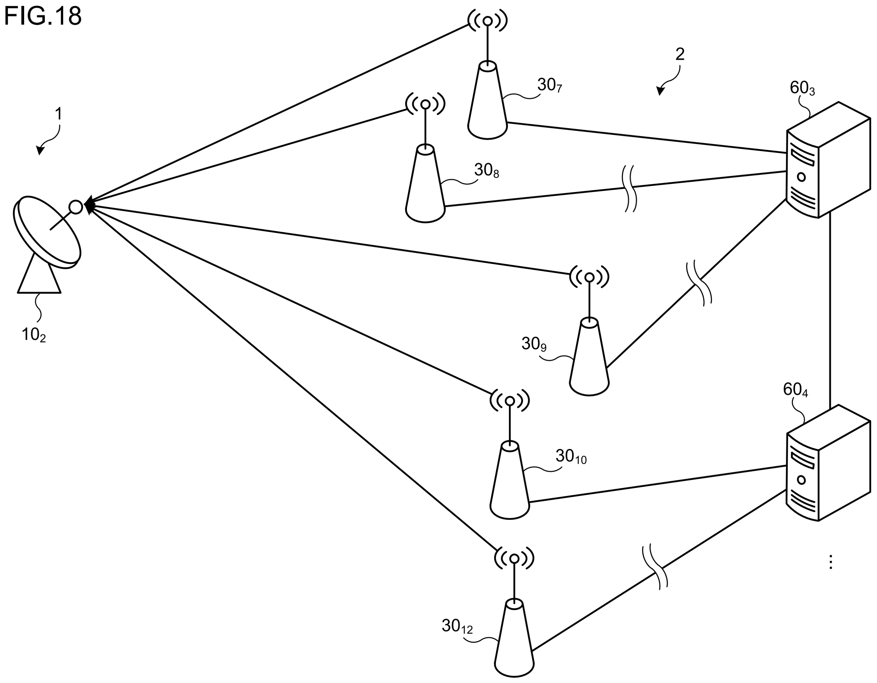

FIG. 18 is a diagram illustrating another example of the interference model assumed in the embodiment of the present disclosure. The interference model illustrated in FIG. 18 is applied in a case where the primary system performs only reception, for example. In the example of FIG. 18, the communication system 1 (primary system) includes a reception antenna as the communication apparatus $10_2$. The communication apparatus $10_2$ is a reception antenna of a satellite ground station, for example. The communication control apparatus 60 of the communication system 2 sets the position of the reception antenna as a protection point, and controls the transmission power of the plurality of communication apparatuses 30 such that the cumulative interference at the point does not exceed an interference margin.

**<<4. Primary system protection method>>**

Next, a primary system protection method will be described. As described above, the primary system protection method can be classified into the following two types, for example.

(1) Interference margin simultaneous allocation type
(2) Interference margin sequential allocation type

An example of the interference margin simultaneous allocation type primary system protection method is a method disclosed in ECC Report 186 (for example, a calculation method of the maximum allowable EIRP), for example. In addition, an example of the interference margin sequential allocation type primary system protection method is a sequential allocation process (iterative allocation process (IAP)) disclosed in WINNF-TS-0112, for example.

Hereinafter, the "interference margin simultaneous allocation type" primary system protection method and the "interference margin sequential allocation type" primary system protection method will be described. Note that the description of the communication apparatus 30 in the following description can be replaced with a word indicating another communication apparatus having a wireless communication function.

**<4-1. Interference margin simultaneous allocation type>**

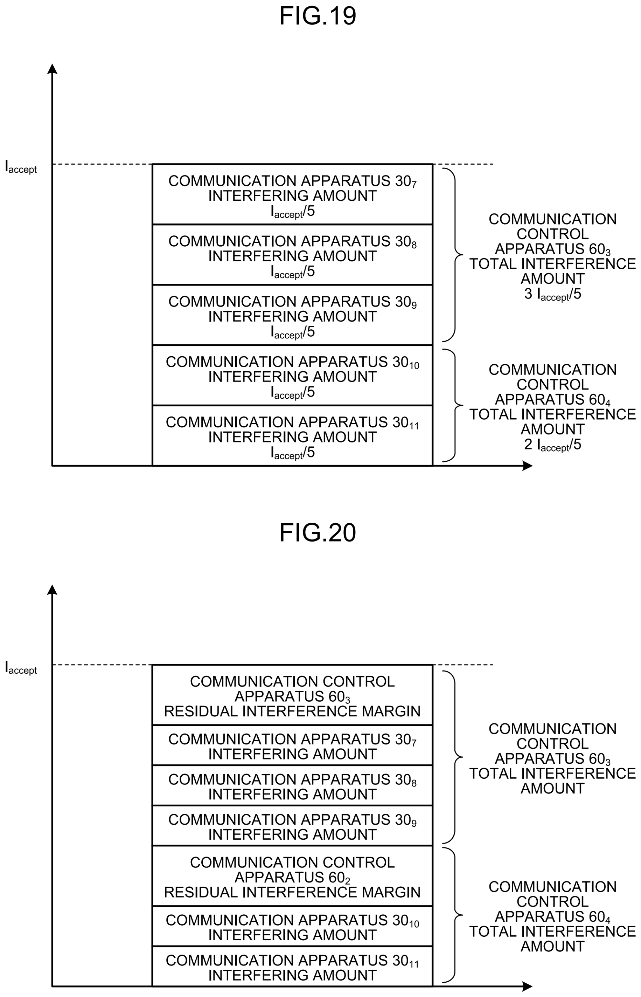

First, an interference margin simultaneous allocation type primary system protection method will be described. FIG. 19 is a diagram illustrating an interference margin simultaneous allocation type primary system protection method. As described above, in the interference margin simultaneous allocation type, the communication control apparatus 60 calculates the maximum allowable transmission power of the secondary system using a "value uniquely obtained by positional relationship between the protection reference-point regarding the primary system and the secondary system" as a reference value. In the example of FIG. 19, an allowable interference threshold of the primary system is represented by $I_{accept}$. This threshold may be an actual threshold, or may be a value set assuming a certain margin (for example, a protection ratio) from the actual threshold in consideration of a calculation error and an interference variation.

In the interference margin simultaneous allocation type primary system protection method, interference control represents determination of transmission power (EIRP, Conducted Power + Antenna gain, and the like) of a radio apparatus so as not to exceed an allowable interference threshold. At this time, when there are a large number of communication apparatuses 30 and an attempt is made so as not to allow each to exceed an allowable interference threshold, there might be a concern that interference power received in the communication system 1 (primary system) exceeds the allowable interference threshold. To handle this, the interference margin (allowable interference amount) is "allocated" based on the number of communication apparatuses 30 registered in the communication control apparatus 60.

For example, in the example of FIG. 19, the total number of communication apparatuses 30 is five. Therefore, the acceptable interference amount being $I_{accept}/5$ is allocated to each. Since the communication apparatus 30 cannot self recognize the allocation amount, the communication apparatus 30 recognizes the allocation amount through the communication control apparatus or acquires transmission power decided based on the allocation amount. The communication control apparatus cannot recognize the number of radio apparatuses managed by other communication control apparatuses. Therefore, by exchanging information with each other, the communication control apparatus can recognize the total number of apparatuses and can allocate the acceptable interference amount. For example, an acceptable interference amount of $3I_{accept}/5$ is allocated in the communication control apparatus $60_1$.

Note that the interference margin that has not been used by the communication apparatus 30 can be a residual interference margin in this method. FIG. 20 is a diagram illustrating a state in which a residual interference margin occurs. FIG. 20 illustrates a total interference amount set in each of the two communication control apparatuses 60 (communication control apparatuses $60_3$ and $60_4$). FIG. 20 also illustrates an interference amount (interfering amount) given to a predetermined protection point of the communication system 1 by a plurality of communication apparatuses 30 (communication apparatuses $30_7$ to $30_{11}$) under the management of the two communication control apparatuses 60. An interference amount obtained by subtracting the interference amount of the communication apparatus 30 from the total interference amount of each of the two communication control apparatuses 60 is the residual interference margin. In the following description, an excessive interference amount is referred to as the residual interference margin. The residual interference margin can be rephrased as a residual interference amount.

**<4-2. Interference margin sequential allocation type>**

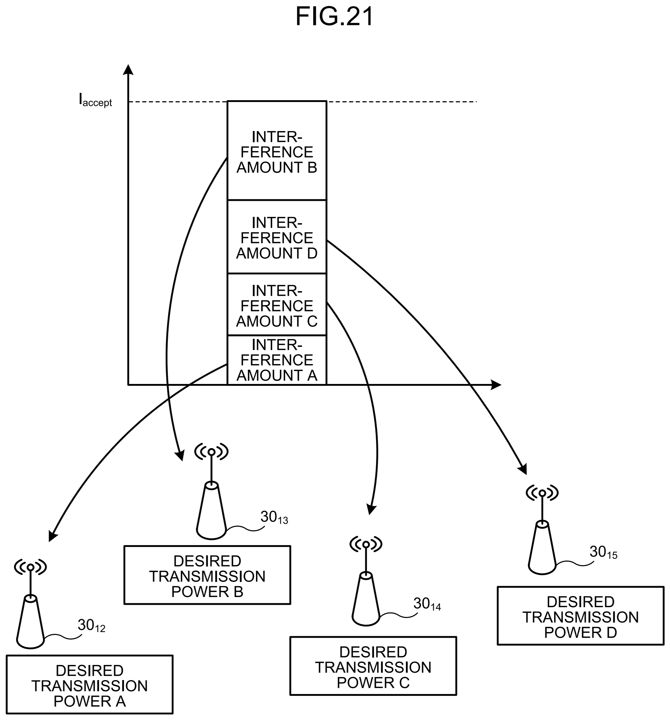

Next, an interference margin sequential allocation type primary system protection method will be described. As described above, in the case of interference margin sequential allocation type, the communication control apparatus 60 calculates the maximum allowable transmission power of the secondary system using the "desired transmission power of the secondary system" as a reference value. FIG. 21 is a diagram illustrating an interference margin sequential allocation type primary system protection method. In the interference margin sequential allocation type, for example, the information processing apparatus 50 stores desired transmission power information of each of the plurality of communication apparatuses 30. The desired transmission power information is information regarding transmission power requested by the communication apparatus 30 for information regarding transmission power necessary for transmission of radio waves, to the communication control apparatus 60. In the example of FIG. 21, the information processing apparatus 50 holds desired transmission power information A to D of each of the communication apparatuses $30_{12}$ to $30_{15}$. The communication control apparatus 60 allocates the interference amounts A to D to the communication apparatuses $30_{12}$ to $30_{15}$ based on the desired transmission power information A to D, respectively.

<<5. Operation of communication system>>

Based on the above, the operation of the communication system of the present embodiment will be described.

As described above, the high speed movement of the communication apparatus 30 leads to a possibility of an increase in the relative speed difference between the communication apparatuses 30. The increase in the relative speed difference leads to a possibility of an increase of interference with an adjacent channel due to the Doppler shift of the frequency. The increased interference disables communication of a communication apparatus (for example, the communication apparatus 10, the base station 40, or another communication apparatus 30) using the adjacent channel. In addition, the frequency shift to the frequency domain of the adjacent channel might cause a possibility of a failure in communication of the communication apparatus 30 itself moving at a high speed. This leads to a possibility of a failure in achievement of effective use of radio resources. Hereinafter, an operation of the communication system for solving the present problem will be described in detail.

<5-1. Sequence example>

First, the operation of the communication system 2 will be described using a sequence diagram.

As described above, the communication system 2 of the present embodiment includes the communication apparatus 30, the information processing apparatus 50, and the communication control apparatus 60. The communication apparatus 30 is, for example, a mobile communication apparatus. At this time, the communication apparatus 30 may be a mobile body itself having a communication function or a communication apparatus mounted on the mobile body. More specifically, the communication apparatus 30 may be a flight vehicle having a communication function or a communication apparatus mounted on a flight vehicle. Alternatively, the communication apparatus 30 may be an automobile having a communication function or a communication apparatus mounted on an automobile. Naturally, the communication apparatus 30 may be a stationary communication apparatus. The information processing apparatus 50 is an apparatus that manages/controls traveling/flight of the communication apparatus 30. The communication control apparatus 60 is an apparatus (frequency management system) for dynamically managing the use of radio waves by the communication apparatus 30.

The following description assumes that the communication system 2 includes the communication apparatus $30_1$ and the communication apparatus $30_2$. At least one of the communication apparatus $30_1$ and the communication apparatus $30_2$ is assumed to be a mobile communication apparatus (for example, a flight-type communication apparatus). The information processing apparatus 50 is assumed to hold information related to movement of the mobile communication apparatus (at least one of the communication apparatus $30_1$ and the communication apparatus $30_2$). Here, the information related to movement is, for example, information related to a vehicle operation plan of a mobile communication apparatus (at least one of the communication apparatus $30_1$ and the communication apparatus $30_2$). While the following description assumes that only one information processing apparatus 50 and one communication control apparatus 60 exist, the information processing apparatuses 50 and the communication control apparatuses 60 each may be provided in plurality.

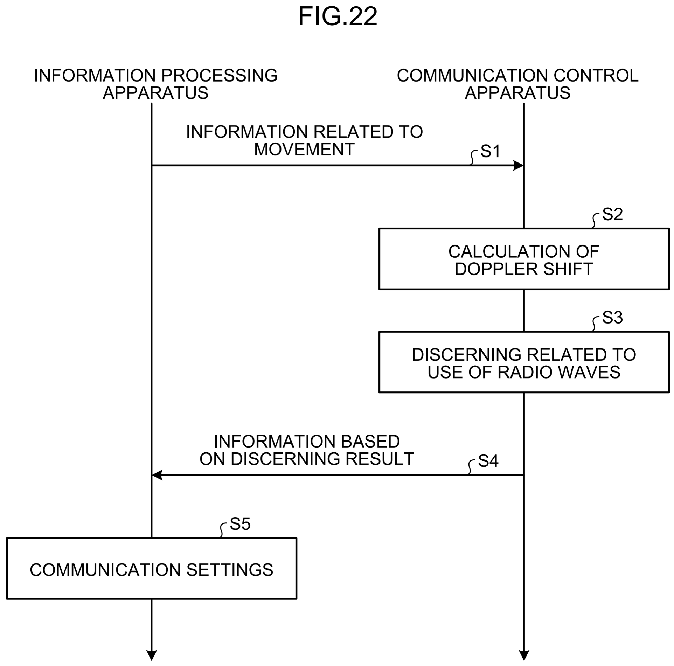

FIG. 22 is a sequence diagram illustrating an outline of an operation of the communication system 2. Hereinafter, the outline of the operation of the communication system 2 will be described using the operations of the information processing apparatus 50 and the communication control apparatus 60 as an example.

The transmission unit 531 of the information processing apparatus 50 transmits information related to movement of one or more communication apparatuses 30 to the communication control apparatus 60. When both the communication apparatus $30_1$ and the communication apparatus $30_2$ are mobile communication apparatuses, the information processing apparatus 50 transmits, for example, information (for example, information related to the vehicle operation plan) related to movement of each of the communication apparatus $30_1$ and the communication apparatus $30_2$. In a case where there is a plurality of information processing apparatuses 50, each of the plurality of information processing apparatuses 50 may transmit information related to movement of each managed communication apparatus 30 to the communication control apparatus 60. The information related to the movement may be transmitted by the communication apparatus 30 itself.

The information transmitted by the information processing apparatus 50 is not limited to information related to movement. The information processing apparatus 50 may transmit an application for use of a radio wave (frequency channel) for one or more communication apparatuses 30. In addition, the information processing apparatus 50 may request transmission of a list of frequency channels available to the communication apparatus 30. The radio wave use application and/or the transmission request for the list of available frequency channels may be transmitted by the communication apparatus 30 itself.

The acquisition unit 631 of the communication control apparatus 60 acquires information related to movement of one or more communication apparatuses 30 (for example, information related to movement of each of the communication apparatus $30_1$ and the communication apparatus $30_2$) (step S1). Subsequently, the communication control apparatus 60 stores the acquired information in the storage unit 62. The information acquired by the communication control apparatus 60 will be described in detail below.

Subsequently, based on the information related to movement of the communication apparatus 30, the calculation unit 632 of the communication control apparatus 60 performs calculation related to the Doppler shift of the radio wave used (or the radio wave to be used) by one or more communication apparatuses 30 (for example, the communication apparatus $30_1$ and/or the communication apparatus $30_2$) (step S2). For example, the communication control apparatus 60 performs calculation related to the Doppler shift of the radio wave of at least one of the communication apparatus $30_1$ and the communication apparatus $30_2$ based on the information related to the vehicle operation plan of at least one of the communication apparatus $30_1$ and the communication apparatus $30_2$.

For example, it is assumed that a frequency channel related to a use application from the information processing apparatus 50 (or the communication apparatus 30) is a first channel (first frequency band) for the communication apparatus $30_1$ and/or a second channel (second frequency band) for the communication apparatus $30_2$. At this time, the communication control apparatus 60 performs calculation (hereinafter, referred to as a first calculation) related to the Doppler shift in a case where the communication apparatus $30_1$ uses the first channel, and performs calculation (hereinafter, referred to as a second calculation) related to the Doppler shift in a case where the second communication apparatus uses the second channel adjacent to the first channel. The calculation related to the Doppler shift will be described in detail below.

The discerning unit 633 of the communication control apparatus 60 performs discerning related to use of radio waves (frequency channels) of the communication apparatus 30 based on the calculation result in step S2 (step S3). For example, the communication control apparatus 60 performs discerning related to the use of the frequency (frequency channel) of one or more communication apparatuses 30. For example, the communication control apparatus 60 performs discerning regarding use of a frequency regarding the dynamic spectrum sharing of one or more communication apparatuses 30 (for example, the communication apparatus $30_1$ and/or the communication apparatus $30_2$).

For example, it is assumed that both the communication apparatus $30_1$ and the communication apparatus $30_2$ are movable. At this time, based on the result of the first calculation, the communication control apparatus 60 discerns whether the interference leakage power given to the second channel by the communication apparatus $30_1$ is a predetermined limit value or less when the communication apparatus $30_1$ uses the first channel. At this time, based on the result of the second calculation, the communication control apparatus 60 discerns whether the interference leakage power given to the first channel by the communication apparatus $30_2$ is a predetermined limit value or less when the communication apparatus $30_2$ uses the second channel. Subsequently, based on a discerning result (hereinafter, denoted as a first discerning result) as to whether the interference leakage power given to the second channel by the communication apparatus $30_1$ is the predetermined limit value or less and a discerning result (hereinafter, denoted as a second discerning result) as to whether the interference leakage power given to the first channel by the communication apparatus $30_2$ is the predetermined limit value or less, the communication control apparatus 60 performs discerning related to use of the first channel by the communication apparatus $30_1$. In addition, the communication control apparatus 60 may perform discerning related to use of the second channel by the communication apparatus $30_2$ based on the first discerning result and the second discerning result.

Note that there are assumable cases where either the communication apparatus $30_1$ or the communication apparatus $30_2$ is not movable or is not moving. Even in this case, the communication apparatus 30 that is not movable or is not moving can be regarded as being relatively moving as viewed from the moving communication apparatus 30. Therefore, even in a case where one of the communication apparatus $30_1$ and the communication apparatus $30_2$ is not movable or is not moving, the communication control apparatus 60 can apply the above processing. However, the communication control apparatus 60 can also perform discerning related to use of a predetermined channel by the communication apparatus 30 based on any one discerning result out of the first discerning result and the second discerning result.

For example, it is assumed that the communication apparatus $30_1$ is a communication apparatus that is not movable or is not moving, and the communication apparatus $30_2$ is a communication apparatus that is movable. At this time, based on the result of the second calculation, the communication control apparatus 60 may discern whether the interference leakage power given to the first channel by the communication apparatus $30_2$ is a predetermined limit value or less when the communication apparatus $30_2$ uses the second channel. Subsequently, the communication control apparatus 60 may perform discerning related to use of the first channel by the communication apparatus $30_1$ based on a discerning result (second discerning result) as to whether the interference leakage power given to the first channel by the communication apparatus $30_2$ is the predetermined limit value or less. In addition, the communication control apparatus 60 may perform discerning related to use of the second channel by the communication apparatus $30_2$ based on the second discerning result.

In addition, it is assumed that the communication apparatus $30_1$ is a movable communication apparatus, and the communication apparatus $30_2$ is a communication apparatus that is not movable or is not moving. In this case, based on the result of the first calculation, the communication control apparatus 60 may discern whether the interference leakage power given to the second channel by the communication apparatus $30_1$ is a predetermined limit value or less when the communication apparatus $30_1$ uses the first channel. Subsequently, the communication control apparatus 60 may perform discerning related to use of the first channel by the communication apparatus $30_1$ based on a discerning result (first discerning result) as to whether the interference leakage power given to the second channel by the communication apparatus $30_1$ is the predetermined limit value or less. In addition, the communication control apparatus 60 may perform discerning related to use of the second channel by the communication apparatus $30_2$ based on the first discerning result.

Naturally, even when both the communication apparatus $30_1$ and the communication apparatus $30_2$ are movable, the communication control apparatus 60 can perform discerning related to use of a predetermined channel by the communication apparatus 30 based on a discerning result of one of the first discerning result and the second discerning result. The discerning on the use of radio waves will be described in detail below.

Subsequently, the transmission unit 634 of the communication control apparatus 60 transmits information based on the discerning result of step S3 to the information processing apparatus 50 (or one or more communication apparatuses 30) (step S4). For example, the communication control apparatus 60 may transmit, as information based on a result of the discerning, information related to use of a predetermined channel (for example, a first channel and/or a second channel) by one or more communication apparatuses 30 (for example, the communication apparatus $30_1$ and/or the communication apparatus $30_2$) to the information processing apparatus 50 (or one or more communication apparatuses 30). Here, the information related to the use of the predetermined channel may include information related to whether one or more communication apparatuses 30 can use the predetermined channel. In addition, the information related to the use of the predetermined channel may include information related to an operation parameter in a case where one or more communication apparatuses 30 use a predetermined frequency band. The information related to the operation parameter may be, for example, information related to transmission power (for example, information of the upper limit transmission power).

For example, the communication control apparatus 60 may transmit information based on a discerning result related to use of the first channel by the communication apparatus $30_1$ to the information processing apparatus 50 (or the communication apparatus $30_1$). The information based on the discerning result may include information indicating whether the communication apparatus $30_1$ can use the first channel. In addition, the information based on the discerning result may include information related to an operation parameter in a case where the communication apparatus $30_1$ uses the first channel (for example, information related to transmission power).

In addition, the communication control apparatus 60 may transmit information based on a discerning result related to use of the second channel by the communication apparatus $30_2$ to the information processing apparatus 50 (or the communication apparatus $30_2$). The information based on the discerning result may include information indicating whether the communication apparatus $30_2$ can use the second channel. In addition, the information based on the discerning result may include information related to an operation parameter in a case where the communication apparatus $30_2$ uses the second channel (for example, information related to transmission power).

The reception unit 532 of the information processing apparatus 50 receives information based on the discerning result of step S3 from the communication control apparatus 60. Subsequently, based on the received information, the setting unit 533 of the information processing apparatus 50 performs processing related to communication settings of one or more communication apparatuses 30 (step S5).

For example, in a case where the received information includes information indicating that the communication apparatus $30_1$ can use the first channel, the information processing apparatus 50 performs setting to allow the communication apparatus $30_1$ to use the first channel. In a case where the received information includes information related to the operation parameter in a case where the communication apparatus $30_1$ uses the first channel, the information processing apparatus 50 may set the operation parameter of the communication apparatus $30_1$ based on the information. In addition, in a case where the received information includes information indicating that the communication apparatus $30_2$ can use the second channel, the information processing apparatus 50 performs setting to allow the communication apparatus $30_2$ to use the second channel. In a case where the received information includes information related to the operation parameter in a case where the communication apparatus $30_2$ uses the second channel, the information processing apparatus 50 may set the operation parameter of the communication apparatus $30_2$ based on the information.

<5-2. Acquisition of information related to movement>

Next, the above-described step S1 will be described in detail. As described above, the communication control apparatus 60 acquires information related to movement of one or more communication apparatuses 30. For example, the communication control apparatus 60 acquires information related to movement of each of the communication apparatus $30_1$ and the communication apparatus $30_2$. Note that, when the information processing apparatus 50 has transmitted the use application of the radio wave, the communication control apparatus 60 may acquire the use application.

Here, the information related to movement of the one or more communication apparatuses 30 may be information () related to the vehicle operation plan of the one or more communication apparatuses 30. For example, the information related to the movement may be information related to the vehicle operation plan of each of the communication apparatus $30_1$ and the communication apparatus $30_2$. The information related to the vehicle operation plan may include the following information (A1) to (A6), for example.

(A1) Vehicle operation plan approval request identification ID
(A2) Vehicle operation plan approval request application date and time (for example, UNIX time, UTC time, etc.)
(A3) Mobile communication apparatus user identifier (for example, an identifier of the information processing apparatus 50)
(A4) Mobile communication apparatus identifier (for example, an identifier of the communication apparatus 30)

·Device serial number
·Device authentication number (for example, an identifier indicating passing of device authentication such as an FCC ID)

(A5) Vehicle operation plan information

· Route information (latitude, longitude, altitude, etc.)
· Vehicle operation start time (UNIX time, UTC time, etc.)
· Vehicle operation end time (UNIX time, UTC time, etc.)
· Desired radio parameter (for example, information of a frequency channel (center frequency + channel bandwidth, a combination of a lower limit and an upper limit frequency, a predefined channel identifier, etc.), transmission power (for example, EIRP, etc.), and the like.)

(A6) Function information of mobile communication apparatus (for example, function information of the communication apparatus 30)

· Moving speed (normal speed, maximum speed, minimum speed, etc.)
· Operable frequency range
· Maximum transmission power (EIRP, etc.)
Antenna information (Antenna gain, antenna type, property of being directional/omnidirectional, etc.)
· Noise power

<5-3. Calculation related to Doppler shift>

Next, the above-described step S2 will be described in detail. As described above, the communication control apparatus 60 performs calculation related to the Doppler shift based on the information related to movement of the communication apparatus 30 (for example, the communication apparatus $30_1$ and/or the communication apparatus $30_2$).

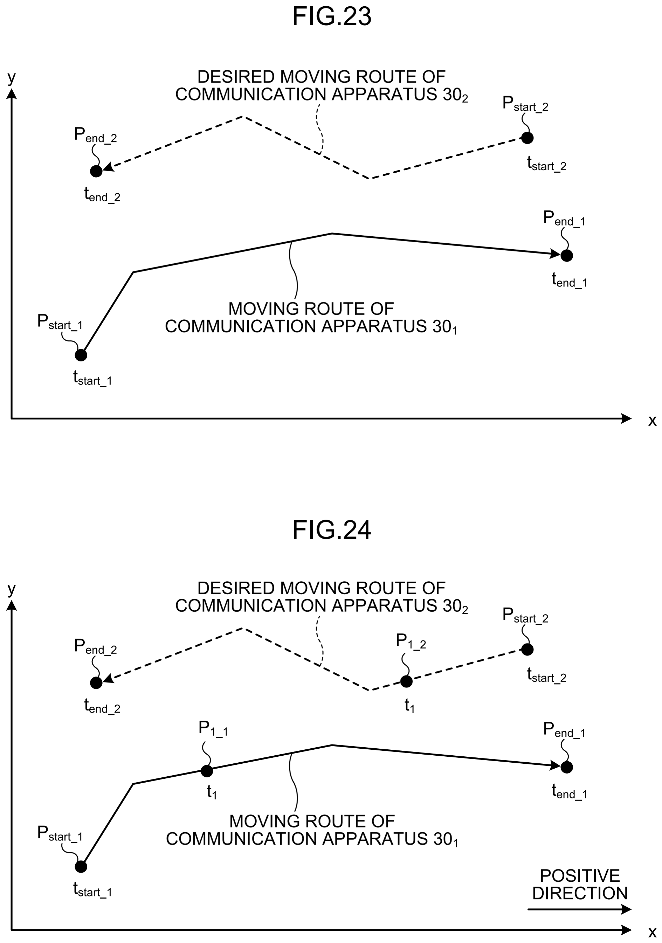

FIG. 23 is a diagram illustrating an example of a moving route of each communication apparatus 30. Specifically, FIG. 23 is a diagram illustrating an example of a moving route (operation route) of the communication apparatus $30_1$ and a desired moving route (scheduled vehicle operation route) of the communication apparatus $30_2$. The following description assumes, as an example, that both the communication apparatus $30_1$ and the communication apparatus $30_2$ are flight-type communication apparatuses. Note that the calculation described below is also applicable to a case where one or both of the communication apparatus $30_1$ and the communication apparatus $30_2$ are not flight-type communication apparatuses. For example, the calculation described below is also applicable to a case where one or both of the communication apparatus $30_1$ and the communication apparatus $30_2$ are a traveling communication apparatus or a stationary communication apparatus.

The following description assumes a situation in which the communication apparatus $30_1$ is flying ahead while using channel 1 for communication, and the information processing apparatus 50 (or the communication apparatus $30_2$) newly applies for use of channel 2 for the communication apparatus $30_2$. Here, it is assumed that channel 1 and channel 2 are adjacent channels, the center frequency (Hz) of channel 1 is $f_1$, and the center frequency (Hz) of channel 2 is $f_2$.

In consideration of the visibility in the figure, the positional relationship between the communication apparatuses 30 is represented in a two-dimensional space in the drawing. However, in practice, it is assumed that each communication apparatus 30 moves in a three-dimensional space. As a matter of fact, each communication apparatus 30 may move in a two-dimensional space (for example, on the ground or on water). In this case, it is only required to change the Doppler shift equation described below for the application in the two-dimensional space.

It is assumed that each communication apparatus 30 starts moving from a predetermined time and moves as indicated by a straight line or a broken line illustrated in FIG. 23. Specifically, it is assumed that the communication apparatus $30_1$ departs from $P_{start\_1}$ at time $t_{start\_1}$, moves on the straight line illustrated in FIG. 23, and reaches $P_{end\_1}$ at time $t_{end\_1}$. In addition, it is assumed that the communication apparatus $30_2$ departs from $P_{start\_2}$ at time $t_{start\_2}$, moves on the broken line illustrated in FIG. 23, and reaches $P_{end\_2}$ at time $t_{end\_2}$.

When the influence of the Doppler shift is considered, the relative position of each communication apparatus 30 is important. In formulating the Doppler shift, there is a need to consider two patterns, namely a case of where the communication apparatus $30_1$ and the communication apparatus $30_2$ are approaching each other (pattern 1) and a case where the communication apparatus $30_1$ and the communication apparatus $30_2$ are separating from each other (pattern 2). Hereinafter, calculation of the Doppler shift in these two patterns will be described.

<5-3-1. Pattern 1>

First, calculation of the Doppler shift in a case where the communication apparatus $30_1$ and the communication apparatus $30_2$ are approaching each other will be described.

FIG. 24 is a diagram illustrating a positional relationship between the individual communication apparatuses 30 in a case where the individual communication apparatuses 30 are approaching each other. As illustrated in FIG. 24, at a certain time t1, the communication apparatus $30_1$ is located at $P_{1\_1}$, and the communication apparatus $30_2$ is located at $P_{1\_2}$.

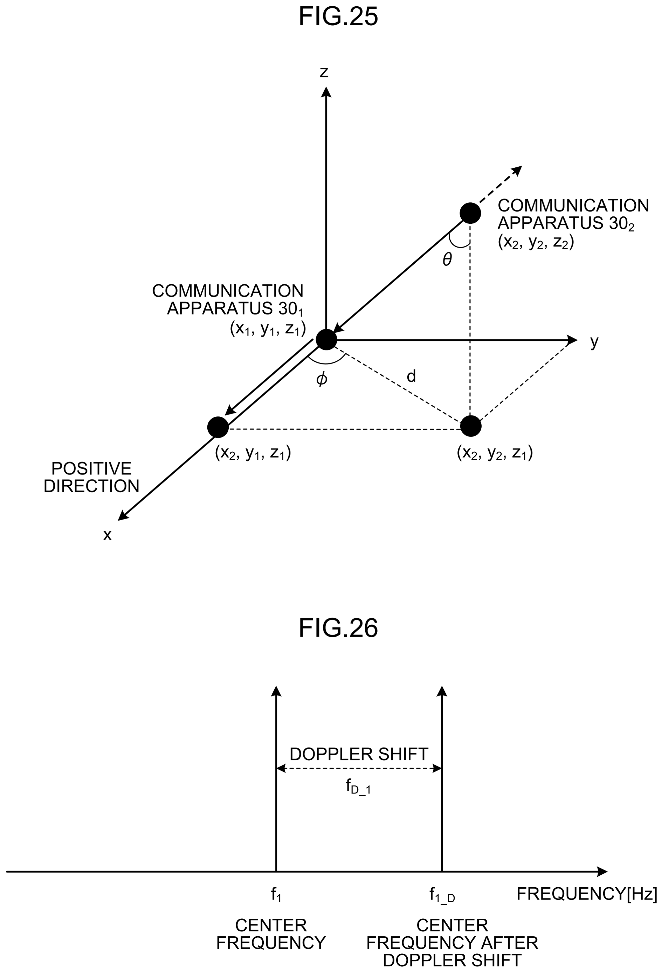

FIG. 25 is a diagram illustrating a positional relationship of each communication apparatus 30 in a three-dimensional space. Here, it is assumed that the communication apparatus $30_1$ is located at $(x_1, y_1, z_1)$ illustrated in FIG. 25, for example, and the communication apparatus $30_2$ is located at $(x_2, y_2, z_2)$ illustrated in FIG. 25, for example.

In FIG. 25, x, y, and z axes indicate latitude, longitude, and altitude, respectively. In addition, $x_i$, $y_i$, $z_i$ indicate the latitude, longitude, and altitude of a communication apparatus $30_i$, respectively. Furthermore, d indicates the Euclidean distance (m) between the two points $(x_1, y_1, z_1)$ and $(x_2, y_2, z_1)$. $\phi$ represents an angle (deg) formed by individual moving directions of the communication apparatus $30_1$ and the communication apparatus $30_2$ on the x-y plane. In addition, $\theta$ is an angle (deg) formed by individual moving directions of the communication apparatus $30_1$ and the communication apparatus $30_2$ on the x-z plane. In the drawing, an arrow in a straight line indicates a moving direction of the communication apparatus $30_1$, and an arrow in a broken line indicates a moving direction of the communication apparatus $30_2$. Note that the positional relationship between the communication apparatus $30_1$ and the communication apparatus $30_2$ on the x-y plane corresponds to the positional relationship illustrated in FIG. 24.

Here, the positive direction of the x axis in FIG. 25 is defined as a positive direction. At this time, the center frequency $f_{1\_D}$ of the radio wave used by the communication apparatus $30_1$ when viewed from the communication apparatus $30_2$ can be expressed by the following Formula (1).

$$f_{1\_D} = \frac{c + v_2}{c - v_1 \cos(\varphi)\sin(\theta)} f_1 \qquad \cdots (1)$$

Here, c is the speed of light (m/s). $v_1$ and $v_2$ are the moving speeds (m/s) of the communication apparatus $30_1$ and the communication apparatus $30_2$, respectively. Note that the angle $\phi$ can be calculated by a method such as the Vincency's formulae using the latitude $x_i$ and the longitude $y_i$ of the communication apparatus i. Note that the latitude and longitude may be converted into x and y coordinate values to obtain cos ($\phi$) as indicated in the following Formula (2).

$$\cos(\varphi) = \frac{x_2^2 + y_1 y_2 + z_1^2}{\sqrt{x_2^2 + y_1^2 + z_1^2}\sqrt{x_2^2 + y_2^2 + z_1^2}} \qquad \cdots (2)$$

On the other hand, the angle $\theta$ can be calculated by the following Formula (3).

$$\theta = \tan^{-1}\left(\frac{d}{z_2 - z_1}\right) \qquad \cdots (3)$$

Note that the latitude and longitude may be converted into x and y coordinate values to obtain $\sin(\theta)$ as in the following Formula (4).

$$\sin(\theta) = \sqrt{1 - \left(\frac{x_1 x_2 + y_1 y_2 + z_1^2}{\sqrt{x_1^2 + y_1^2 + z_1^2}\sqrt{x_2^2 + y_2^2 + z_1^2}}\right)^2} \qquad \cdots (4)$$

Next, the center frequency $f_{2\_D}$ of the radio wave used by the communication apparatus $30_2$ when viewed from the communication apparatus $30_1$ is obtained. Here, the direction of the communication apparatus $30_1$ as viewed from the communication apparatus $30_2$ is defined as a positive direction. At this time, the center frequency $f_{2\_D}$ of the radio wave used by the communication apparatus $30_2$ when viewed from the communication apparatus $30_1$ can be expressed by the following Formula (5).

$$f_{2\_D} = \frac{c + v_1}{c - v_2 \cos(\varphi)\sin(\theta)} f_2 \qquad \cdots (5)$$

Here, the Doppler shift (Hz) related to the communication apparatus $30_1$ is $f_{D\_1}$, and the Doppler shift (Hz) related to the communication apparatus $30_2$ is $f_{D\_2}$. $f_{D\_1}$ and $f_{D\_2}$ can be expressed as the following Formulas (6) and (7) based on the Formulas (1) and (5), respectively.

$$f_{D\_1} = f_{1\_D} - f_1 \qquad (6)$$

$$f_{D\_2} = f_{2\_D} - f_2 \qquad (7)$$

The influence of the Doppler shift is determined depending on the moving speed difference between the communication apparatus $30_1$ and the communication apparatus $30_2$ and the center frequency of the radio wave transmitted by the communication apparatus 30. The larger the speed difference, and the higher the center frequency, the larger the Doppler shift will be.

FIG. 26 is a diagram illustrating a Doppler shift in pattern 1. Specifically, FIG. 26 illustrates the Doppler shift in pattern 1 on the frequency axis. FIG. 26 illustrates the Doppler shift when the direction of the communication apparatus $30_2$ as viewed from the communication apparatus $30_1$ is defined as the positive direction. As a matter of course, when the direction of the communication apparatus $30_1$ as viewed from the communication apparatus $30_2$ is a positive direction, the direction of the Doppler shift is opposite to the direction.

In this manner, the Doppler shift in a case where the communication apparatus $30_1$ and the communication apparatus $30_2$ are approaching each other can be calculated based on the information related to the movement (for example, information related to the vehicle operation plan). More specifically, the Doppler shift in a case where the communication apparatus $30_1$ and the communication apparatus $30_2$ are approaching each other can be obtained using the route information (the position information of each communication apparatus 30 at a certain time), the center frequency, and the moving speed, among the (A5) vehicle operation plan information described above.

<5-3-2. Pattern 2>

First, formulation of the Doppler shift in a case where the communication apparatus $30_1$ and the communication apparatus $30_2$ are separating from each other will be described.

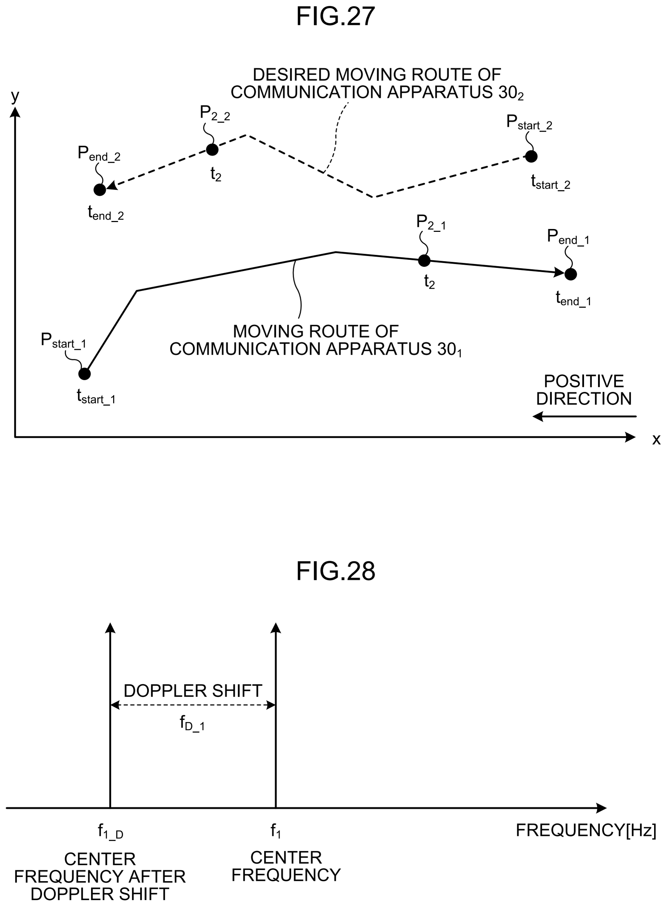

FIG. 27 is a diagram illustrating a positional relationship between the individual communication apparatuses 30 in a case where the individual communication apparatuses 30 are separating from each other. As illustrated in FIG. 27, at a certain time t2, the communication apparatus $30_1$ is located at $P_{2\_1}$, and the communication apparatus $30_2$ is located at $P_{2\_2}$. Note that the positional relationship in the z-axis direction is the same as that in FIG. 25.

Here, the direction of the communication apparatus $30_2$ as viewed from the communication apparatus $30_1$ is defined as a positive direction. The center frequency $f_{1\_D}$ of the radio wave used by the communication apparatus $30_1$ when viewed from the communication apparatus $30_2$ and the center frequency $f_{2\_D}$ of the communication apparatus $30_2$

when viewed from the communication apparatus $30_1$ can be expressed by the following Formulas (8) and (9), respectively.

$$f_{1\_D} = \frac{c - v_2}{c + v_1 \cos(\varphi) \sin(\theta)} f_1 \qquad \cdots (8)$$

$$f_{2\_D} = \frac{c - v_1}{c + v_2 \cos(\varphi) \sin(\theta)} f_2 \qquad \cdots (9)$$

It should be noted that in a case where the communication apparatuses 30 are separating from each other, the positive/negative signs of the denominator and numerator are reversed due to the change in the relative position of the communication apparatuses 30 as compared with a case where the communication apparatuses 30 are approaching each other.

Here, the Doppler shift (Hz) related to the communication apparatus $30_1$ is $f_{D\_1}$, and the Doppler shift (Hz) related to the communication apparatus $30_2$ is $f_{D\_2}$. $f_{D\_1}$ and $f_{D\_2}$ can be expressed as the following Formulas (10) and (11) based on the Formulas (8) and (9), respectively.

$$f_{D\_1} = f_1 - f_{1\_D} \qquad (10)$$

$$f_{D\_2} = f_2 - f_{2\_D} \qquad (11)$$

FIG. 28 is a diagram illustrating the Doppler shift in Pattern 2. Specifically, FIG. 28 illustrates the Doppler shift in pattern 2 on the frequency axis. FIG. 28 illustrates the Doppler shift when the direction of the communication apparatus $30_1$ as viewed from the communication apparatus $30_2$ is defined as the positive direction. As a matter of course, when the direction of the communication apparatus $30_1$ as viewed from the communication apparatus $30_2$ is a positive direction, the direction of the Doppler shift is opposite to the direction.

In this manner, the Doppler shift in a case where the communication apparatus $30_1$ and the communication apparatus $30_2$ is separating from each other can also be calculated based on the information related to the movement (for example, information related to the vehicle operation plan). More specifically, the Doppler shift in a case where the communication apparatus $30_1$ and the communication apparatus $30_2$ are separating from each other can be obtained using the route information (the position information of each communication apparatus 30 at a certain time), the center frequency, and the moving speed, among the (A5) vehicle operation plan information described above.

<5-3-3. Others>

The communication control apparatus 60 may set a sampling time period $\tau$ and calculate the Doppler shift on the route of each communication apparatus 30 during each time period of $t_{start\_2} + \tau$, $t_{start\_2} + 2\tau$, ... , $t_{end\_2}$. At this time, the communication control apparatus 60 may calculate the moving speed of each communication apparatus 30 from the moving distance of each communication apparatus 30 at the times $t_{start\_2} + \tau$, and $t_{start\_2} + 2\tau$. Here, $t_{start\_2}$ is the flight start time of the communication apparatus $30_2$.

Note that the Doppler shift does not occur when the values of the numerator and denominator in the above Formulas (1) and (5) or the values of the denominator and numerator in the above Formulas (8) and (9) are equal. For example, in a case where the following conditions (B1) to (B4) are satisfied, the Doppler shift does not occur.

(B1) The speeds of individual communication apparatuses 30 are equal.
(B2) The traveling directions of individual communication apparatuses 30 are equal.
(B3) The individual communication apparatuses 30 are moving on the same straight line in the x-y plane.
(B4) One communication apparatus 30 moves directly above another communication apparatus 30 in the x-z plane.

Note that, even under conditions other than the above, the Doppler shift does not occur in a case where the denominator and numerator are equal. Under such a situation, the communication control apparatus 60 may perform channel allocation without considering the Doppler shift. In addition, also in a case where the Doppler shift amount is a predetermined value or less and the influence thereof can be sufficiently ignored, the communication control apparatus 60 may similarly perform channel allocation without considering the Doppler shift.

<5-4. Discerning related to use of radio waves>

Next, the above-described step S3 will be described in detail. As described above, the communication control apparatus 60 performs discerning related to use of radio waves (frequency channels) of the communication apparatus 30 based on the calculation result in step S2.

In the following description, to facilitate understanding, it is assumed that the communication apparatus $30_1$ and the communication apparatus $30_2$ have the positional relationship illustrated in FIG. 24. Specifically, it is assumed that, at a certain time t1, the communication apparatus $30_1$ is located at $P_{1\_1}$ illustrated in FIG. 24 and the communication apparatus $30_2$ is located at $P_{1\_2}$ illustrated in FIG. 24.

Here, it is assumed that the flight of the communication apparatus $30_1$ using channel 1 for communication has been approved, and the information processing apparatus 50 (or the communication apparatus $30_2$) newly applies for use of channel 2 for the communication apparatus $30_2$. As described above, channel 1 and channel 2 have a relationship of adjacent channels, a center frequency (Hz) of channel 1 is $f_1$, and a center frequency (Hz) of channel 2 is $f_2$. Note that the communication apparatus $30_2$ need not apply for use of a specific frequency channel, and may apply for acquisition of a list of available frequency channels.

Under such conditions, the communication control apparatus 60 performs discerning related to use of a predetermined frequency channel of the communication apparatus 30 in consideration of the Doppler shift. For example, the communication control apparatus 60 discerns availability of channel 2 of the communication apparatus $30_2$. At this time, the communication control apparatus 60 needs to discern whether the following conditions are satisfied.

(First condition) Whether the cumulative interference leakage power given to channel 2 by the communication apparatus $30_1$ is a limit value or less
(Second condition) Whether the cumulative interference leakage power given to channel 1 by the communication apparatus $30_2$ is a limit value or less

Calculation of the cumulative interference leakage power may use, for example, a spectrum mask, etc.

<5-4-1. Discerning related to first condition>

First, the communication control apparatus 60 discerns whether the cumulative interference leakage power from the communication apparatus $30_1$ to channel 2 is the limit value or less.

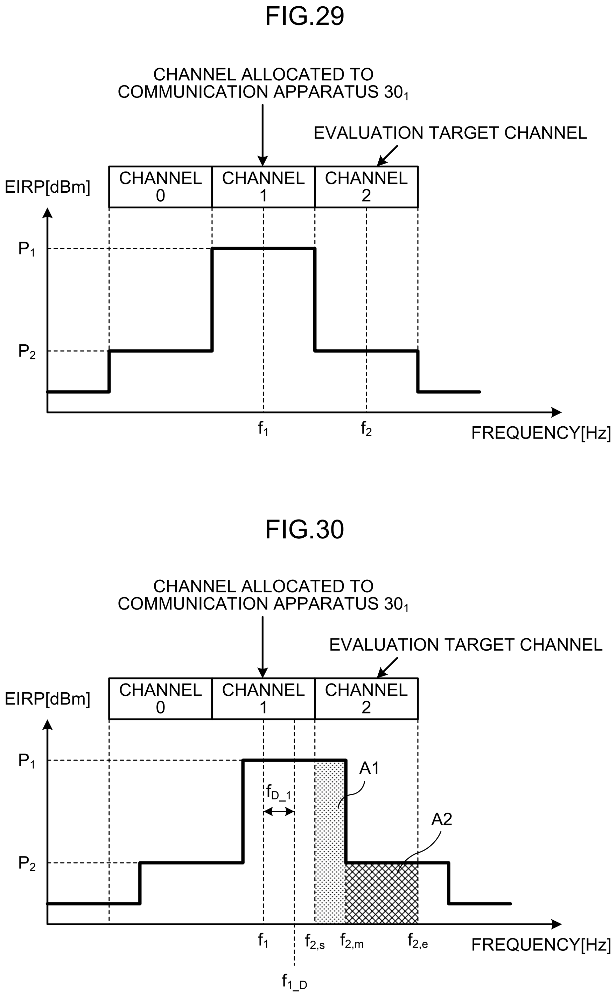

FIG. 29 is a diagram illustrating an example of a spectrum mask. It is assumed that a spectrum mask to be satisfied by the communication apparatus $30_1$ is defined as illustrated in FIG. 29. Here, $P_1$ is an EIRP in channel 1 of the communication apparatus $30_1$. $P_2$ is an EIRP in channel 0 and channel 2, which are adjacent channels of channel 1.

When there is no occurrence of the Doppler shift, the communication control apparatus 60 may calculate the interference leakage power given to channel 2 by the communication apparatus $30_1$ based on the spectrum mask illustrated in FIG. 29, and may determine whether the value is a limit value or less.

On the other hand, when the Doppler shift occurs, the center frequency $f_1$ of the radio waves used by the communication apparatus $30_1$ shifts by $f_{D\_1}$. FIG. 30 is a diagram illustrating a relationship between a frequency after occurrence of the Doppler shift and EIRP. More specifically, FIG. 30 is a diagram illustrating a relationship between the frequency after occurrence of the Doppler shift and the EIRP in the positional relationship illustrated in FIG. 24.

Part A1 in FIG. 30 represents a band in which the power spectral density increases due to the frequency shift caused by the Doppler shift. As compared with the case where there is no Doppler shift, there is a possibility that the interference leakage power from the communication apparatus $30_1$ to channel 2 increases and the value exceeds the limit value. Therefore, in consideration of the increase in the power spectral density by the Doppler shift, the communication control apparatus 60 determines whether the interference leakage power (dBm) in channel 2 becomes the limit value y or less using the following Formula (12)

$$\left[ \int_{f_{2,s}}^{f_{2,m}} G_{2,D}(f) - L_{Path}(p_2(t), p_1(t))_{[dB]} \right]$$
$$+ \left[ \int_{f_{2,m}}^{f_{2,e}} G_2(f) - L_{Path}(p_2(t), p_1(t))_{[dB]} \right] \leq \gamma \qquad \cdots (12)$$

Here, the left side is the cumulative interference leakage power in channel 2. In addition, $p_i(t)$ is three-dimensional position information of the communication apparatus $30_i$ at the time t. $L_{Path}(p_i(t), p_j(t))_{[dB]}$ is a path loss between the communication apparatuses $30_i$-$30_j$. Undoubtedly, the communication control apparatus 60 may take shadowing or multipath fading due to a structure into consideration in addition to the path loss.

In addition, $G_{2,D}(f)$ is a power spectral density (dBm/Hz) in portion A1 of FIG. 30, while $G_2(f)$ is a power spectral density (dBm/Hz) in portion A2 of FIG. 30, each of which can be obtained from the following Formulas (13) and (14), respectively. Note that f represents a frequency (Hz).

$$G_{2,D}(f) = P_1/\Delta f \tag{13}$$

$$G_2(f) = P_2/\Delta f \tag{14}$$

Here, $\Delta f$ is the frequency resolution (Hz). In addition, $f_{2,s}$ and $f_{2,e}$ represent a lower frequency (Hz) and an upper frequency (Hz) of channel 2, respectively, and $f_{2,m}$ is a frequency (Hz) shifted from $f_{2,s}$ by the Doppler shift. In the above Formula (12), the cumulative interference leakage power is calculated from the power spectral density, but as a matter of course, other calculation methods may be adopted.

<5-4-2. Discerning related to second condition>

Next, the communication control apparatus 60 discerns whether the cumulative interference leakage power from the communication apparatus $30_2$ to channel 1 is the limit value or less.

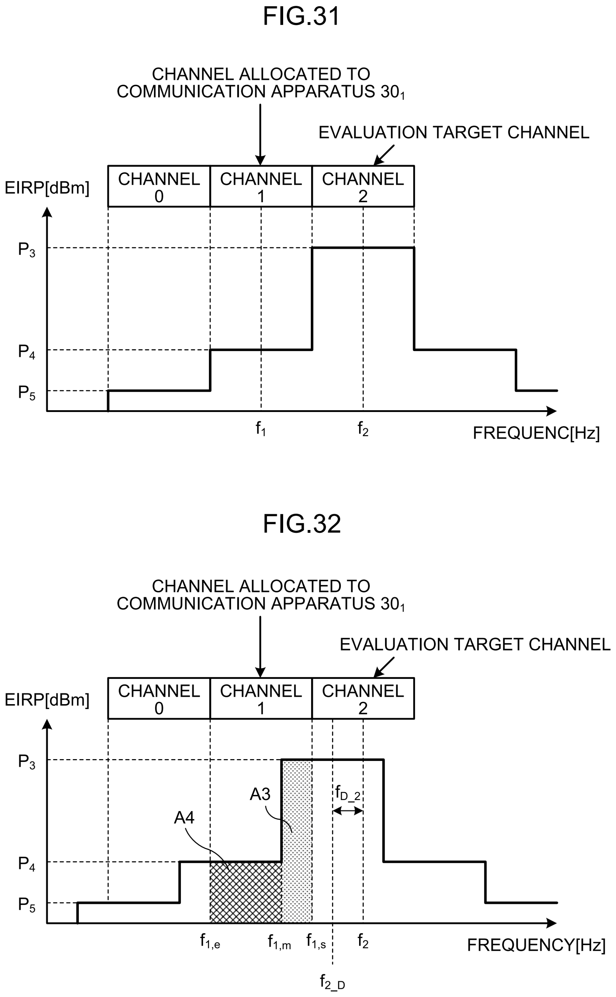

FIG. 31 is a diagram illustrating an example of a spectrum mask. It is assumed that a spectrum mask to be satisfied by the communication apparatus $30_2$ is defined as follows. Here, P3 is the EIRP in channel 2 of the communication apparatus $30_2$. P4 is the EIRP in channel 0. P5 is the EIRP in channel 0.

When there is no occurrence of the Doppler shift, the communication control apparatus 60 may calculate the interference leakage power given to channel 1 by the communication apparatus $30_2$ based on the spectrum mask illustrated in FIG. 31, and may determine whether the value is a limit value or less.

On the other hand, when the Doppler shift occurs, the center frequency $f_2$ of the radio waves used by the communication apparatus $30_2$ shifts by $f_{D\_2}$. Here, in the case of FIG. 31, when the center frequency $f_2$ is shifted downward, the interference leakage power in channel 1 increases as compared with a case where the Doppler shift does not occur. FIG. 32 is a diagram illustrating a relationship between a frequency after occurrence of the Doppler shift and EIRP. The communication control apparatus 60 calculates the interference leakage power in channel 1 assuming the case illustrated in FIG. 32 from the viewpoint of interference avoidance.

Part A3 in FIG. 32 represents a band in which the power spectral density increases due to the frequency shift caused by the Doppler shift. In consideration of the increase in the power spectral density by the Doppler shift, the communication control apparatus 60 determines whether the interference leakage power (dBm) in channel 2 becomes the limit value y or less using the following Formula (13)

$$\left[ \int_{f_{1,s}}^{f_{1,m}} G_{1,D}(f) - L_{Path}(p_2(t), p_1(t))_{[dB]} \right]$$
$$+ \left[ \int_{f_{1,m}}^{f_{1,e}} G_1(f) - L_{Path}(p_2(t), p_1(t))_{[dB]} \right] \leq \gamma \quad \cdots (15)$$

Here, the left side is the cumulative interference leakage power in channel 1. In addition, $p_i(t)$ is three-dimensional position information of the communication apparatus $30_i$ at the time t. $L_{Path}(p_i(t), p_j(t))_{[dB]}$ is a path loss between the communication apparatuses $30_i$-$30_j$. Undoubtedly, the communication control apparatus 60 may take shadowing or multipath fading due to a structure into consideration in addition to the path loss.

In addition, $G_{1,D}(f)$ is a power spectral density (dBm/Hz) in portion A3 of FIG. 32, while $G_1(f)$ is a power spectral density (dBm/Hz) in portion A4 of FIG. 32, each of which can be obtained from the following Formulas (16) and (17), respectively. Note that f represents a frequency (Hz).

$$G_{1,D}(f) = P_3/\Delta f \tag{16}$$

$$G_1(f) = P_4/\Delta f \tag{17}$$

Here, $\Delta f$ is the frequency resolution (Hz). In addition, $f_{1,s}$ and $f_{1,e}$ are a lower frequency (Hz) and an upper frequency (Hz) of channel 1, respectively. $f_{1,m}$ is a frequency (Hz) shifted from $f_{1,s}$ by the Doppler shift. In the above Formula (15), the cumulative interference leakage power is calculated from the power spectral density, but as a matter of course, other calculation methods may be adopted.

<5-4-3. Others>

The communication control apparatus 60 calculates Formulas (12) and (15) on the route of each communication apparatus 30 during each time period of $t_{start\_2}+\tau$, $t_{start\_2}+2\tau$, ..., $t_{end\_2}$. In a case where both inequalities are satisfied during each time period, the communication control apparatus 60 gives a grant for channel 2 to the communication apparatus $30_2$.

On the other hand, when at least one of Formula (12) and Formula (15) is not satisfied at a certain time $t_{start\_2}+\tau$, the communication control apparatus 60 may recalculate the cumulative interference leakage power in another frequency channel. In addition, the communication control apparatus 60 may change parameters related to the interference leakage power and the Doppler shift, such as the EIRP and the flight speed, and calculate the cumulative interference leakage power in channel 2 again.

Note that the communication control apparatus 60 may discern that the communication apparatus $30_2$ can use channel 2 in a case where Formulas (12) and (15) are satisfied in all the time periods (for example, $t_{start\_2}+\tau$, $t_{start\_2}+2\tau$, ..., $t_{end\_2}$) related to the use application. In addition, in a case where there is a time during which Formulas (12) and (15) are not satisfied in a part of the time period related to the use application, the communication control apparatus 60 may discern that the communication apparatus $30_2$ can use channel 2 only in a time period during which Formulas (12) and (15) are satisfied out of the time period related to the use application.

In a case where the information processing apparatus 50 (or the communication apparatus $30_2$) requests transmission of a list of available frequency channels, the communication control apparatus 60 may calculate the cumulative interference leakage power of not only the adjacent channel but also a plurality of other channels in consideration of the Doppler shift. At this time, the communication control apparatus 60 may calculate the maximum EIRP, the maximum moving speed, and the like at which the cumulative interference leakage power in each channel becomes the limit value y or less. Subsequently, the communication control apparatus 60 may provide the calculated information to the information processing apparatus 50 (or the communication apparatus $30_2$). The information processing apparatus 50 (or the communication apparatus $30_2$) may set the operation parameters such as the maximum EIRP and the maximum moving speed in the communication apparatus $30_2$ and may use the channel.

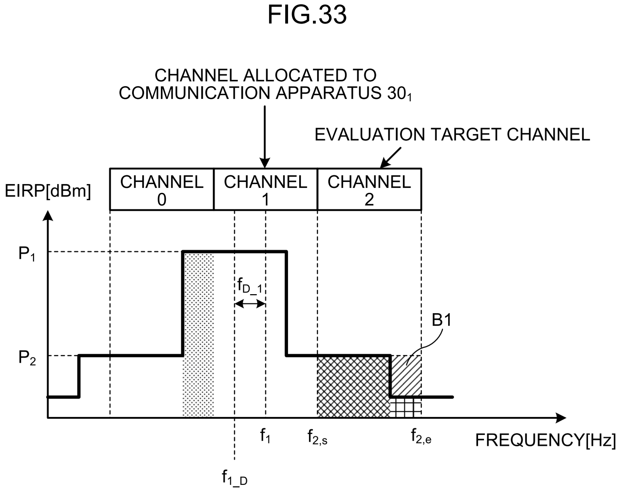

While FIG. 30 assumes a case where the center frequency $f_1$ is shifted upward, it is also conceivable that the center frequency $f_1$ is shifted downward depending on the positional relationship between the communication apparatuses 30. FIG. 33 is a diagram illustrating a state in which the center frequency is shifted downward.

In this case, as compared with the case where there is no Doppler shift, the interference leakage power from the communication apparatus $30_1$ to channel 2 decreases by an amount corresponding to portion B1 illustrated in FIG. 33. Therefore, under a situation where the Doppler shift does not occur, even when the cumulative interference leakage power in channel 2 exceeds the limit value, there is a possibility of being able to use the channel by considering the Doppler shift.

<5-5. Transmission of information based on discerning result>

Next, the above-described step S4 will be described in detail. As described above, the communication control apparatus 60 transmits information based on the discerning result of step S3 to the information processing apparatus 50 (or one or more communication apparatuses 30).

For example, the communication control apparatus 60 may transmit information based on a discerning result related to use of the second channel by the communication apparatus $30_2$ to the information processing apparatus 50 (or the communication apparatus $30_2$). The information based on the discerning result may include information indicating whether the communication apparatus $30_2$ can use the second channel.

Note that the communication control apparatus 60 may transmit information indicating that the communication apparatus $30_2$ can use channel 2 in a case where Formulas (12) and (15) are satisfied in all the time periods (for example, $t_{start2}+\tau$, $t_{start\_2}+2\tau$, ..., $t_{end\_2}$) related to the use application. In addition, in a case where there is a time during which Formulas (12) and (15) are not satisfied in a part of the time period related to the use application, the communication control apparatus 60 may transmit information indicating that the communication apparatus $30_2$ can use channel 2 only in a time period during which Formulas (12) and (15) are satisfied.

The information based on the discerning result may include not only information regarding availability of a predetermined channel but also information regarding an operation parameter used by the communication apparatus 30. For example, the information based on the discerning result may include an operation parameter (for example, information related to transmission power) used when the communication apparatus $30_2$ uses channel 2. The information processing apparatus 50 (or the communication apparatus $30_2$) may set this operation parameter in the communication apparatus $30_2$.

As described above, in a case where the information processing apparatus 50 (or the communication apparatus $30_2$) requests transmission of a list of available frequency channels, the communication control apparatus 60 may calculate the cumulative interference leakage power of not only the adjacent channel but also a plurality of other channels in consideration of the Doppler shift. At this time, the communication control apparatus 60 may calculate the maximum EIRP, the maximum moving speed, and the like at which the cumulative interference leakage power in each channel becomes the limit value y or less. Subsequently, the communication control apparatus 60 may transmit the calculated information to the information processing apparatus 50 (or the communication apparatus $30_2$). The information processing apparatus 50 (or the communication apparatus $30_2$) may set the operation parameters such as the maximum EIRP and the maximum moving speed in the communication apparatus $30_2$.

<<6. Modification>>

The above-described embodiment is an example, and various modifications and applications are possible.

<6-1. Modification regarding communication system>

As general naming in spectrum sharing, an incumbent system using a target band is referred to as a primary system, and a secondary user is referred to as a secondary system. However, the primary system and the secondary system may be each replaced with different terms. A macro cell in a Heterogeneous Network (HetNET) may be defined as the primary system, and a small cell or a relay station may be defined as the secondary system. In addition, a base station may be defined as the primary system, and Relay User Equipment (Relay UE) or Vehicle User Equipment (Vehicle UE) that implements D2D or vehicle-to-everything (V2X) existing in the coverage may be defined as the secondary system. The base station 40 is not limited to a stationary type, and may be a portable/mobile type. In addition, the communication apparatus 30 is not limited to a mobile/portable type, and may be a stationary type.

Furthermore, the interface between the entities may be either wired or wireless. For example, the interface between the entities (the communication apparatus 30, the base station 40, the information processing apparatus 50 or the communication control apparatus 60) described in the present embodiment may be a wireless interface that does not depend on spectrum sharing. Examples of the wireless interface that does not depend on spectrum sharing include a wireless communication line provided by a mobile communication carrier (network operator) via a licensed band, and wireless LAN communication using an incumbent license-exempt band.

<6-2. Modification related to communication control apparatus>

The communication control apparatus 60 of the present embodiment is not limited to the apparatus described in the above-described embodiment. For example, the communication control apparatus 60 may be an apparatus having a function other than controlling the communication apparatus 30/base station 40 that uses a frequency band in which spectrum sharing is performed. For example, the function of the communication control apparatus 60 of the present embodiment may be provided in a network manager. At this time, the network manager may be, for example, a Centralized Base Band Unit (C-BBU) having a network configuration referred to as a Centralized Radio Access Network (C-RAN) or an apparatus including the C-BBU. In addition, the function of the network manager may be provided in a base station (including an access point). These apparatuses (such as a network manager) can also be regarded as communication control apparatuses.

In addition, in the above-described embodiment, the communication control apparatus 60 is an apparatus belonging to the communication system 2, but does not necessarily have to be an apparatus belonging to the communication system 2. The communication control apparatus 60 may be an apparatus outside the communication system 2. The communication control apparatus 60 may indirectly control the communication apparatus 30, the base station 40, or the information processing apparatus 50 via an apparatus constituting the communication system 2 without directly controlling the communication apparatus 30, the base station 40, or the information processing apparatus 50. In addition, there may be a plurality of secondary systems (communication systems 2). At this time, the communication control apparatus 60 may manage the plurality of secondary systems. In this case, each of the secondary systems can be regarded as the second wireless system.

<6-3. Modification related to communication apparatus>

In the above-described embodiment (<5-3. Calculation related to Doppler shift> described above), the communication control apparatus 60 calculates the Doppler shift between the communication apparatus $30_1$ and the communication apparatus $30_2$. However, the communication control apparatus 60 may calculate the Doppler shift between two or more communication apparatuses 30. Additionally the communication control apparatus 60 may perform discerning related to use of frequencies of two or more communication apparatuses 30.

In addition, in the above-described embodiment (<5-3. Calculation related to Doppler shift> described above), the communication control apparatus 60 calculates the Doppler shift assuming that the communication apparatus 30 is a mobile/portable communication apparatus. However, the calculation of the Doppler shift is also applicable to a case where the communication apparatus 30 is a stationary type. In this case, the speed of the stationary communication apparatus 30 is to be set to 0 in the calculation formula of the Doppler shift illustrated in <5-3> described above.

In addition, while the above-described embodiment assumes all of the plurality of communication apparatuses related to the calculation of the Doppler shift (the plurality of communication apparatuses related to the discerning of the use of the radio wave) are the communication apparatus 30/the base station 40, the plurality of communication apparatuses are not limited to the communication apparatus 30/the base station 40. For example, part or all of the plurality of communication apparatuses may be the communication apparatus 10 of the communication system 1. In addition, the plurality of communication apparatuses may be communication apparatuses of mutually different communication systems. For example, a part of the plurality of communication apparatuses may be the communication apparatus 10 of the communication system 1, and the other communication apparatuses may be the communication apparatuses 30 (or the base stations 40) of the communication system 2. In addition, a part of the plurality of communication apparatuses may be the communication apparatus 30 (or the base station 40) of the communication system 2A, and the other communication apparatuses may be the communication apparatuses 30 (or the base stations 40) of the communication system 2B.

In addition, the plurality of apparatuses related to the calculation of the Doppler shift (the plurality of apparatuses related to the discerning of the use of the radio wave) is not limited to the communication apparatus. The apparatus may be an apparatus/system that uses radio waves for purposes other than communication, such as a radar system or a broadcasting system. In this case, the description of the communication apparatus appearing in the above-described embodiment can be replaced with a radio wave utilization apparatus.

<6-4. Modification related to frequency channel>

In the above-described embodiment, the communication control apparatus 60 performs discerning regarding use of the frequency band (frequency channel) regarding dynamic spectrum sharing. However, the frequency channel (for example, a frequency channel to be allocated to the communication apparatus 30) to be discerned by the communication control apparatus 60 is not limited to the frequency channel regarding dynamic spectrum sharing. For example, the frequency channel to be discerned by the communication control apparatus 60 may be a radio wave in a licensed band/unlicensed band that is not targeted for dynamic spectrum sharing. In addition, the frequency channel to be discerned by the communication control apparatus 60 may be a radio wave used as the primary use, instead of the radio wave used as the secondary use, by the communication apparatus 30 or the base station 40.

In addition, in the above-described embodiment, the first channel and the second channel to be the calculation target of the Doppler shift by the communication control apparatus 60 are adjacent channels, but the first channel and the second channel need not necessarily be adjacent channels.

<6-5. Other modifications>

The control apparatus that controls the communication apparatus 10, the management apparatus 20, the communication apparatus 30, the base station 40, the information processing apparatus 50, or the communication control apparatus 60 of the present embodiment may be implemented by a dedicated computer system or a general-purpose computer system.

For example, a program for executing the above-described operations is stored in a computer-readable recording medium such as an optical disk, semiconductor memory, a magnetic tape, or a flexible disk and distributed. For example, the program is installed on a computer and the above processing is executed to achieve the configuration of the control apparatus. At this time, the control apparatus may be provided as an apparatus (such as a personal computer) outside the communication apparatus 10, the management apparatus 20, the communication apparatus 30, the base station 40, the information processing apparatus 50, or the communication control apparatus 60. In addition, the control apparatus may be an apparatus (for example, the control unit 13, the control unit 23, the control unit 33, the control unit 43, the control unit 53, or the control unit 63) inside the communication apparatus 10, the management apparatus 20, the communication apparatus 30, the base station 40, the information processing apparatus 50, or the communication control apparatus 60.

In addition, the communication program can be stored in a disk apparatus included in a server apparatus on a network such as the Internet so as to be able to be downloaded to a computer, for example. In addition, the functions described above may be implemented by using operating system (OS) and application software in cooperation. In this case, the portions other than the OS may be stored in a medium for distribution, or the portions other than the OS may be stored in a server apparatus so as to be downloaded to a computer, for example.

In addition, among individual processing described in the above embodiments, all or a part of the processing described as being performed automatically may be manually performed, or the processing described as being performed manually can be performed automatically by known methods. In addition, the processing procedures, specific names, and information including various data and parameters illustrated in the above Literatures or drawings can be flexibly altered unless otherwise specified. For example, various types of information illustrated in each of the drawings are not limited to the information illustrated.

In addition, each constituent of each apparatus is provided as a functional concept and thus does not necessarily need to be physically constituted as illustrated. That is, the specific mode of distribution/integration of each of the apparatuses is not limited to those illustrated in the drawings, and all or a part thereof may be functionally or physically distributed or integrated into arbitrarily chosen units in accordance with various loads and use status.

In addition, the above-described embodiments can be appropriately combined within a range implementable without contradiction of processes. For example, a first response message and a second response message may be transmitted as separate messages. In addition, the order of individual steps illustrated in the sequence diagram or the flowchart of the present embodiment can be changed as appropriate.

In addition, for example, the present embodiment can be implemented as any configuration constituting an apparatus or a system, for example, a processor as a large scale integration (LSI) or the like, a module using a plurality of processors or the like, a unit using a plurality of modules or the like, and a set obtained by further adding other functions to the unit, or the like (that is, a configuration of a part of the apparatus).

In the present embodiment, a system represents a set of a plurality of components (apparatuses, modules (parts), or the like), and whether all the components are in the same housing would not be a big issue. For example, a plurality of apparatuses housed in separate housings and connected via a network or the like, and one apparatus in which a plurality of modules is housed in one housing, are both systems.

In addition, for example, the present embodiment can adopt a composition of cloud computing in which one function is cooperatively shared and processed by a plurality of apparatuses via a network.

<<7. Conclusion>>

As described above, according to the present embodiment, the communication control apparatus 60 performs discerning related to the use of the frequency in consideration of the Doppler shift (for example, discerning related to frequency channel allocation). This makes it possible to suppress the interference due to the Doppler shift even in an environment where the communication apparatus 30 moves at a high speed. As a result, more precise spectrum sharing can be achieved, leading to achievement of effective use of radio resources.

The embodiments of the present disclosure have been described above. However, the technical scope of the present disclosure is not limited to the above-described embodiments, and various modifications can be made without departing from the scope of the present disclosure. Moreover, it is allowable to combine the components across different embodiments and modifications as appropriate.

The effects described in individual embodiments of the present specification are merely examples, and thus, there may be other effects, not limited to the exemplified effects.

Note that the present technology can also have the following configurations.

(1) A communication control apparatus comprising:

an acquisition unit that acquires information related to movement of a movable communication apparatus;
a calculation unit that performs calculation related to a Doppler shift of a radio wave of at least one of a plurality of communication apparatuses including the movable communication apparatus, based on the information related to movement; and
a discerning unit that performs, based on a result of the calculation, discerning related to use of radio waves of one or more communication apparatuses among the plurality of communication apparatuses.

(2) The communication control apparatus according to (1),
wherein the discerning unit performs, as the discerning regarding use of radio waves, discerning related to use of a frequency band regarding dynamic spectrum sharing of the one or more communication apparatuses.
(3) The communication control apparatus according to (1) or (2), further comprising a transmission unit that transmits information based on a result of the discerning to the one or more communication apparatuses or to an information processing apparatus that manages or controls the one or more communication apparatuses.
(4) The communication control apparatus according to (3),
wherein the transmission unit transmits, as the information based on the result of the discerning, information related to use of a predetermined frequency band by the one or more communication apparatuses.

(5) The communication control apparatus according to (4),
wherein the information related to use of the predetermined frequency band includes information as to whether the one or more communication apparatuses can use the predetermined frequency band.

(6) The communication control apparatus according to (4) or (5),
wherein the information related to use of the predetermined frequency band includes information related to a transmission power when the one or more communication apparatuses use the predetermined frequency band.

(7) The communication control apparatus according to any one of (3) to (6),

wherein the plurality of communication apparatuses include a first communication apparatus and a second communication apparatus,
at least one of the first communication apparatus and the second communication apparatus is movable,
the acquisition unit acquires information related to movement of at least one of the first communication apparatus and the second communication apparatus,
the calculation unit performs a first calculation related to a Doppler shift in a case where the first communication apparatus uses a first frequency band and performs a second calculation related to a Doppler shift in a case where the second communication apparatus uses a second frequency band adjacent to the first frequency band, and
the discerning unit performs discerning including:

discerning as to whether interference leakage power given to the second frequency band by the first communication apparatus is a predetermined limit value or less when the first communication apparatus uses the first frequency band, the discerning being performed based on a result of the first calculation;
discerning as to whether interference leakage power given to the first frequency band by the second communication apparatus is a predetermined limit value or less when the second communication apparatus uses the second frequency band, the discerning being performed based on a result of the second calculation; and
discerning related to use of the second frequency band by the second communication apparatus, the discerning performed based on a result of the discerning as to whether the interference leakage power given to the second frequency band by the first communication apparatus is a predetermined limit value or less and a result of the discerning as to whether the interference leakage power given to the first frequency band by the second communication apparatus is a predetermined limit value or less.

(8) The communication control apparatus according to (7),
wherein both the first communication apparatus and the second communication apparatus are movable.

(9) The communication control apparatus according to any one of (3) to (6),

wherein the plurality of communication apparatuses include a first communication apparatus that is not movable or is not moving, and a second communication apparatus that is movable,
the acquisition unit acquires information related to movement of the second communication apparatus,
the calculation unit performs calculation related to a Doppler shift in a case where the second communication apparatus uses a second frequency band, and
the discerning unit performs discerning including:

discerning as to whether interference leakage power given to a first frequency band adjacent to the second frequency band by the second communication apparatus is a predetermined limit value or less when the second communication apparatus uses the second frequency band, the discerning being performed based on a result of the calculation; and
discerning related to use of the second frequency band by the second communication apparatus, the discerning performed based on a result of the discerning as to whether interference leakage power given to the first frequency band by the second communication apparatus is a predetermined limit value or less.

(10) The communication control apparatus according to any one of (3) to (6),

wherein the plurality of communication apparatuses include a first communication apparatus that is movable, and a second communication apparatus that is not movable or is not moving,
the acquisition unit acquires information related to movement of the first communication apparatus,
the calculation unit performs calculation related to a Doppler shift in a case where the first communication apparatus uses a first frequency band, and

the discerning unit performs discerning including:

discerning as to whether interference leakage power given to a second frequency band adjacent to the first frequency band by the first communication apparatus is a predetermined limit value or less when the first communication apparatus uses the first frequency band, the discerning performed based on a result of the calculation, and

discerning related to use of the second frequency band by the second communication apparatus, the discerning performed based on a result of the discerning as to whether interference leakage power given to the second frequency band by the first communication apparatus is a predetermined limit value or less.

(11) The communication control apparatus according to any one of (7) to (10),
wherein the transmission unit transmits information based on a result of the discerning related to the use of the second frequency band by the second communication apparatus to the second communication apparatus or to the information processing apparatus that manages or controls the second communication apparatus.

(12) The communication control apparatus according to any one of (1) to (11),
wherein the movable communication apparatus is either a mobile body having a communication function, or a communication apparatus mounted on a mobile body.

(13) The communication control apparatus according to (12),
wherein the movable communication apparatus is either a flight vehicle having a communication function, or a communication apparatus mounted on a flight vehicle.

(14) The communication control apparatus according to (12),
wherein the movable communication apparatus is either an automobile having a communication function, or a communication apparatus mounted on an automobile.

(15) An information processing apparatus comprising

a transmission unit,
the transmission unit being configured to transmit, to a communication control apparatus, information related to movement of a movable communication apparatus, the communication control apparatus being configured to perform calculation related to a Doppler shift of a radio wave of at least one of a plurality of communication apparatuses including the movable communication apparatus, the calculation being performed based on information related to the movement of the movable communication apparatus, the communication control apparatus being configured to perform discerning related to use of radio waves of one or more communication apparatuses among the plurality of communication apparatuses, the discerning being performed based on a result of the calculation.

(16) An information processing apparatus comprising:

a reception unit; and
a setting unit,
the reception unit being configured to receive, from a communication control apparatus, information based on a result of discerning, the discerning being related to use of radio waves of one or more communication apparatuses among a plurality of communication apparatuses including a movable communication apparatus, the discerning being performed by the communication control apparatus based on a result of a calculation related to a Doppler shift of a radio wave of at least one of the plurality of communication apparatuses, the calculation being performed by the communication control apparatus based on information related to movement of the movable communication apparatus,
the setting unit being configured to perform processing related to communication settings of the one or more communication apparatuses based on the information based on the result of the discerning.

(17) The information processing apparatus according to (16),
wherein the information processing apparatus is either the movable communication apparatus among the one or more communication apparatuses, or an apparatus configured to control or manage the one or more communication apparatuses.

(18) A communication control method comprising:

acquiring information related to movement of a movable communication apparatus;
performing a calculation related to a Doppler shift of a radio wave of at least one of a plurality of communication apparatuses including the movable communication apparatus, based on the information related to movement;

and

performing discerning related to use of radio waves of a first communication apparatus among the plurality of communication apparatuses, based on a result of the calculation.

(19) An information processing method comprising

transmitting, to a communication control apparatus, information related to movement of a movable communication apparatus, the communication control apparatus being configured to perform calculation related to a Doppler shift of a radio wave of at least one of a plurality of communication apparatuses including the movable communication apparatus, the calculation being performed based on information related to the movement of the movable communication apparatus, the communication control apparatus being configured to perform discerning related to use of radio waves of one or more communication apparatuses among the plurality of communication apparatuses, the discerning being performed based on a result of the calculation.

(20) An information processing method comprising:

receiving, from a communication control apparatus, information based on a result of discerning, the discerning being related to use of radio waves of one or more communication apparatuses among a plurality of communication apparatuses including a movable communication apparatus, the discerning being performed by the communication control apparatus based on a result of a calculation related to a Doppler shift of a radio wave of at least one of the plurality of communication apparatuses, the calculation being performed by the communication control apparatus based on information related to movement of the movable communication apparatus, and

performing processing related to communication settings of the one or more communication apparatuses based on the information based on the result of the discerning.

Reference Signs List

1, 2, 1000 COMMUNICATION SYSTEM
10, 30 COMMUNICATION APPARATUS
20 MANAGEMENT APPARATUS
40 BASE STATION
50 INFORMATION PROCESSING APPARATUS
60 COMMUNICATION CONTROL APPARATUS
11 PROCESSING UNIT
12, 22, 32, 42, 52, 62 STORAGE UNIT
13, 23, 33, 43, 53, 63 CONTROL UNIT
21, 51, 61 COMMUNICATION UNIT
31, 41 WIRELESS COMMUNICATION UNIT
311, 411 TRANSMISSION PROCESSING UNIT
312, 412 RECEPTION PROCESSING UNIT
313, 413 ANTENNA
331, 531 TRANSMISSION UNIT
332, 532 RECEPTION UNIT
333, 533 SETTING UNIT
631 ACQUISITION UNIT
632 CALCULATION UNIT
633 DISCERNING UNIT
634 TRANSMISSION UNIT

Claims

1.  A communication control apparatus comprising:

an acquisition unit that acquires information related to movement of a movable communication apparatus;
a calculation unit that performs calculation related to a Doppler shift of a radio wave of at least one of a plurality of communication apparatuses including the movable communication apparatus, based on the information related to movement; and

a discerning unit that performs, based on a result of the calculation, discerning related to use of radio waves of one or more communication apparatuses among the plurality of communication apparatuses.

2. The communication control apparatus according to claim 1,
wherein the discerning unit performs, as the discerning regarding use of radio waves, discerning related to use of a frequency band regarding dynamic spectrum sharing of the one or more communication apparatuses.

3. The communication control apparatus according to claim 1, further comprising a transmission unit that transmits information based on a result of the discerning to the one or more communication apparatuses or to an information processing apparatus that manages or controls the one or more communication apparatuses.

4. The communication control apparatus according to claim 3,
wherein the transmission unit transmits, as the information based on the result of the discerning, information related to use of a predetermined frequency band by the one or more communication apparatuses.

5. The communication control apparatus according to claim 4,
wherein the information related to use of the predetermined frequency band includes information as to whether the one or more communication apparatuses can use the predetermined frequency band.

6. The communication control apparatus according to claim 4,
wherein the information related to use of the predetermined frequency band includes information related to a transmission power when the one or more communication apparatuses use the predetermined frequency band.

7. The communication control apparatus according to claim 3,

wherein the plurality of communication apparatuses include a first communication apparatus and a second communication apparatus,
at least one of the first communication apparatus and the second communication apparatus is movable,
the acquisition unit acquires information related to movement of at least one of the first communication apparatus and the second communication apparatus,
the calculation unit performs a first calculation related to a Doppler shift in a case where the first communication apparatus uses a first frequency band and performs a second calculation related to a Doppler shift in a case where the second communication apparatus uses a second frequency band adjacent to the first frequency band, and
the discerning unit performs discerning including:

discerning as to whether interference leakage power given to the second frequency band by the first communication apparatus is a predetermined limit value or less when the first communication apparatus uses the first frequency band, the discerning being performed based on a result of the first calculation;
discerning as to whether interference leakage power given to the first frequency band by the second communication apparatus is a predetermined limit value or less when the second communication apparatus uses the second frequency band, the discerning being performed based on a result of the second calculation; and
discerning related to use of the second frequency band by the second communication apparatus, the discerning performed based on a result of the discerning as to whether the interference leakage power given to the second frequency band by the first communication apparatus is a predetermined limit value or less and a result of the discerning as to whether the interference leakage power given to the first frequency band by the second communication apparatus is a predetermined limit value or less.

8. The communication control apparatus according to claim 7,
wherein both the first communication apparatus and the second communication apparatus are movable.

9. The communication control apparatus according to claim 3,

wherein the plurality of communication apparatuses include a first communication apparatus that is not movable or is not moving, and a second communication apparatus that is movable,
the acquisition unit acquires information related to movement of the second communication apparatus,
the calculation unit performs calculation related to a Doppler shift in a case where the second communication apparatus uses a second frequency band, and

the discerning unit performs discerning including:

discerning as to whether interference leakage power given to a first frequency band adjacent to the second frequency band by the second communication apparatus is a predetermined limit value or less when the second communication apparatus uses the second frequency band, the discerning being performed based on a result of the calculation; and

discerning related to use of the second frequency band by the second communication apparatus, the discerning performed based on a result of the discerning as to whether interference leakage power given to the first frequency band by the second communication apparatus is a predetermined limit value or less.

10. The communication control apparatus according to claim 3,

wherein the plurality of communication apparatuses include a first communication apparatus that is movable, and a second communication apparatus that is not movable or is not moving,

the acquisition unit acquires information related to movement of the first communication apparatus,

the calculation unit performs calculation related to a Doppler shift in a case where the first communication apparatus uses a first frequency band, and

the discerning unit performs discerning including:

discerning as to whether interference leakage power given to a second frequency band adjacent to the first frequency band by the first communication apparatus is a predetermined limit value or less when the first communication apparatus uses the first frequency band, the discerning performed based on a result of the calculation, and

discerning related to use of the second frequency band by the second communication apparatus, the discerning performed based on a result of the discerning as to whether interference leakage power given to the second frequency band by the first communication apparatus is a predetermined limit value or less.

11. The communication control apparatus according to claim 7, wherein the transmission unit transmits information based on a result of the discerning related to the use of the second frequency band by the second communication apparatus to the second communication apparatus or to the information processing apparatus that manages or controls the second communication apparatus.

12. The communication control apparatus according to claim 1, wherein the movable communication apparatus is either a mobile body having a communication function, or a communication apparatus mounted on a mobile body.

13. The communication control apparatus according to claim 12, wherein the movable communication apparatus is either a flight vehicle having a communication function, or a communication apparatus mounted on a flight vehicle.

14. The communication control apparatus according to claim 12, wherein the movable communication apparatus is either an automobile having a communication function, or a communication apparatus mounted on an automobile.

15. An information processing apparatus comprising

a transmission unit,

the transmission unit being configured to transmit, to a communication control apparatus, information related to movement of a movable communication apparatus, the communication control apparatus being configured to perform calculation related to a Doppler shift of a radio wave of at least one of a plurality of communication apparatuses including the movable communication apparatus, the calculation being performed based on information related to the movement of the movable communication apparatus, the communication control apparatus being configured to perform discerning related to use of radio waves of one or more communication apparatuses among the plurality of communication apparatuses, the discerning being performed based on a result of the calculation.

16. An information processing apparatus comprising:

a reception unit; and
a setting unit,
the reception unit being configured to receive, from a communication control apparatus, information based on a result of discerning, the discerning being related to use of radio waves of one or more communication apparatuses among a plurality of communication apparatuses including a movable communication apparatus, the discerning being performed by the communication control apparatus based on a result of a calculation related to a Doppler shift of a radio wave of at least one of the plurality of communication apparatuses, the calculation being performed by the communication control apparatus based on information related to movement of the movable communication apparatus,
the setting unit being configured to perform processing related to communication settings of the one or more communication apparatuses based on the information based on the result of the discerning.

17. The information processing apparatus according to claim 16,
wherein the information processing apparatus is either the movable communication apparatus among the one or more communication apparatuses, or an apparatus configured to control or manage the one or more communication apparatuses.

18. A communication control method comprising:

acquiring information related to movement of a movable communication apparatus;
performing a calculation related to a Doppler shift of a radio wave of at least one of a plurality of communication apparatuses including the movable communication apparatus, based on the information related to movement; and
performing discerning related to use of radio waves of a first communication apparatus among the plurality of communication apparatuses, based on a result of the calculation.

19. An information processing method comprising
transmitting, to a communication control apparatus, information related to movement of a movable communication apparatus, the communication control apparatus being configured to perform calculation related to a Doppler shift of a radio wave of at least one of a plurality of communication apparatuses including the movable communication apparatus, the calculation being performed based on information related to the movement of the movable communication apparatus, the communication control apparatus being configured to perform discerning related to use of radio waves of one or more communication apparatuses among the plurality of communication apparatuses, the discerning being performed based on a result of the calculation.

20. An information processing method comprising:

receiving, from a communication control apparatus, information based on a result of discerning, the discerning being related to use of radio waves of one or more communication apparatuses among a plurality of communication apparatuses including a movable communication apparatus, the discerning being performed by the communication control apparatus based on a result of a calculation related to a Doppler shift of a radio wave of at least one of the plurality of communication apparatuses, the calculation being performed by the communication control apparatus based on information related to movement of the movable communication apparatus, and
performing processing related to communication settings of the one or more communication apparatuses based on the information based on the result of the discerning.

PRIMARY
SYSTEM

ACCEPTABLE
INTERFERENCE AMOUNT $I_{accept}$
RECEIVING
INTERFERENCE AMOUNT
$I_1+I_2+I_3 (\leq I_{accept})$

INTERFERING AMOUNT $I_1 (\leq I_{accept}/3)$

INTERFERING AMOUNT $I_2 (\leq I_{accept}/3)$

INTERFERING AMOUNT $I_3 (\leq I_{accept}/3)$

SECONDARY SYSTEM

$10_1$

$30_1$

$30_2$

$30_3$

EP 4 742 727 A1

# FIG.2

# FIG.3

INCUM-
BENT
TIER

PRIORITY ACCESS
TIER

GENERAL AUTHORIZED
ACCESS TIER

# FIG.4

INCUMBENT SYSTEM (TIER 1)

| MILITARY RADAR SYSTEM | INCUMBENT RADIO |

FIXED SATELLITE OPERATIONS
(SPACE-TO-EARTH)

PRIORITY ACCESS LICENSE (TIER 2)

GENERAL AUTHORIZED ACCESS (TIER 3)

3,550MHz      3,600MHz      3,650MHz      3,700MHz

# FIG.5

1000

| COMMUNICATION SYSTEM | ... | COMMUNICATION SYSTEM | ... |

1                                          2

# FIG.6

2

| FREQUENCY MANAGEMENT SYSTEM |

| MOBILE MANAGEMENT APPARATUS | MOBILE MANAGEMENT APPARATUS | ... | MOBILE MANAGEMENT APPARATUS |

| MOBILE COMMUNI-CATION APPARATUS | MOBILE COMMUNI-CATION APPARATUS | ... | MOBILE COMMUNI-CATION APPARATUS | MOBILE COMMUNI-CATION APPARATUS | ... |

FIG.7

EP 4 742 727 A1

# FIG.8

# FIG.9

FIG.10

# FIG.11

COMMUNICATION APPARATUS — 10

PROCESSING UNIT — 11 ↔ CONTROL UNIT — 13 ↔ STORAGE UNIT — 12

# FIG.12

MANAGEMENT APPARATUS — 20

COMMUNICATION UNIT — 21

STORAGE UNIT — 22 ↔ CONTROL UNIT — 23

# FIG.13

30

COMMUNICATION APPARATUS

313

31

WIRELESS COMMUNICATION UNIT

TRANSMISSION PROCESSING UNIT — 311

RECEPTION PROCESSING UNIT — 312

32

STORAGE UNIT

33

CONTROL UNIT

TRANSMISSION UNIT — 331

RECEPTION UNIT — 332

SETTING UNIT — 333

# FIG.14

40

BASE STATION

413

41

WIRELESS COMMUNICATION UNIT

TRANSMISSION PROCESSING UNIT — 411

RECEPTION PROCESSING UNIT — 412

42

STORAGE UNIT

43

CONTROL UNIT

# FIG.15

INFORMATION PROCESSING APPARATUS — 50

COMMUNICATION UNIT — 51

CONTROL UNIT — 53

TRANSMISSION UNIT — 531

RECEPTION UNIT — 532

SETTING UNIT — 533

STORAGE UNIT — 52

INFORMATION RELATED TO MOVEMENT

## FIG.16

COMMUNICATION CONTROL APPARATUS — 60

COMMUNICATION UNIT — 61

STORAGE UNIT — 62

CONTROL UNIT — 63

ACQUISITION UNIT — 631

CALCULATION UNIT — 632

DISCERNING UNIT — 633

TRANSMISSION UNIT — 634

⋮

FIG.17

FIG.18

# FIG.19

# FIG.20

# FIG.21

# FIG.22

INFORMATION PROCESSING APPARATUS

COMMUNICATION CONTROL APPARATUS

INFORMATION RELATED TO MOVEMENT — S1

CALCULATION OF DOPPLER SHIFT — S2

DISCERNING RELATED TO USE OF RADIO WAVES — S3

INFORMATION BASED ON DISCERNING RESULT — S4

COMMUNICATION SETTINGS — S5

## FIG.23

DESIRED MOVING ROUTE OF
COMMUNICATION APPARATUS $30_2$

$P_{start\_2}$

$t_{start\_2}$

$P_{end\_2}$

$t_{end\_2}$

$P_{end\_1}$

$t_{end\_1}$

MOVING ROUTE OF
COMMUNICATION APPARATUS $30_1$

$P_{start\_1}$

$t_{start\_1}$

y

x

## FIG.24

DESIRED MOVING ROUTE OF
COMMUNICATION APPARATUS $30_2$

$P_{start\_2}$

$t_{start\_2}$

$P_{1\_2}$

$t_1$

$P_{end\_2}$

$t_{end\_2}$

$P_{1\_1}$

$t_1$

$P_{end\_1}$

$t_{end\_1}$

MOVING ROUTE OF
COMMUNICATION APPARATUS $30_1$

$P_{start\_1}$

$t_{start\_1}$

POSITIVE
DIRECTION

y

x

## FIG.25

## FIG.26

# FIG.27

DESIRED MOVING ROUTE OF
COMMUNICATION APPARATUS $30_2$

MOVING ROUTE OF
COMMUNICATION APPARATUS $30_1$

POSITIVE
DIRECTION

# FIG.28

DOPPLER SHIFT
$f_{D\_1}$

$f_{1\_D}$

$f_1$

CENTER
FREQUENCY AFTER
DOPPLER SHIFT

CENTER
FREQUENCY

FREQUENCY[Hz]

# FIG.29

CHANNEL ALLOCATED TO
COMMUNICATION APPARATUS 30₁

EVALUATION TARGET CHANNEL

| CHANNEL 0 | CHANNEL 1 | CHANNEL 2 |

EIRP[dBm]

$P_1$

$P_2$

$f_1$

$f_2$

FREQUENCY[Hz]

# FIG.30

CHANNEL ALLOCATED TO
COMMUNICATION APPARATUS 30₁

EVALUATION TARGET CHANNEL

| CHANNEL 0 | CHANNEL 1 | CHANNEL 2 |

EIRP[dBm]

$P_1$

$f_{D\_1}$

A1

A2

$P_2$

$f_1$ $f_{2,s}$ $f_{2,m}$ $f_{2,e}$

FREQUENCY[Hz]

$f_{1\_D}$

# FIG.31

CHANNEL ALLOCATED TO
COMMUNICATION APPARATUS $30_1$

EVALUATION TARGET CHANNEL

# FIG.32

CHANNEL ALLOCATED TO
COMMUNICATION APPARATUS $30_1$

EVALUATION TARGET CHANNEL

# FIG.33

## INTERNATIONAL SEARCH REPORT

| | International application No. |
|---|---|
| | **PCT/JP2024/022506** |

### A. CLASSIFICATION OF SUBJECT MATTER

*H04W 16/14*(2009.01)i; *H04W 72/0453*(2023.01)i; *H04W 84/06*(2009.01)i; *H04W 88/02*(2009.01)i
FI:  H04W16/14; H04W72/0453; H04W88/02 151; H04W84/06

According to International Patent Classification (IPC) or to both national classification and IPC

### B. FIELDS SEARCHED

Minimum documentation searched (classification system followed by classification symbols)

H04W16/14; H04W72/0453; H04W84/06; H04W88/02

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2018-148335 A (NEC CORPORATION) 20 September 2018 (2018-09-20) paragraphs [0020]-[0045], fig. 1-3 | 1, 3-4, 12-20 |
| A | | 2, 5-11 |
| A | JP 2019-503098 A (TELEFONAKTIEBOLAGET LM ERICSSON (PUBL)) 31 January 2019 (2019-01-31) entire text, all drawings | 1-20 |
| A | WO 2021/100601 A1 (SONY GROUP CORPORATION) 27 May 2021 (2021-05-27) entire text, all drawings | 1-20 |
| A | JP 2023-058266 A (SONY GROUP CORPORATION) 25 April 2023 (2023-04-25) entire text, all drawings | 1-20 |

☐ Further documents are listed in the continuation of Box C.   ☑ See patent family annex.

| | | | |
|---|---|---|---|
| \* | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **27 August 2024** | **10 September 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

## INTERNATIONAL SEARCH REPORT
**Information on patent family members**

International application No.

**PCT/JP2024/022506**

| Patent document cited in search report | | | Publication date (day/month/year) | Patent family member(s) | | | Publication date (day/month/year) |
|---|---|---|---|---|---|---|---|
| JP | 2018-148335 | A | 20 September 2018 | (Family: none) | | | |
| JP | 2019-503098 | A | 31 January 2019 | US | 2017/0127332 | A1 | |
| | | | | entire text, all drawings | | | |
| | | | | US | 2018/0332522 | A1 | |
| | | | | WO | 2017/076550 | A1 | |
| | | | | CN | 108476057 | A | |
| WO | 2021/100601 | A1 | 27 May 2021 | US | 2022/0386248 | A1 | |
| | | | | entire text, all drawings | | | |
| | | | | CN | 114731682 | A | |
| JP | 2023-058266 | A | 25 April 2023 | WO | 2023/063181 | A1 | |
| | | | | entire text, all drawings | | | |

Form PCT/ISA/210 (patent family annex) (July 2022)